# EUROPEAN PATENT APPLICATION

(11) **EP 4 501 521 A1**
(43) Date of publication of application: **05.02.2025**
(21) Application number: 22935228.1
(22) Date of filing: 30.03.2022
(51) Int. Cl.: B23K 26/046, B23K 26/064, B23K 26/073, B23K 26/342

(54) **PROCESSING DEVICE**

(71) Applicant: Nikon Corporation, Tokyo 140-8601 (JP)
(72) Inventor: FUNATSU, Takayuki, Tokyo 1408601 (JP); KAWABE, Yoshio, Tokyo 1408601 (JP); SHINOZAKI, Ryo, Tokyo 1408601 (JP)
(74) Representative: Hoffmann Eitle
(86) International application number: PCT/JP2022/015889
(87) International publication number: WO 2023/188082

(57) **Abstract**

A processing apparatus includes: an irradiation optical system configured to irradiate an object with first processing light emitted from a first light source, and second processing light that is emitted from a second light source different from the first light source and whose peak wavelength is different from that of the first processing light; and a material supply member configured to supply a build material to a melt pool formed by the first and second processing lights, the peak wavelength of the second processing light is shorter than the peak wavelength of the first processing light, and a second area irradiated with the second processing light is larger than a first area irradiated with the first processing light.

## Description

### Technical Field

The present invention relates to a technical field of a processing apparatus that is configured to perform an additive manufacturing on an object, for example.

### Background Art

A Patent literature 1 discloses one example of a processing apparatus that is configured to perform an additive manufacturing on an object. One technical problem of this processing apparatus is to properly process the object.

### Citation List

### Patent Literature

Patent Literature 1: US2016/0311059A1

### Summary of Invention

A first aspect provides a processing apparatus including: an irradiation optical system that is configured to irradiate an object with first processing light that is emitted from a first light source, and second processing light that is emitted from a second light source different from the first light source and whose peak wavelength is different from that of the first processing light; and a material supply member that is configured to supply a build material to a melt pool formed by the first and second processing lights, wherein the peak wavelength of the second processing light is shorter than the peak wavelength of the first processing light, and a second area that is irradiated with the second processing light is larger than a first area that is irradiated with the first processing light.

A second aspect provides a processing apparatus that performs an additive manufacturing on an object, wherein the processing apparatus includes: a first optical system that is configured to irradiate the object with first processing light that is emitted from a first light source; a second optical system that is configured to irradiate the object with second processing light that is emitted from a second light source different from the first light source and whose peak wavelength is different from that of the first processing light; and a material supply member that is configured to supply a build material to a melt pool formed by the first and second processing lights, the first optical system includes: a first condensed position change member that is configured to change a condensed position of the first processing light along an irradiation direction of the first processing light; and a first deflection member that is configured to deflect the first processing light so as to change a first irradiation position that is irradiated with the first processing light along a direction intersecting the irradiation direction of the first processing light, the second optical system includes: a second condensed position change member that is configured to change a condensed position of the second processing light along an irradiation direction of the second processing light; and a second deflection member that is configured to deflect the second processing light so as to change a second irradiation position that is irradiated with the second processing light along a direction intersecting the irradiation direction of the second processing light.

A third aspect provides a processing apparatus that performs an additive manufacturing on an object, wherein the processing apparatus includes: a first optical system that is configured to irradiate the object with first processing light that is emitted from a first light source, and that is configured to irradiate the object with second processing light that is emitted from a second light source different from the first light source and whose peak wavelength is different from that of the first processing light; and a material supply member that is configured to supply a build material to a melt pool formed by the first and second processing lights, the first optical system includes: a first condensed position change member that is configured to change a condensed position of the first processing light along an irradiation direction of the first processing light; a second condensed position change member that is configured to change a condensed position of the second processing light along an irradiation direction of the second processing light; and a first deflection member that is configured to deflect the first processing light and the second processing light so as to change a first irradiation position that is irradiated with the first processing light and a second irradiation position that is irradiated with the second processing light along a direction intersecting the irradiation directions of the first processing light and the second processing light.

A fourth aspect provides a processing apparatus that performs an additive manufacturing on an object, wherein the processing apparatus includes: a first optical system that is configured to irradiate the object with first processing light, and that is configured to irradiate the object with second processing light whose peak wavelength is different from that of the first processing light; a second optical system that is configured to irradiate the object with third processing light, and that is configured to irradiate the object with fourth processing light whose peak wavelength is different from that of the third processing light; and a material supply member that is configured to supply a build material to a melt pool formed by the first processing light, the second processing light, the third processing light, and the fourth processing light, the first optical system includes: a first condensed position change member that is configured to change a condensed position of the first processing light along an irradiation direction of the first processing light; a second condensed position change member that is configured to change a condensed position of the second processing light along an irradiation direction of the second processing light; and a first deflection member that is configured to deflect the first processing light and the second processing light so as to change a first irradiation position that is irradiated with the first processing light and a second irradiation position that is irradiated with the second processing light along a direction intersecting the irradiation directions of the first processing light and the second processing light, the second optical system includes: a third condensed position change member that is configured to change a condensed position of the third processing light along an irradiation direction of the third processing light; a fourth condensed position change member that is configured to change a condensed position of the fourth processing light along an irradiation direction of three the fourth processing light; and a second deflection member that is configured to deflect the third processing light and the fourth processing light so as to change a third irradiation position that is irradiated with the third processing light and a fourth irradiation position that is irradiated with the fourth processing light along a direction intersecting the irradiation directions of the third processing light and the fourth processing light.

A fifth aspect provides a processing apparatus that performs an additive manufacturing on an object, wherein the processing apparatus includes: a first optical system that is configured to irradiate the object with first processing light; a second optical system that is configured to irradiate the object with second processing light; and a material supply member that is configured to supply a build material to a melt pool formed by the first and second processing lights, the first optical system includes: a first condensed position change member that is configured to change a condensed position of the first processing light along an irradiation direction of the first processing light; and a first deflection member that is configured to deflect the first processing light so as to change a first irradiation position that is irradiated with the first processing light along a direction intersecting the irradiation direction of the first processing light, the second optical system includes: a second condensed position change member that is configured to change a condensed position of the second processing light along an irradiation direction of the second processing light; and a second deflection member that is configured to deflect the second processing light so as to change a second irradiation position that is irradiated with the second processing light along a direction intersecting the irradiation direction of the second processing light.

A sixth aspect provides a processing apparatus that performs an additive manufacturing on an object, wherein the processing apparatus includes: a first optical system that is configured to irradiate the object with first processing light; a second optical system that is configured to irradiate the object with second processing light; and a material supply member that is configured to supply a build material to a melt pool formed by the first and second processing lights, the first optical system includes: a first deflection member that is configured to deflect the first processing light so as to change a first irradiation position that is irradiated with the first processing light along a direction intersecting the irradiation direction of the first processing light; and a first detector that is configured to detect an intensity of the first processing light, the second optical system includes: a second deflection member that is configured to deflect the second processing light so as to change a second irradiation position that is irradiated with the second processing light along a direction intersecting the irradiation direction of the second processing light; and a second detector that is configured to detect an intensity of the second processing light.

A seventh aspect provides a processing apparatus including: a processing head that includes: a condensing optical system that condenses processing light on an object; and an electrical component that is used to control the processing light; and a support member that is adjacent to the processing head along a direction intersecting an optical axis of the condensing optical system and that support the processing head, a first distance between the electrical component and the support member in the direction intersecting the optical axis is longer than a second distance between the optical axis and the support member in the direction intersecting the optical axis.

An eighth aspect provides a processing apparatus including: an irradiation apparatus that is configured to irradiate an object with first processing light and second processing light whose peak wavelength is different from that of the first processing light; and a material supply member that is configured to supply a build material to a melt pool formed by at least one of the first and second processing lights.

A ninth aspect provides a processing apparatus including: an irradiation apparatus that is configured to irradiate an object with first processing light and second processing light whose peak wavelength is different from that of the first processing light; and a material supply member that is configured to supply a build material to a position that is irradiated with the first processing light and the second processing light by the irradiation apparatus.

A tenth aspect provides a processing apparatus including: an irradiation apparatus that is configured to irradiate an object with first processing light and second processing light whose peak wavelength is different from that of the first processing light; and a material supply member that is configured to supply a build material to an irradiation area that is irradiated with the first processing light by the irradiation apparatus, at least a part of the irradiation area that is irradiated with the first processing light overlaps with an irradiation area that is irradiated with the second processing light.

An operation and another advantage of the present invention will be apparent from an example embodiment described below.

### Brief Description of Drawings

[FIG. 1] FIG. 1 is a cross-sectional view that illustrates an exterior appearance of a processing system in a present example embodiment.
[FIG. 2] FIG. 2 is a cross-sectional view that illustrates a configuration of the processing system in the present example embodiment.
[FIG. 3] FIG. 3 is a block diagram that illustrates a configuration of the processing system in the present example embodiment.
[FIG. 4] FIG. 4 is a cross-sectional view that illustrates a configuration of an irradiation optical system.
[FIG. 5] FIG. 5Ais a plan view that illustrates a movement trajectory of a target irradiation area in a processing unit area, and FIG. 5B is a plan view that illustrates a movement trajectory of the target irradiation area on a build surface.
[FIG. 6] Each of FIG. 6A and FIG. 6B is a plan view that illustrates a movement trajectory of the target irradiation area in the processing unit area, and FIG. 6C is a plan view that illustrates a movement trajectory of the target irradiation area on the build surface.
[FIG. 7] FIG. 7 is a perspective view that illustrates a housing unit in which the irradiation optical system is contained.
[FIG. 8] FIG. 8 is a bottom view that illustrates positional relationship between an X scanning motor and a Y scanning motor.
[FIG. 9] FIG. 9 is a cross-sectional view that illustrates one example of the irradiation optical system that is housed in a head housing so that the irradiation optical system is easily maintained.
[FIG. 10] FIG. 10 is a cross-sectional view that illustrates a refrigerant supply nozzle that supplies refrigerant to at least a part of the irradiation optical system.
[FIG. 11] Each of FIG. 11A to FIG 11E is a cross-sectional view that illustrates an aspect in which a certain area on a workpiece is irradiated with a processing light and a build material are supplied thereto.
[FIG. 12] Each of FIG. 12A to FIG. 12C is a cross-sectional view that illustrates a process for building a 3D structural object.
[FIG. 13] Each of FIG. 13A to FIG. 13C is a cross-sectional view that illustrates two processing lights with which the build surface is irradiated.
[FIG. 14] Each of FIG. 14A and FIG. 14B is a cross-sectional view that illustrates the 3D structural object that is built by using a plurality of types of build materials M.
[FIG. 15] FIG. 15 is a timing chart that illustrates intensities of the two processing lights.
[FIG. 16] FIG. 16 is a timing chart that illustrates the intensities of the two processing lights.
[FIG. 17] FIG. 17 is a timing chart that illustrates the intensities of the two processing lights.
[FIG. 18] FIG. 18 is a timing chart that illustrates the intensities of the two processing lights.
[FIG. 19] FIG. 19A is a plan view that illustrates two beam spots formed on the build surface by the two processing lights, respectively, and FIG. 19B is a plan view that illustrates movement trajectories of the two beam spots (namely, two target irradiation areas) on the build surface.
[FIG. 20] FIG. 20A is a plan view that illustrates two beam spots formed on the build surface by the two processing lights, respectively, and FIG. 20B is a plan view that illustrates movement trajectories of the two beam spots (namely, two target irradiation areas) on the build surface.
[FIG. 21] FIG. 21 is a cross-sectional view that illustrates the processing light in a case where a Galvano-focus-linked control operation for controlling a Galvano mirror based on a controlled amount of a focus control optical system.
[FIG. 22] FIG. 22 is a cross-sectional view that illustrates the processing light in a case where the Galvano-focus-linked control operation for controlling the focus control optical system based on a controlled amount of the Galvano mirror.
[FIG. 23] FIG. 23 is a cross-sectional view that illustrates a configuration of an irradiation optical system of a processing system in a first modified example.
[FIG. 24] FIG. 24 is a cross-sectional view that illustrates a configuration of an irradiation optical system of a processing system in a second modified example.
[FIG. 25] FIG. 25 is a block diagram that illustrates a configuration of a processing system in a third modified example.
[FIG. 26] FIG. 26 is a cross-sectional view that illustrates a configuration of an irradiation optical system of the processing system in the third modified example.
[FIG. 27] FIG. 27 is a cross-sectional view that illustrates a configuration of an irradiation optical system of a processing system in a fourth modified example.
[FIG. 28] FIG. 28 is a cross-sectional view that illustrates a configuration of an irradiation optical system of a processing system in a fifth modified example.
[FIG. 29] FIG. 29 is a cross-sectional view that illustrates the configuration of the irradiation optical system of the processing system in the fifth modified example.
[FIG. 30] FIG. 30 is a cross-sectional view that illustrates a configuration of an irradiation optical system of a processing system in a sixth modified example.

### Description of Example embodiments

Next, with reference to drawings, an example embodiment of a processing apparatus and a processing method will be described. In the below-described description, the example embodiment of the processing apparatus and the processing method will be described by using a processing system SYS that is configured to process a workpiece W that is one example of an object. Especially, in the below-described description, the example embodiment of the processing apparatus and the processing method will be described by using the processing system SYS that is configured to perform an additive manufacturing based on a Laser Metal Deposition (LMD). The additive manufacturing based on the Laser Metal Deposition is an additive manufacturing for building a build object that is integrated with or separatable from the workpiece W by melting a build material M supplied to the workpiece W with processing light EL (namely, an energy beam in a form of light).

Moreover, in the below-described description, a positional relationship of various components included in the processing system SYS will be described by using an XYZ rectangular coordinate system that is defined by an X-axis, a Y-axis and a Z-axis that are orthogonal to one another. Note that each of an X-axis direction and a Y-axis direction is assumed to be a horizontal direction (namely, a predetermined direction in a horizontal plane) and a Z-axis direction is assumed to be a vertical direction (namely, a direction that is orthogonal to the horizontal plane, and substantially a vertical direction) in the below-described description, for convenience of the description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. Moreover, an XY plane may be a horizontal direction.

### (1) Configuration of Processing System SYS

### (1-1) Entire Configuration of Processing System SYS

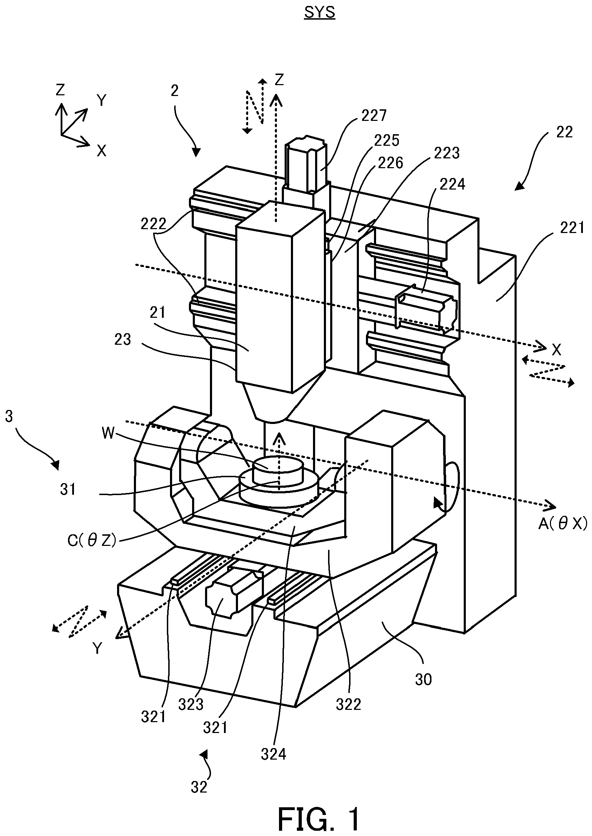

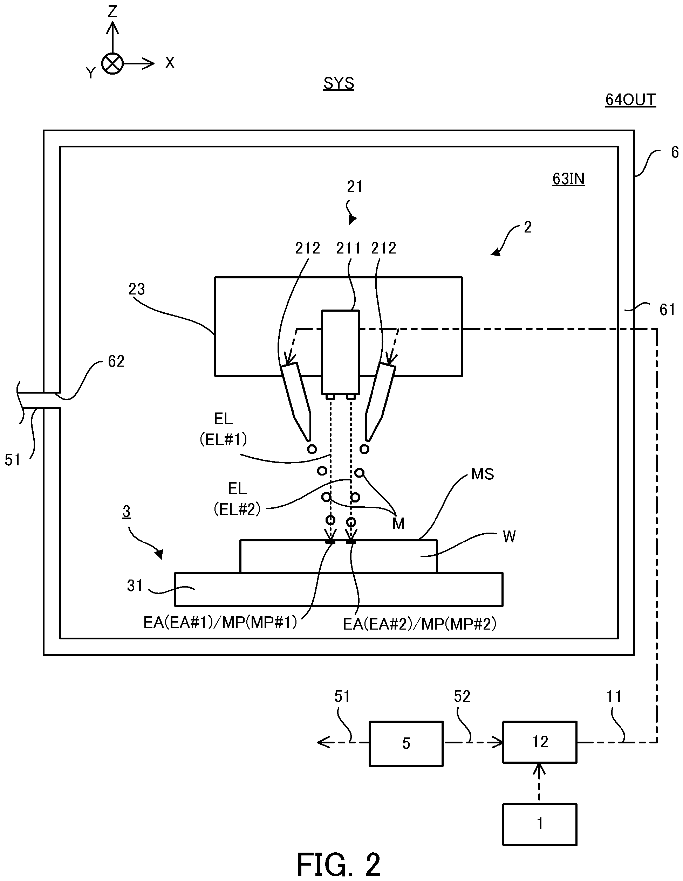

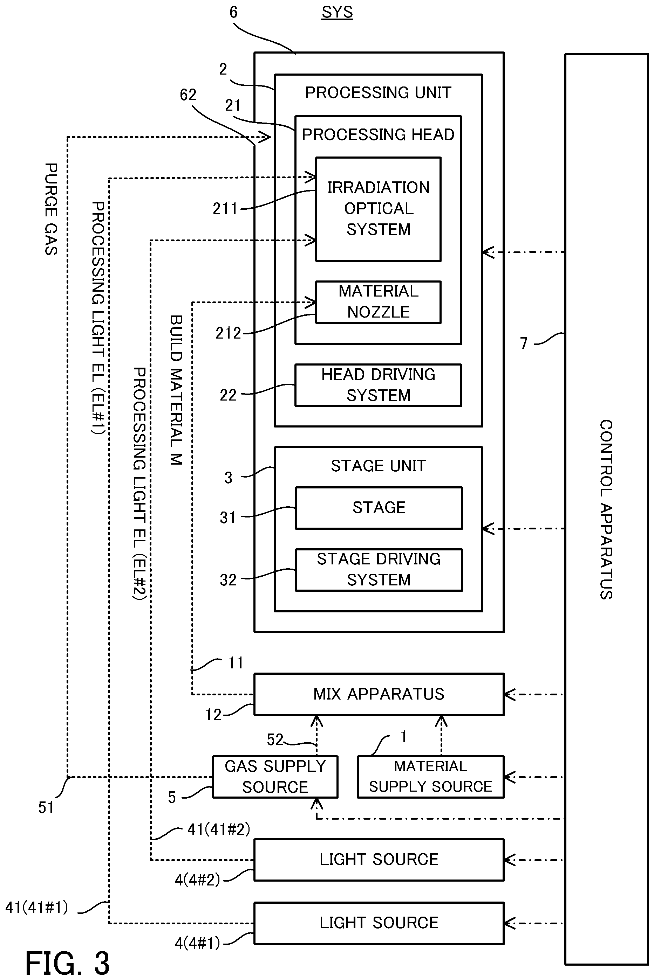

Firstly, with reference to FIG. 1 to FIG. 3, a configuration of the processing system SYS in the present example embodiment will be described. FIG. 1 is a perspective view that illustrates an exterior appearance of the processing system SYS in the present example embodiment. FIG. 2 is a cross-sectional view that schematically illustrates the configuration of the processing system SYS in the present example embodiment. FIG. 3 is a system configuration diagram that illustrates a system configuration of the processing system SYS in the present example embodiment.

The processing system SYS is configured to perform the additive manufacturing on the workpiece W. The processing system SYS is configured to build the build object integrated with (alternatively, separatable from) the workpiece W by performing the additive manufacturing on the workpiece W. In this case, the additive manufacturing performed on the workpiece W corresponds to a processing for adding, to the workpiece W, the build object integrated with (alternatively, separatable from) the workpiece W. Note that the build object in the present example embodiment may mean any object built by the processing system SYS. For example, the processing system SYS is configured to build a 3D (three-dimensional) structural object ST (namely, a 3D object having a magnitude (a size) in each of 3D directions, a solid object, in other words, an object having a magnitude (a size) in the X-axis direction, the Y-axis direction, and the Z-axis direction) as one example of the build object.

In a case where the workpiece W is a below-described stage 31, the processing system SYS is configured to perform the additive manufacturing on the stage 31. In a case where the workpiece W is a placed object that is an object placed on the stage 31, the processing system SYS is configured to perform the additive manufacturing on the placed object. The placed object placed on the stage 31 may be another 3D structural object ST built by the processing system SYS (namely, an existing structural object). Note that FIG. 1 and FIG. 2 illustrate an example in which the workpiece W is the existing structural object placed on the stage 31. Moreover, in the below-described description, the example in which the workpiece W is the existing structural object placed on the stage 31 will be described.

The workpiece W may be an item that needs to be repaired having a missing part. In this case, the processing system SYS may perform a repair processing for repairing the item that needs to be repaired by performing the additive manufacturing for building the build object for filling in the missing part. Namely, the additive manufacturing performed by the processing system SYS may include the additive manufacturing for adding, to the workpiece W, the build object for filling in the missing part.

As described above, the processing system SYS is configured to perform the additive manufacturing based on the Laser Metal Deposition. Namely, it can be said that the processing system SYS is a 3D printer that builds an object by using an Additive layer manufacturing technique. Note that the Additive layer manufacturing technique may be referred to as a Rapid Prototyping, a Rapid Manufacturing, or an Additive Manufacturing. Note that the Laser Metal Deposition (LMD) may be referred to as a DED (Directed Energy Deposition).

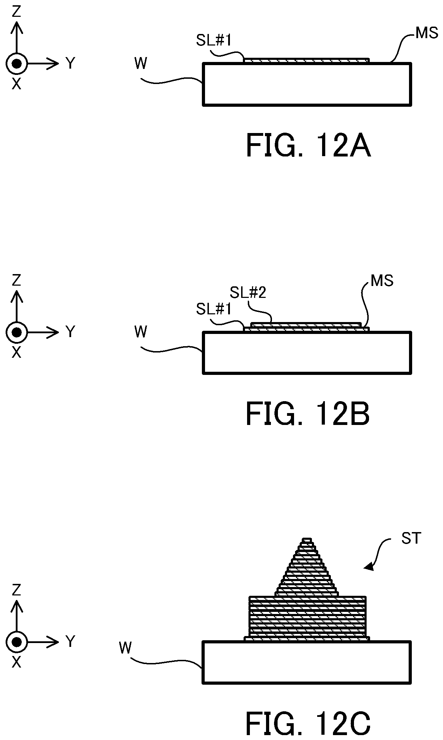

A processing system SYS that uses the Additive layer manufacturing technique builds the 3D structural object ST in which a plurality of structural layers SL (see FIG. 12 below) are stacked by forming the plurality of structural layers SL in sequence. In this case, the processing system SYS firstly sets a surface of the workpiece W to be a build surface MS on which the build object is actually built, and builds a first structural layer SL on the build surface MS. Then, the processing system SYS sets a surface of the first structural layer SL to be a new build surface MS, and builds a second structural layer SL on the build surface MS. Then, the processing system SYS repeats the same operation to build the 3D structural object ST in which the plurality of structural layers SL are stacked.

The processing system SYS performs the additive manufacturing by processing the build material M with the processing light EL that is an energy beam. The build material M is a material that is molten by an irradiation with the processing light EL having a predetermined intensity or more intensity. At least one of a metal material and a resin material is usable as the build material M, for example. At least one of a material including copper, a material including tungsten, and a material including stainless steel is one example of the metal material. However, another material that is different from the metal material and the resin material may be used as the build material M. The build material M is a powder-like material. Namely, the build material M is a powdery material. However, the build material M may not be the powdery material. For example, at least one of a wired-like build material and a gas-like build material may be used as the build material M.

The workpiece W may be an object including a material that is molten by an irradiation with the processing light EL having a predetermined intensity or more intensity. The material of the workpiece W may be the same as or may be different from the build material M. At least one of a metal material and a resin material is usable as the material of the workpiece W, for example. At least one of a material including copper, a material including tungsten, and a material including stainless steel is one example of the metal material. However, another material that is different from the metal material and the resin material may be used as the material of the workpiece W.

In order to perform the additive manufacturing, the processing system SYS includes a material supply source 1, a processing unit 2, a stage unit 3, a light source 4, a gas supply source 5, and a control apparatus 7, as illustrated in FIG. 1 to FIG. 3. The processing unit 2 and the stage unit 3 may be contained in a chamber space 63IN in a housing 6. In this case, the processing system SYS may perform the additive manufacturing in the chamber space 63IN. Note that at least one of the processing system SYS and the processing unit 2 may be referred to as a processing apparatus.

The material supply source 1 is configured to supply the build material M to the processing unit 2. The material supply source 1 supplies, to the processing unit 2, the build material M the amount of which is necessary for performing the additive manufacturing per unit time by supplying the build material M the amount of which is based on the necessary amount.

The processing unit 2 builds the build object by processing the build material M supplied from the material supply source 1. In order to build the build object, the processing unit 2 include a processing head 21, and a head driving system 22. Furthermore, the processing head 21 includes an irradiation optical system 211, and a plurality of material nozzles 212. However, the processing head 21 may include a plurality of irradiation optical systems 211. The processing head 21 may include a single material nozzle 212.

The irradiation optical system 211 is an optical system for emitting the processing light EL. Specifically, the irradiation optical system 211 is optically connected to the light source 4 that generates the processing light EL through a light transmitting member 41. At least one of an optical fiber and a light pipe is one example of the light transmitting member 41. In the example illustrated in FIG. 2, the processing system SYS includes two light sources 4 (specifically, light sources 4#1 and 4#2), and the irradiation optical system 211 are optically connected to the light sources 4#1 and 4#2 through the light transmitting members 41#1 and 41#2, respectively. The irradiation optical systems 211#1 emits the processing light EL transmitted from the light source 4#1 through the light transmitting member 41#1. The irradiation optical system 211#2 emits the processing light EL transmitted from the light source 4#2 through the light transmitting member 41#2. In the below-described description, in a case where it is necessary to distinguish the two processing lights EL emitted from the two irradiation optical systems 211, the processing light EL emitted from the irradiation optical system 211#1 is referred to as "processing light EL#1", and the processing light EL emitted from the irradiation optical system 211#2 is referred to as "processing light EL#2", as necessary.

In the examples illustrated in FIG. 1 to FIG. 3, the processing system SYS includes two light sources 4 (specifically, light sources 4#1 and 4#2), and the irradiation optical system 211 is optically connected to the light sources 4#1 and 4#2 through light transmission members 41#1 and 41#2, respectively. The irradiation optical system 211 emits both of the processing light EL propagating from the light source 4#1 through the light transmitting member 41#1 and the processing light EL propagating from the light source 4#2 through the light transmitting member 41#2. Incidentally, in the below-described description, in a case where it is necessary to distinguish the two processing lights emitted by the irradiation optical system 211, the processing light EL generated by the light source 4#1 is referred to as "processing light EL#1", and the processing light EL generated by the light source 4#2 is referred to as "processing light EL#2", as necessary.

The irradiation optical system 211 emits the processing lights EL in a downward direction (namely, toward a -Z side) from the irradiation optical system 211. The stage 31 is positioned below the irradiation optical system 211. In a case where the workpiece W is placed on the stage 31, the irradiation optical system 211 irradiates the build surface MS with the emitted processing lights EL. Therefore, the irradiation optical system 211 may be referred to as an irradiation apparatus. Specifically, the irradiation optical system 211 is configured to irradiate a target irradiation area (a target irradiation position) EA, which is set on the build surface MS as an area that is irradiated with the processing lights EL (typically, in which the lights are condensed), with the processing lights EL. Incidentally, in the below-described description, in a case where it is necessary to distinguish two target irradiation areas EA that are irradiated with the two processing lights EL by the irradiation optical system 211, respectively, the target irradiation area EA that is irradiated with the processing light EL#1 by the irradiation optical system 211 is referred to as a "target irradiation area EA#1" and the target irradiation area EA that is irradiated with the processing light EL#2 by the irradiation optical system 211 is referred to as a "target irradiation area EA#2", as necessary. Furthermore, a state of the irradiation optical system 211 is switchable between a state where the target irradiation areas EA are irradiated with the processing lights EL and a state where the target irradiation areas EA are not irradiated with the processing lights EL under the control of the control apparatus 7. Note that a direction of the processing lights EL emitted from the irradiation optical system 211 is not limited to a direct downward direction (namely, coincident with the -Z-axis direction), and may be a direction that is inclined with respect to the Z-axis by a predetermined angle, for example. Namely, a third optical system 216 described below (alternatively, a fθ lens 2162 described below) is not limited to an optical system that is telecentric on the object side, but may be an optical system that is non-telecentric on the object side.

The irradiation optical system 211 may form a melt pool MP on the build surface MS by irradiating the build surface MS with the processing light EL. For example, the irradiation optical system 211 may form a melt pool MP#1 on the build surface MS by irradiating the build surface MS with the processing light EL#1. For example, the irradiation optical system 211 may form a melt pool MP#2 on the build surface MS by irradiating the build surface MS with the processing light EL#2. The melt pool MP#1 and the melt pool MP#2 may be integrated. Alternatively, the melt pool MP#1 and the melt pool MP#2 may be separated from each other. However, the melt pool MP#1 may not be formed on the build surface MS by the irradiation with the processing light EL#1. The melt pool MP#2 may not be formed on the build surface MS by the irradiation with the processing light EL#2.

The material nozzle 212 supplies (for example, injects, jets, blows out or sprays) the build material M. Thus, the material nozzle 212 may be referred to as a material supply member. The material nozzle 212 is physically connected to the material supply source 1, which is a supply source of the build material M, through a supply pipe 11 and a mix apparatus 12. The material nozzle 212 supplies the build material M supplied from the material supply source 1 through the supply pipe 11 and the mix apparatus 12. The material nozzle 212 may pressure-feed the build material M supplied from the material supply source 1 through the supply pipe 11. Namely, the build material M from the material supply source 1 and gas for feeding (namely, pressure-feed gas, and inert gas such as Nitrogen or Argon, for example) may be mixed by the mix apparatus 12 and then pressure-fed to the material nozzle 212 through the supply pipe 11. As a result, the material nozzle 212 supplies the build material M together with the gas for feeding. Purge gas supplied from the gas supply source 5 is used as the gas for feeding, for example. However, gas supplied from a gas supply source that is different from the gas supply source 5 may be used as the gas for feeding. Note that the material nozzle 212 is illustrated to have a tube-like shape in FIG. 2, however, a shape of the material nozzle 212 is not limited to this shape. The material nozzle 212 supplies the build material M in a downward direction (namely, toward the -Z side) from the material nozzle 212. The stage 31 is positioned below the material nozzle 212. In a case where the workpiece W is placed on the stage 31, the material nozzle 212 supplies the build material M toward the build surface MS. Note that a supply direction of the build material M supplied from the material nozzle 212 is a direction that is inclined with respect to the Z-axis by a predetermined angle (as one example, an acute angle), however, it may be the -Z-axis direction (namely, a direct downward direction).

In the present example embodiment, the material nozzle 212 supplies the build material M to a position that is irradiated with at least one of the processing lights EL#1 and EL#2 (namely, at least one of the target irradiation areas EA#1 and EA#2). Therefore, the material nozzle 212 and the irradiation optical system 211 are aligned so that a target supply area MA, which is set on the build surface MS as an area to which the material nozzle 212 supplies the build material M, overlaps with at least one of the target irradiation areas EA#1 and EA#2 at least partially. A size of the target supply area MA may be larger than, may be smaller than, or may be the same as a size of at least one of the target irradiation areas EA#1 and EA#2.

The material nozzle 212 may supply the build material M to the melt pool MP. Specifically, the material nozzle 212 may supply the build material M to at least one of the melt pool MP#1 and the melt pool MP#2. As described above, since the material nozzle 212 supplies the build material M from a position above the workpiece W, the material nozzle 212 may be considered to supply the build material M from a position that is away from the melt pool MP formed on the workpiece W. However, the material nozzle 212 may not supply the build material M to the melt pool MP. For example, the processing system SYS may melt the build material M by the processing light EL emitted from the irradiation optical system 211 before the build material M from the material nozzle 212 reaches the workpiece W, and make the molten build material M adhere to the workpiece W.

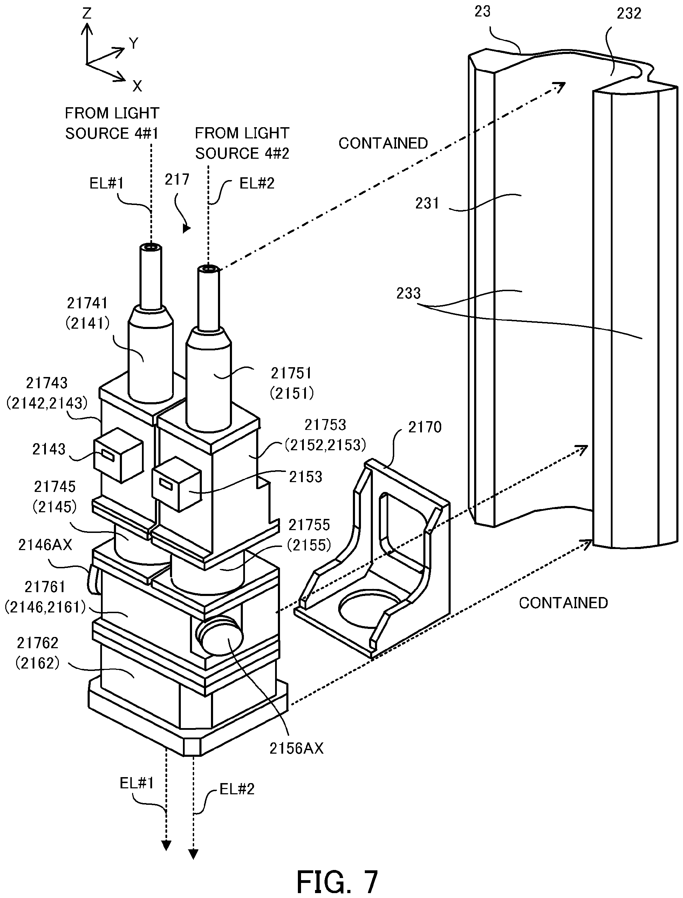

The processing head 21 may be contained in a head housing 23. The head housing 23 is a housing in which a containing space 231 (see FIG. 7 below) for containing the irradiation optical system 211 and the material nozzle 212 is formed. In this case, the irradiation optical system 211 and the material nozzles 212 may be contained in the head housing 23.

The head housing 23 may serve as a support member that supports the processing head 21. In order to support the processing head 21, the head housing 23 may be adjacent to the processing head 21 along a direction intersecting the Z-axis direction (for example, a direction along the XY plane). In other words, the head housing 23 may include a member that is adjacent to the processing head 21 along a direction intersecting the Z-axis direction (for example, a direction along the XY plane). Incidentally, the head housing 23 will be described in detail later with reference to FIG. 7 and so on described below.

The head driving system 22 moves the processing head 21 under the control of the control apparatus 7. Namely, the head driving system 22 moves the irradiation optical system 211 and the material nozzle 212 under the control of the control apparatus 7. The head driving system 22 moves the processing head 21 along at least one of the X-axis direction, the Y-axis direction, the Z-axis direction, the θX direction, the θY direction, and the θZ direction, for example. Incidentally, an operation for moving the processing head 21 along at least one of the θX direction, the θY direction, and the θZ direction may be considered to be equivalent to an operation for rotating the processing head 21 around at least one of a rotational axis along the X-axis, a rotational axis along the Y-axis, and a rotational axis along the Z-axis.

In the example illustrated in FIG. 1, the head driving system 22 moves the processing head 21 along each of the X-axis direction and the Z-axis direction. In this case, the head driving system 22 may include: a column 221 that is a wall-like member extending upwardly along the Z-axis direction from a bed 30 that is a base of the stage unit 3; an X guide member 222 that is attached to (alternatively, formed on) the column 221 and that extends along the X-axis direction; an X block member 223 that is attached to the X guide member 222 and that is movable along the X guide member 222; a servomotor 224 that generates a driving force for moving the X block member 223; a Z guide member 225 that is attached to (alternatively, formed on) the X block member 223 and that extends along the Z-axis direction; the Z block member 226 that is attached to the Z guide member 225 and that is movable along the Z guide member 225; and a servomotor 227 that generates a driving force for moving the Z block member, for example. In this case, the head driving system 22 (especially, the Z block member 226) to which the processing head 21 is attached may be regarded as the support member that supports the processing head 21.

The processing head 21 may be attached to the Z block member 226. Specifically, the head housing 23, which contains the processing head 21, may be attached to the Z block member 226. In this case, the Z block member 226 may serve as the support member that supports the processing head 21. In order to support the processing head 21, the Z block member 226 may be adjacent to the processing head 21 along a direction intersecting the Z axis direction (for example, a direction along the XY plane). As a result, the processing head 21 moves in the X-axis direction due to the movement of the X block member 223 and moves in the Z-axis direction due to the movement of the Z block member 226. Namely, a position of the processing head 21 in the X-axis direction is changed due to a change of a position of the X block member 223 in the X-axis direction, and a position of the processing head 21 in the Z-axis direction is changed due to a change of a position of the Z block member 226 in the Z-axis direction.

When the head driving system 22 moves the processing head 21, a relative positional relationship between the processing head 21 and each of the stage 31 and the workpiece W placed on the stage 31 changes. Namely, the position of the processing head 21 relative to each of the stage 31 and the workpiece W changes. As a result, a relative positional relationship between each of the target irradiation areas EA#1 and EA#2 and the target supply area MA and the workpiece W also changes. Namely, each of the target irradiation areas EA#1 and EA#2 and the target supply area MA moves along at least one of the X-axis direction, the Y-axis direction, the Z-axis direction, the θX direction, the θY direction, and the θZ direction on the surface of the workpiece W (more specifically, the build surface MS on which the additive manufacturing is performed). In this case, the head driving system 22 may be considered to move the processing head 21 so that each of the target irradiation areas EA#1 and EA#2 and the target supply area MA moves on the build surface MS.

The stage unit 3 includes the bed 30, the stage 31, and a stage driving system 32.

The workpiece W is placed on the stage 31. Therefore, the stage 31 may be referred to as a placing apparatus. The stage 31 is configured to support the workpiece W placed on the stage 31. The stage 31 may be configured to hold the workpiece W placed on the stage 31. In this case, the stage 31 may include at least one of a mechanical chuck, an electro-static chuck, and a vacuum chuck to hold the workpiece W. Alternatively, the stage 31 may not be configured to hold the workpiece W placed on the stage 31. In this case, the workpiece W may be placed on the stage 31 without a clamp. Moreover, the workpiece W may be attached to a holding member, and the holding member to which the workpiece W is attached may be placed on the stage 31. The above-described irradiation optical system 211 emits each of the processing lights EL#1 and EL#2 in at least a part of a period during which the workpiece W is placed on the stage 31. Furthermore, the above-described material nozzle 212 supplies the build material M in at least a part of the period during which the workpiece W is placed on the stage 31.

The stage driving system 32 moves the stage 31. For example, the stage driving system 32 moves the stage 31 along at least one of the X-axis direction, the Y-axis direction, the Z-axis direction, the θX direction, the θY direction and the θZ direction. Incidentally, an operation for moving the stage 31 along at least one of the θX direction, the θY direction, and the θZ direction may be considered to be equivalent to an operation for rotating the stage 31 around at least one of a rotational axis along the X-axis (namely, an A-axis), a rotational axis along the Y-axis (namely, a B-axis), and a rotational axis along the Z-axis (namely, a C-axis).

In the example illustrated in FIG. 1, the stage driving system 32 moves the stage 31 along the Y-axis direction and rotates the stage 31 around the rotational axis of each of the A-axis and the C-axis. In this case, the stage driving system 32 may include: a Y-guide member 321 that is attached to (alternatively, formed on) the bed 30 and that extends along the Y-axis direction; a trunnion (a Y-block member) 322 that is attached to the Y-guide member 321 and that is movable along the Y-guide member 321; a servomotor 323 that generates a driving force for moving the trunnion 322; a cradle 324 that is attached to the trunnion 322 and that is rotatable around the A-axis relative to the trunnion 322; and an non-illustrated servomotor that generates a driving force for rotating the cradle 324, for example. The stage 31 may be attached to the cradle 324 so that it is rotatable around the C-axis relative to the cradle 324 by using a driving force generated by a non-illustrated servo motor. As a result, the stage 31 moves in the Y-axis direction due to the movement of the trunnion 322, rotates around the A-axis due to the rotation of the cradle 324, and rotates around the C-axis.

When the stage driving system 32 moves the stage 31, the relative positional relationship between the processing head 21 and each of the stage 31 and the workpieces W changes. Namely, the position of the processing head 21 relative to each of the stage 31 and the workpiece W changes. As a result, the relative positional relationship between each of the target irradiation areas EA#1 and EA#2 and the target supply area MA and the workpiece W also changes. Namely, each of the target irradiation areas EA#1 and EA#2 and the target supply area MA moves along at least one of the X-axis direction, the Y-axis direction, the Z-axis direction, the θX direction, the θY direction, and the θZ direction on the surface of the workpiece W (more specifically, the build surface MS). In this case, the stage driving system 32 may be considered to move the stage 31 so that each of the target irradiation areas EA#1 and EA#2 and the target supply area MA moves on the build surface MS.

The light source 4 emits at least one of infrared light, visible light, and ultraviolet light as the processing light EL, for example. However, other type of light may be used as the processing light EL. The processing light EL may include a plurality of pulsed lights (namely, a plurality of pulsed beams). The processing light EL may be a laser light. In this case, the light source 4 may include a semiconductor laser such as a laser light source (for example, a Laser Diode (LD)). At least one of a fiber laser, a CO₂ laser, a YAG laser, an Excimer laser and the like may be used as the laser light source. However, the processing light EL may not be the laser light. The light source 4 may include any light source (for example, at least one of a LED (Light Emitting Diode), a discharge lamp and the like).

As described above, the processing system SYS includes the plurality of light sources 4 (specifically, the light sources 4#1 and 4#2). In this case, a characteristic of the processing light EL#1 emitted by the light source 4#1 may be the same as a characteristic of the processing light EL#2 emitted by the light source 4#2. For example, a wavelength of the processing light EL#1 (typically, a peak wavelength that is a wavelength at which an intensity is maximum in a wavelength band of the processing light EL#1) may be the same as the wavelength of the processing light EL#2 (typically, a peak wavelength that is a wavelength at which an intensity is maximum in a wavelength band of the processing light EL#2). For example, the wavelength band (typically, a range of wavelengths at which the intensity is equal to or higher that a certain value) of the processing light EL#1 may be the same as the wavelength band of the processing light EL#2. For example, the intensity of the processing light EL#1 may be the same as the intensity of the processing light EL#2. For example, an absorption rate of the workpiece W (alternatively, an object whose surface is the build surface MS, the same is applied in the below-described description) to the processing light EL#1 may be the same as an absorption rate of the workpiece W to the processing light EL#2. In this case, the absorption rate of the workpiece W to the peak wavelength of the processing light EL#1 may be the same as the absorption rate of the workpiece W toe the peak wavelength of the processing light EL#2. Alternatively, the characteristic of the processing light EL#1 emitted by the light source 4#1 may be different from the characteristic of the processing light EL#2 emitted by the light source 4#2. For example, the wavelength (typically, the peak wavelength) of the processing light EL#1 may be different from the wavelength (typically, the peak wavelength) of the processing light EL#2. For example, the wavelength band of the processing light EL#1 may be different from the wavelength band of the processing light EL#2. For example, the intensity of the processing light EL#1 may be different from the intensity of the processing light EL#2. For example, the absorption rate of the workpiece W to the processing light EL#1 may be different from the absorption rate of the workpiece W to the processing light EL#2.

In the present example embodiment, an example in which the peak wavelength of the processing light EL#2 is shorter than the peak wavelength of the processing light EL#1 will be described. Namely, in the present example embodiment, an example in which the peak wavelength of the processing light EL#1 is longer than the peak wavelength of the processing light EL#2 will be described. As one example, the light source 4#1 may emit near-infrared light (for example, light whose peak wavelength is 1070 nm or is close to 1070 nm) as the processing light EL#1. The light source 4#2 may emit blue visible light (for example, light whose peak wavelength is 450 nm or is close to 450 nm) as the processing light EL#2.

Incidentally, in the present example embodiment, an example in which the processing system SYS includes the plurality of light sources 4. However, the processing system SYS may not include the plurality of light sources 4. The processing system SYS may not include a single light source 4. As one example, the processing system may include, as the single light source, a light source that emits (supplies) a wide wavelength band or multiple wavelengths of light as a single light source 4. In this case, the processing system SYS may generate the processing light EL#1 and the processing light EL#2 whose wavelengths are different from each other by performing a wavelength division on the light emitted from this light source.

The gas supply source 5 is a source of the purge gas for purging the chamber space 63IN in the housing 6. The purge gas includes inert gas. At least one of Nitrogen gas and Argon gas is one example of the inert gas. The gas supply source 5 is connected to the chamber space 63IN through a supply port 62 formed in a wall member 61 of the housing 6 and a supply pipe 51 connecting the gas supply source 5 to the supply port 62. The gas supply source 5 supplies the purge gas to the chamber space 63IN through the supply pipe 51 and the supply port 62. As a result, the chamber space 63IN becomes a space purged by the purge gas. The purge gas supplied to the chamber space 63IN may be discharged from a non-illustrated outlet port formed in the wall member 61. Note that the gas supply source 5 may be a tank that stores the inert gas such as the Nitrogen gas and the Argon gas. In a case where the purge gas is the Nitrogen gas, the gas supply source 5 may be a Nitrogen gas generation apparatus that generates the Nitrogen gas by using air as material.

In a case where the material nozzle 212 supplies the build material M together with the purge gas as described above, the gas supply source 5 may supply the purge gas to the mix apparatus 12 to which the build material M is supplied from the material supply source 1. Specifically, the gas supply source 5 may be connected to the mix apparatus 12 through a supply pipe 52 that connects the gas supply source 5 and the mix apparatus 12. As a result, the gas supply source 5 supplies the purge gas to the mix apparatus 12 through the supply pipe 52. In this case, the build material M from the material supply source 1 may be supplied (specifically, pressure-fed) to the material nozzle 212 through the supply pipe 11 by the purge gas supplied from the gas supply source 5 through the supply pipe 52. Namely, the gas supply source 5 may be connected to the material nozzle 212 through the supply pipe 52, the mix apparatus 12 and the supply pipe 11. In this case, the material nozzle 212 supplies the build material M together with the purge gas for pressure-feeding the build material M.

The control apparatus 7 is configured to control an operation of the processing system SYS. For example, the control apparatus 7 may control the processing unit 2 (for example, at least one of the processing head 21 and the head driving system 22) of the processing system SYS to perform the additive manufacturing on the workpiece W. For example, the control apparatus 7 may control the stage unit 3 (for example, stage driving system 32) of the processing system SYS to perform the additive manufacturing on the workpiece W.

The control apparatus 7 may include a calculation apparatus and a storage apparatus. The calculation apparatus may include at least one of a CPU (Central Processing unit) and a GPU (Graphic Processing unit), for example. The storage apparatus may include a memory. The control apparatus 7 serves as an apparatus for controlling the operation of the processing system SYS by means of the calculation apparatus executing a computer program. The computer program is a computer program that allows the calculation apparatus to execute (namely, to perform) a below-described operation that should be executed by the control apparatus 7. Namely, the computer program is a computer program that allows the control apparatus 7 to function so as to make the processing system SYS execute the below-described operation. The computer program executed by the calculation apparatus may be recorded in the storage apparatus (namely, a recording medium) of the control apparatus 7, or may be recorded in any recording medium (for example, a hard disk or a semiconductor memory) that is built in the control apparatus 7 or that is attachable to the control apparatus 7. Alternatively, the calculation apparatus may download the computer program that should be executed from an apparatus external to the control apparatus 7 through a network interface.

The control apparatus 7 may control an emitting aspect of the processing light EL by the irradiation optical system 211. The emitting aspect may include at least one of the intensity of the processing light EL and emitting timing of the processing light EL, for example. In a case where the processing light EL includes the plurality of pulsed lights, the emitting aspect may include at least one of an ON time of the pulsed light, an emission cycle of the pulsed light and a ratio (what we call a duty ratio) of a length of the ON time of the pulsed light and a length of the emission cycle of the pulsed light, for example. Furthermore, the control apparatus 7 may control a movement aspect of the processing head 21 by the head driving system 22. The control apparatus 7 may control a movement aspect of the stage 31 by the stage driving system 32. The movement aspect may include at least one of a movement distance, a movement speed, a movement direction, and a movement timing (a movement period), for example. Moreover, the control apparatus 7 may control a supply aspect of the build material M by the material nozzle 212. The supply aspect may include at least one of the supplied amount (especially, the supplied amount per unit time) and a supply timing (a supply period).

The control apparatus 7 may not be positioned in the processing system SYS. For example, the control apparatus 7 may be positioned at the outside of the processing system SYS as a server or the like. In this case, the control apparatus 7 may be connected to the processing system SYS through a wired and / or wireless network (alternatively, a data bus and / or a communication line). A network using a serial-bus-type interface such as at least one of IEEE1394, RS-232x, RS-422, RS-423, RS-485, and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802. 1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 7 and the processing system SYS may be configured to transmit and receive various information through the network. Moreover, the control apparatus 7 may be configured to transmit information such as a command and a control parameter to the processing system SYS through the network. The processing system SYS may include a reception apparatus that is configured to receive the information such as the command and the control parameter from the control apparatus 7 through the network. The processing system SYS may include a transmission apparatus that is configured to transmit the information such as the command and the control parameter to the control apparatus 7 through the network (namely, an output apparatus that is configured to output information to the control apparatus 7). Alternatively, a first control apparatus that is configured to perform a part of the arithmetic processing performed by the control apparatus 7 may be positioned in the processing system SYS and a second control apparatus that is configured to perform another part of the arithmetic processing performed by the control apparatus 7 may be positioned at the outside of the processing system SYS.

An arithmetic model that is buildable by machine learning may be implemented in the control apparatus 7 by the calculation apparatus executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control apparatus 7 may control the operation of the processing system SYS by using the arithmetic model. Namely, the operation for controlling the operation of the processing system SYS may include an operation for controlling the operation of the processing system SYS by using the arithmetic model. Note that the arithmetic model that has been built by off-line machine learning using training data may be implemented in the control apparatus 7. Moreover, the arithmetic model implemented in the control apparatus 7 may be updated by online machine learning on the control apparatus 7. Alternatively, the control apparatus 7 may control the operation of the processing system SYS by using the arithmetic model implemented in an apparatus external to the control apparatus 7 (namely, an apparatus external to the processing system SYS), in addition to or instead of the arithmetic model implemented on the control apparatus 7.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 7. The recording medium may include a device that is configured to record the computer program (for example, a device for a universal use or a device for an exclusive use in which the computer program is embedded to be executable in a form of at least one of a software, a firmware, and the like). Moreover, various arithmetic processing or functions included in the computer program may be realized by a logical processing block that is realized in the control apparatus 7 by means of the control apparatus 7 (namely, a computer) executing the computer program, may be realized by a hardware such as a predetermined gate array (a FPGA, an ASIC) of the control apparatus 7, or may be realized in a form in which the logical process block and a partial hardware module that realizes a partial element of the hardware are combined.

### (1-2) Configuration of Irradiation Optical System 211

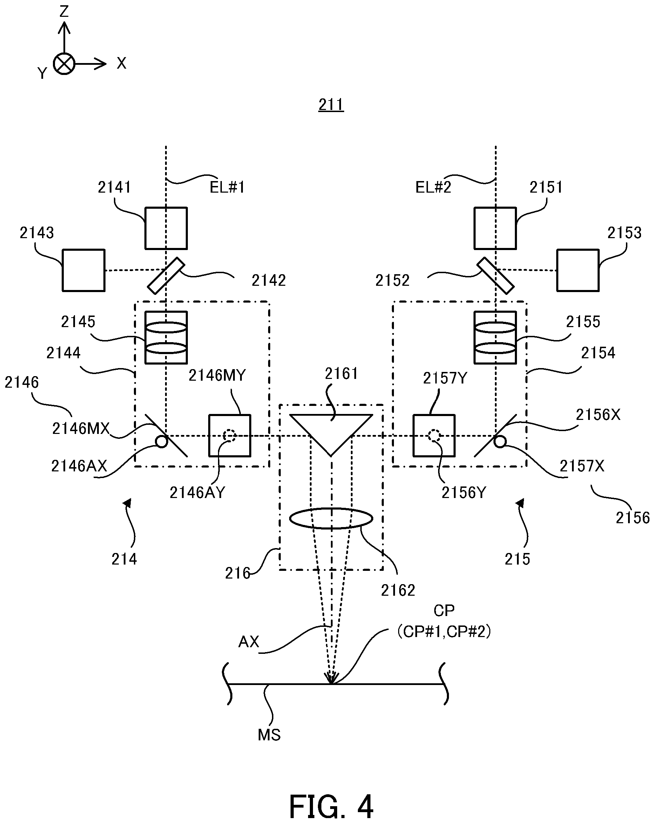

Next, with reference to FIG. 4, a configuration of the irradiation optical system 211 will be described. FIG. 4 is a cross-sectional view that illustrates the configuration of the irradiation optical system 211.

As illustrated in FIG. 4, the irradiation optical system 211 includes a first optical system 214, a second optical system 215, and the third optical system 216. The first optical system 214 is an optical system into which the processing light EL#1 emitted from the light source 4#1 enters. The first optical system 214 is an optical system that emits the processing light EL#1 emitted from the light source 4#1 toward the third optical system 216. The second optical system 215 is an optical system into which the processing light EL#2 emitted from the light source 4#2 enters. The second optical system 215 is an optical system that emits the processing light EL#2 emitted from the light source 4#2 toward the third optical system 216. The third optical system 216 is an optical system into which the processing light EL#1 emitted from the first optical system 214 and the processing light EL#2 emitted from the second optical system 215 enter. The third optical system 216 is an optical system that emits the processing light EL#1 emitted from the first optical system 214 and the processing light EL#2 emitted from the second optical system 215 toward the build surface MS. Next, the first optical system 214, the second optical system 215, and the third optical system 216 will be described in sequence.

The first optical system 214 includes a collimator lens 2141, a parallel plate 2142, a power meter 2143, and a Galvano scanner 2144. The Galvano scanner 2144 includes a focus control optical system 2145 and a Galvano mirror 2146. However, the first optical system 214 may not include at least one of the collimator lens 2141, the parallel plate 2142, the power meter 2143, and the Galvano scanner 2144. The Galvano scanner 2144 may not include at least one of the focus control optical system 2145 and the Galvano mirror 2146.

The processing light EL#1 emitted from the light source 4#1 enters the collimator lens 2141. The collimator lens 2141 converts the processing light EL#1 that has entered the collimator lens 2141 into collimated light. Incidentally, in a case where the processing light EL#1 emitted from the light source 4#1 is collimated light (namely, the processing light EL#1 that is the collimated light enters the first optical system 214), the first optical system 214 may not include the collimator lens 2141. Namely, an installation of the collimator lens 2141 may be omitted. Moreover, in a case where an optical fiber is interposed between the light source 4#1 and the collimator lens 2141 as the light transmitting member for transmitting the processing light EL#1, the collimator lens 2141 may be positioned so that a front focal point of the collimator lens 2141 is positioned near an exit end of the optical fiber, and the collimator lens 2141 may convert the processing light EL#1, which is emitted from the optical fiber as a divergent light beam, into the collimated light. The processing light EL#1 that has been converted to the collimated light by the collimator lens 2141 enters the parallel plate 2142. A part of the processing light EL#1 that has entered the parallel plate 2142 passes through the parallel plate 2142. Another part of the processing light EL#1 that has entered the parallel plate 2142 is reflected by the parallel plate 2142.

The processing light EL#1 that has passed through the parallel plate 2142 enters the Galvano scanner 2144. Specifically, the processing light EL#1 that has passed through the parallel plate 2142 enters the focus control optical system 2145 of the Galvano scanner 2144.

The focus control optical system 2145 is an optical component that is configured to change a condensed position CP of the processing light EL#1 (in the below-described description, it is referred to as a "condensed position CP#1"). Therefore, the focus control optical system 2145 may be referred to as a condensed position change member. Specifically, the focus control optical system 2145 is configured to change the condensed position CP#1 of the processing light EL#1 along an irradiation direction of the processing light EL#1 with which the build surface MS is irradiated. In the example illustrated in FIG. 4, the irradiation direction of the processing light EL#1 with which the build surface MS is irradiated is a direction whose main component is the Z-axis direction. In this case, the focus control optical system 2145 is configured to change the condensed position CP#1 of the processing light EL#1 along the Z-axis direction. Moreover, since the irradiation optical system 211 irradiates the build surface MS with the processing light EL from a position above the workpiece W, the irradiation direction of the processing light EL#1 is a direction that intersects the build surface MS (for example, the surface of the workpiece W or the structural layer SL). Therefore, the focus control optical system 2145 may be considered to be configured to change the condensed position CP#1 of the processing light EL#1 along the direction that intersects the build surface MS (for example, the surface of the workpiece W or the structural layer SL).

The focus control optical system 2145 may change the condensed position CP#1 of the processing light EL#1 so that the condensed position CP#1 of the processing light EL#1 is positioned on the build surface MS. Namely, the focus control optical system 2145 may change the condensed position CP#1 of the processing light EL#1 so that the build surface MS is irradiated with the processing light EL#1 in a focused state. In other words, the focus control optical system 2145 may change the condensed position CP#1 of the processing light EL#1 so that the processing light EL#1 in the focused state builds the build object. Alternatively, the focus control optical system 2145 may change the condensed position CP#1 of the processing light EL#1 so that the condensed position CP#1 of the processing light EL#1 is positioned at a position that is away from the build surface MS along the Z axis direction. Namely, the focus control optical system 2145 may change the condensed position CP#1 of the processing light EL#1 so that the build surface MS is irradiated with the processing light EL#1 in a defocused state. In other words, the focus control optical system 2145 may change the condensed position CP#1 of the processing light EL#1 so that the processing light EL#1 in the defocused state builds the build object.

An amount of energy transferred per unit time from the processing light EL#1 in the focused state to the build surface MS is different from an amount of energy transferred per unit time from the processing light EL#1 in the defocused state to the build surface MS. Furthermore, the amount of the energy transferred per unit time from the processing light EL#1 in the defocused state to the build surface MS varies depending on a defocused amount of the processing light EL#1. Therefore, the focus control optical system 2145 may change the condensed position CP#1 of the processing light L#1 so that the amount of the energy transferred per unit time from the processing light EL#1 to the build surface MS becomes a desired amount of energy. The focus control optical system 2145 may change the condensed position CP#1 of the processing light L#1 so that the defocused amount of the processing light EL#1 becomes a desired defocused amount.

Incidentally, the irradiation direction of the processing light EL#1 may mean an irradiation direction of the processing light EL#1 emitted from the third optical system 216. In this case, the irradiation direction of the processing light EL#1 may be the same as a direction along an optical axis of the third optical system 216. The irradiation direction of the processing light EL#1 may be the same as a direction along an optical axis of a terminal optical member, which is positioned at a position closest to the build surface MS, among optical members of the third optical system 216. The terminal optical member may be the fθ lens 2162 described below. Moreover, in a case where the below-described fθ lens 2162 includes a plurality of optical members, the terminal optical member may be an optical member, which is positioned at a position closest to the build surface MS, among the plurality of optical members of the fθ lens 2162.

The focus control optical system 2145 may include a plurality of lenses that are aligned along the irradiation direction of the processing light EL#1, for example. In this case, the focus control optical system 2145 may change the condensed position CP#1 of the processing light EL#1 by moving at least one of the plurality of lenses along its optical axis direction.

Wen the focus control optical system 2145 changes the condensed position CP#1 of the processing light EL#1, a positional relationship between the condensed position CP#1 of the processing light EL#1 and the build surface MS changes. Especially, a positional relationship between the condensed position CP#1 of the processing light EL#1 and the build surface MS in the irradiation direction of the processing light EL#1 changes. Therefore, the focus control optical system 2145 may be considered to change the positional relationship between the condensed position CP#1 of the processing light EL#1 and the build surface MS by changing the condensed position CP#1 of the processing light EL#1 by the focus control optical system 2145.

Incidentally, as described above, the Galvano scanner 2144 may not include the focus control optical system 2145. Even in this case, when the positional relationship between the irradiation optical system 211 and the build surface MS in the irradiation direction of the processing light EL#1 changes, the positional relationship between the condensed position CP#1 of the processing light EL#1 and the build surface MS in the irradiation direction of the processing light EL#1 changes. Therefore, even in a case where the Galvano scanner 2144 does not include the focus control optical system 2145, the processing system SYS can change the positional relationship between the condensed position CP#1 of the processing light EL#1 and the build surface MS in the irradiation direction of the processing light EL#1. For example, the processing system SYS may change the positional relationship between the condensed position CP#1 of the processing light EL#1 and the build surface MS in the irradiation direction of the processing light EL#1 by using the head driving system 22 to move the processing head 21 along the irradiation direction of the processing light EL#1. For example, the processing system SYS may change the positional relationship between the condensed position CP#1 of the processing light EL#1 and the build surface MS in the irradiation direction of the processing light EL#1 by using the stage driving system 32 to move the stage 31 along the irradiation direction of the processing light EL#1.

The processing light EL#1 that has been emitted from the focus control optical system 2145 enters the Galvano mirror 2146. The Galvano mirror 2146 changes an exit direction of the processing light EL#1 emitted from the Galvano mirror 2146 by deflecting the processing light EL#1. Therefore, the Galvano mirror 2146 may be referred to as a deflection member. When the exit direction of the processing light EL#1 emitted from the Galvano mirror 2146 is changed, a position from which the processing light EL#1 is emitted from the processing head 21 is changed. When the position from which the processing light EL#1 is emitted from the processing head 21 is changed, the target irradiation area EA#1 that is irradiated with the processing light EL#1 on the build surface MS moves. Namely, an irradiation position that is irradiated with the processing light EL#1 on the build surface MS moves. Specifically, the target irradiation area EA#1 moves along the build surface MS. The target irradiation area EA#1 moves along a direction that is along the build surface MS. Since the irradiation direction of the processing light EL#1 is the direction intersecting the build surface MS as described above, the target irradiation area EA#1 moves along a direction intersecting the irradiation direction of the processing light EL#1. The irradiation position of the processing light EL#1 is changed along the build surface MS. The irradiation position of the processing light EL#1 is changed along the direction that is along the build surface MS. The irradiation position of the processing light EL#1 is changed along the direction that intersects the irradiation direction of the processing light EL#1. Thus, the target irradiation area EA#1 may be an area that is stationary with respect to the irradiation optical system 211 at a certain timing.

The Galvano mirror 2146 includes an X scanning mirror 2146MX, an X scanning motor 2146AX, a Y scanning mirror 2146MY, and a Y scanning motor 2146AY, for example. The processing light EL#1 that has been emitted from the focus control optical system 2145 enters the X scanning mirror 2146MX. The X scanning mirror 2146MX reflects the processing light EL#1 that has entered the X scanning mirror 2146MX toward the Y scanning mirror 2146MY. The Y scanning mirror 2146MY reflects the processing light EL#1 that has entered the Y scanning mirror 2146MY reflects the processing light EL#1 toward the third optical system 216. Incidentally, each of the X scanning mirror 2146MX and the Y scanning mirror 2146MY may be referred to as a Galvano mirror.

The X scanning motor 2146AX is one specific example of an electrical component that is used to control the processing light EL#1. Specifically, the X scanning motor 2146AX is a driving system that is configured to electrically generate a force. The X scanning motor 2146AX swings or rotates the X scanning mirror 2146MX around a rotational axis along the Y-axis by using the electrically generated force. As a result, an angle of the X scanning mirror 2146MX relative to an optical path of the processing light EL#1 entering the X scanning mirror 2146MX is changed. In this case, the build surface MS is scanned with the processing light EL#1 along the X-axis direction due to the swing or the rotation of the X scanning mirror 2146MX. Namely, the target irradiation area EA#1 moves along the X-axis direction on the build surface MS.

The Y scanning motor 2146AY is one specific example of an electrical component that is used to control the processing light EL#1. Specifically, the Y scanning motor 2146AY is a driving system that is configured to electrically generate a force. The Y scanning motor 2146AY swings or rotates the Y scanning mirror 2146MY around a rotational axis along the X-axis by using the electrically generated force. As a result, an angle of the Y scanning mirror 2146MY relative to an optical path of the processing light EL#1 entering the Y scanning mirror 2146MY is changed. In this case, the build surface MS is scanned with the processing light EL#1 along the Y-axis direction due to the swing or the rotation of the Y scanning mirror 2146MY. Namely, the target irradiation area EA#1 moves along the Y-axis direction on the build surface MS.

In the present example embodiment, a virtual area in which the Galvano mirror 2146 moves the target irradiation area EA#1 on the build surface MS is referred to as a processing unit area BSA (especially, the processing unit area BSA#1). In this case, the target irradiation area EA#1 may be considered to move on a surface (a first surface) of the build surface MS that overlaps with the processing unit area BSA#1. Specifically, the virtual area in which the Galvano mirror 2146 moves the target irradiation area EA#1 on the build surface MS in a state where a positional relationship between the irradiation optical system 211 and the build surface MS is fixed (namely, is not changed) is referred to as the processing unit area BSA (especially, the processing unit area BSA#1). The processing unit area BSA#1 indicates a virtual area (in other words, a range) in which the processing head 21 actually performs the additive manufacturing by using the processing light EL#1 in a state where the positional relationship between the irradiation optical system 211 and the build surface MS is fixed. The processing unit area BSA#1 indicates a virtual area (in other words, a range) that is scanned by the processing head 21 with the processing light EL#1 in a state where the positional relationship between the irradiation optical system 211 and the build surface MS is fixed. The processing unit area BSA#1 indicates an area (in other words, a range) in which the target irradiation area EA#1 actually moves in a state where the positional relationship between the irradiation optical system 211 and the build surface MS is fixed. Therefore, the processing unit area BSA#1 may be regarded as a virtual area that is determined based on the processing head 21 (especially, the irradiation optical system 211). Namely, the processing unit area BSA#1 may be regarded as a virtual area positioned at a position that is determined on the build surface MS based on the processing head 21 (especially, the irradiation optical system 211). Incidentally, a maximum area in which the Galvano mirror 2146 is allowed to move the target irradiation area EA#1 on the build surface MS in a state where the positional relationship between the irradiation optical system 211 and the build surface MS is fixed may be referred to as the processing unit area BSA#1.

Here, as described above, when at least one of the processing head 21 and the stage 31 moves, the positional relationship between the processing head 21 and the build surface MS changes. Therefore, a positional relationship between the Galvano mirror 2146 of the processing head 21 and the build surface MS changes. As a result, the processing unit area BSA#1 (namely, the processing unit area BSA#1 in which the Galvano mirror 2146 moves the target irradiation area EA#1 on the build surface MS), which is determined based on the processing head 21, moves on the build surface MS. Therefore, in the present example embodiment, an operation for moving at least one of the processing head 21 and the stage 31 may be considered to be equivalent to an operation for moving the processing unit area BSA#1 relative to the build surface MS.

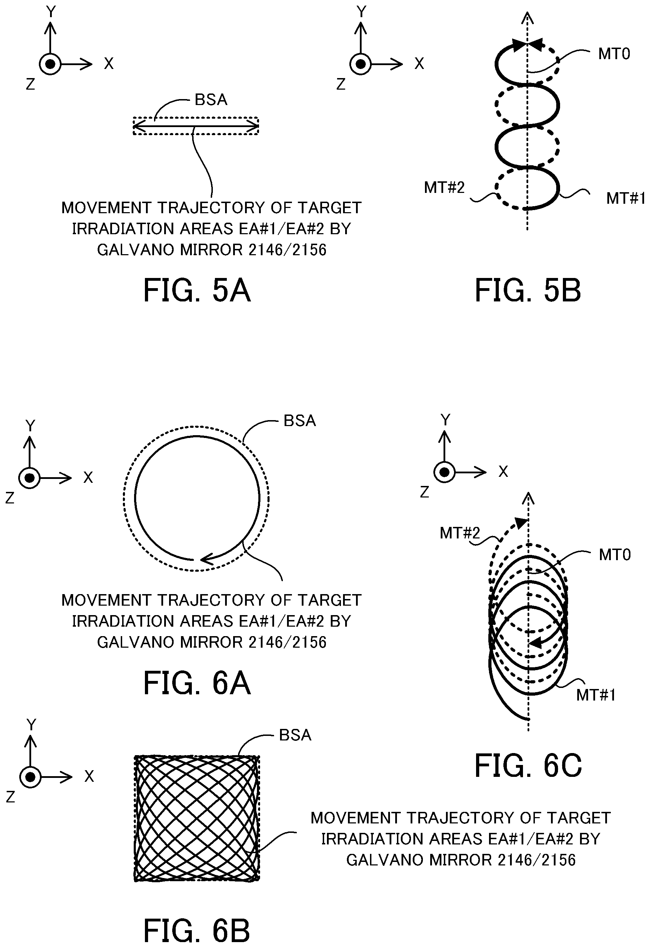

As one example, as illustrated in FIG. 5A, the Galvano mirror 2146 may deflect the processing light EL#1 so that the target irradiation area EA#1 moves along a single direction in the processing unit area BSA#1 under the assumption that the processing unit area BSA#1 is stationary (namely, does not move) on the build surface MS. Namely, the Galvano mirror 2146 may deflect the processing light EL#1 so that the target irradiation area EA#1 moves along a single direction in a coordinate system that is determined based on the processing unit area BSA#1. Especially, the Galvano mirror 2146 may deflect the processing light EL#1 so that the target irradiation area EA#1 reciprocates at least once (in some cases, reciprocates repeatedly and regularly (namely, periodically)) along a single direction under the assumption that the processing unit area BSA#1 is stationary (namely, does not move) on the build surface MS. In this case, a shape of the processing unit area BSA#1 in which the target irradiation area EA#1 moves may be a rectangular shape whose longitudinal direction is a movement direction of the target irradiation area EA# 1.

As another example, as illustrated in FIG. 6A and FIG. 6B, the Galvano mirror 2146 may deflect the processing light EL#1 so that the target irradiation area EA#1 moves along a plurality of directions in the processing unit area BSA#1 under the assumption that the processing unit area BSA#1 is stationary (namely, does not move) on the build surface MS. Namely, the Galvano mirror 2146 may deflect the processing light EL#1 so that the target irradiation area EA#1 moves along a plurality of directions in the coordinate system that is determined based on the processing unit area BSA#1. Especially, the Galvano mirror 2146 may deflect the processing light EL#1 so that the target irradiation area EA#1 reciprocates at least once (in some cases, reciprocates repeatedly and regularly (namely, periodically)) along each of the plurality of directions under the assumption that the processing unit area BSA#1 is stationary (namely, does not move) on the build surface MS. FIG. 6A illustrates an example in which the target irradiation area EA#1 reciprocates along each of the X-axis direction and the Y-axis direction in the processing unit area BSA#1 so that a movement trajectory of the target irradiation area EA#1 in the processing unit area BSA#1 is a circular shape. In this case, the shape of the processing unit area BSA#1 in which the target irradiation area EA#1 moves may be a circular shape . FIG. 6B illustrates an example in which the target irradiation area EA#1 reciprocates along each of the X-axis direction and the Y-axis direction in the processing unit area BSA#1 so that the movement trajectory of the target irradiation area EA# 1 in the processing unit area BSA#1 is a net-like shape. In this case, the shape of the processing unit area BSA#1 in which the target irradiation area EA#1 moves may be a rectangular shape.

The control apparatus 7 may move at least one of the processing head 21 and the stage 31 so that the processing unit area BSA#1 moves on the build surface MS in a period during which the target irradiation area EA#1 is moved in the processing unit area BSA#1 by using the Galvano mirror 2146. For example, in the example illustrated in FIG. 5A, the control apparatus 7 may move the processing unit area BSA#1 along a movement trajectory MT0 that intersects (alternatively, is orthogonal to, in some cases) the movement direction of the target irradiation area EA#1 in the processing unit area BSA#1. As a result, the target irradiation area EA#1 may move on the build surface MS along a movement trajectory MT#1 illustrated in FIG. 5B. Specifically, the target irradiation area EA#1 may move along the direction intersecting the movement trajectory MT0 while moving along movement trajectory MT0 of the processing unit area BSA#1. Namely, the target irradiation area EA#1 may move along the wave-shaped movement trajectory MT#1 that oscillates around the movement trajectory MT0. For example, in the example illustrated in FIG. 6A or FIG. 6B, the control apparatus 7 may move the processing unit area BSA#1 along the movement trajectory MT0 that extends along at least one of a direction that is along the movement direction of the target irradiation area EA#1 in the processing unit area BSA#1 and a direction that intersects (is orthogonal to in some cases) the movement direction of the target irradiation area EA#1 in the processing unit area BSA#1. Incidentally, FIG. 6C illustrates the movement trajectory MT#1 of the target irradiation area EA#1 on the build surface MS in a case where the processing unit area BSA#1 illustrated in FIG. 6A moves along the movement trajectory MT0 on the build surface MS.

Each of a size in the X-axis direction and a size in the Y-axis direction of the processing unit area BSA#1 may be several millimeters. However, the size of the processing unit area BSA#1 is not limited to several millimeters.

In a case where the build surface MS is irradiated with the processing light EL#1 in a unit of the processing unit area BSA#1, the Galvano mirror 2146 scans the processing unit area BSA#1 with the processing light EL#1. Therefore, there is a lower possibility that the amount of the energy transferred from the processing light EL#1 to the processing unit area BSA#1 varies in the processing unit area BSA#1, compared to a case where the build surface MS is irradiated with the processing light EL#1 without using the Galvano mirror 2146. Namely, it is possible to uniform the amount of the energy transferred from the processing light EL#1 to the processing unit area BSA#1. As a result, the processing system SYS can build the build object on the build surface MS with relatively high build accuracy.

However, the processing system SYS may not irradiate the build surface MS with the processing light EL#1 in a unit of the processing unit area BSA#1. The processing system SYS may irradiate the build surface MS with the processing light EL#1 without using the Galvano mirror 2146. In this case, the target irradiation area EA#1 may move on the build surface MS due to the movement of at least one of the processing head 21 and the stage 31.

Again in FIG. 4, the processing light EL#1 that has been reflected by the parallel plate 2142 enters the power meter 2143. The power meter 2143 is one specific example of an electrical component that is used to control the processing light EL#1. Specifically, the power meter 2143 is configured to detect the intensity of the processing light EL#1 that has entered the power meter 2143. For example, the power meter 2143 may include a light receiving element that detects the processing light EL#1 as light. Alternatively, the amount of the energy generated by the processing light EL#1 is larger as the intensity of the processing light EL#1 is higher. As a result, the amount of heat generated by the processing light EL#1 is larger. Therefore, the power meter 2143 may detect the intensity of the processing light EL#1 by detecting the processing light EL#1 as heat. In this case, the power meter 2143 may include a heat detection element that detects the heat of the processing light EL#1.

As described above, the processing light EL#1 that has been reflected by the parallel plate 2142 enters the power meter 2143. Therefore, the power meter 2143 detects the intensity of the processing light EL#1 that has been reflected by the parallel plate 2142. Since the parallel plate 2142 is positioned on the optical path of the processing light EL#1 between the light source 4#1 and the Galvano mirror 2146, the power meter 2143 may be considered to detect the intensity of the processing light EL#1 propagating in the optical path between the light source 4#1 and the Galvano mirror 2146. In this case, the power meter 2143 can stably detect the intensity of the processing light EL#1 without being affected by the deflection of the processing light EL#1 by the Galvano mirror 2146. However, the position of the power meter 2143 is not limited to the example illustrated in FIG. 4. For example, the power meter 2143 may detect the intensity of the processing light EL#1 propagating in the optical path between the Galvano mirror 2146 and the build surface MS. The power meter 2143 may detect the intensity of the processing light EL#1 propagating in the optical path in the Galvano mirror 2146.

A detected result by the power meter 2143 is output to the control apparatus 7. The control apparatus 7 may control (in other words, change) the intensity of the processing light EL#1 based on the detected result by the power meter 2143 (namely, the detected result of the intensity of the processing light EL#1). For example, the control apparatus 7 may control the intensity of the processing light EL#1 so that the intensity of the processing light EL#1 on the build surface MS becomes a desired intensity. In order to control the intensity of the processing light EL#1, the control apparatus 7 may control the light source 4#1 to change the intensity of the processing light EL#1 emitted from the light source 4#1 based on the detected result by the power meter 2143, for example. As a result, the processing system SYS can properly build the build object on the build surface MS by irradiating the build surface MS with the processing light EL#1 having an appropriate intensity. Incidentally, the control apparatus 7 that is configured to control (change) the intensity of the processing light EL#1 may be referred to as an intensity change apparatus.

Incidentally, an optical attenuator that is configured to actively change a degree of light attenuation may be positioned between the light source 4#1 and the parallel plate 2142. In this case, the control apparatus 7 may use the optical attenuator to change the intensity of the processing light EL#1 in addition to or instead of changing the intensity of the processing light EL#1 emitted from the light source 4#1.

As described above, the processing light EL#1 has an intensity that is capable of melting the build material M. Therefore, there is a possibility that the processing light EL#1 entering the power meter 2143 has an intensity that is capable of melting the build material M. However, if the processing light EL#1 having an intensity that is capable of melting the build material M enters the power meter 2143, there is a possibility that the power meter 2143 is damaged by the processing light EL#1. Therefore, the processing light EL#1 having an intensity that is not high enough to damage the power meter 2143 may enter the power meter 2143. In other words, the first optical system 214 may reduce the intensity of the processing light EL#1 entering the power meter 2143 so that the processing light EL#1 having an intensity that is not high enough to damage the power meter 2143 enters the power meter 2143.

For example, in order to reduce the intensity of the processing light EL#1 entering the power meter 2143, a reflectance of the parallel plate 2142 relative to the processing light EL#1 may be set to be an appropriate value. Specifically, the intensity of the processing light EL#1 entering the power meter 2143 is lower as the reflectance of the parallel plate 2142 relative to the processing light EL#1 is lower. Therefore, the reflectance of the parallel plate 2142 may be set to a value that is low enough to realize a state where the processing light EL#1 having an intensity that is not high enough to damage the power meter 2143 enters the power meter 2143. For example, the reflectance of the parallel plate 2142 may be lower than 10%. For example, the reflectance of the parallel plate 2142 may be lower than a few percent. As the parallel plate 2142 having such a low reflectance, bare glass may be used.

For example, in order to reduce the intensity of the processing light EL#1 entering the power meter 2143, the first optical system 214 may allow the processing light EL#1 to enter the power meter 2143 through a plurality of parallel plates 2142. Specifically, the processing light EL#1, which has been reflected multiple times by the plurality of parallel plates 2142, respectively, may enter the power meter 2143. In this case, the intensity of the processing light EL#1 reflected multiple times by the plurality of parallel plates 2142, respectively, is lower than the intensity of the processing light EL#1 reflected once by a single parallel plate 2142. Therefore, there is a higher possibility that the processing light EL#1 having an intensity that is not high enough to damage the power meter 2143 enters the power meter 2143.

A desired coating processing may be performed on a surface of the parallel plate 2142 (especially, at least one of an incident surface which the processing light EL#1 enters and a reflective surface that reflects the processing light EL#1). For example, an anti-reflection coating processing (AR: Anti Reflection Coating) may be performed on the surface of the parallel plate 2142.

The second optical system 215 includes a collimator lens 2151, a parallel plate 2152, a power meter 2153, and a Galvano scanner 2154. The Galvano scanner 2154 includes a focus control optical system 2155 and a Galvano mirror 2156. However, the second optical system 215 may not include at least one of the collimator lens 2151, the parallel plate 2152, the power meter 2153, and the Galvano scanner 2154. The Galvano scanner 2154 may not include at least one of the focus control optical system 2155 and the Galvano mirror 2156.

The processing light EL#2 emitted from the light source 4#2 enters the collimator lens 2151. The collimator lens 2151 converts the processing light EL#2 that has entered the collimator lens 2151 into collimated light. Incidentally, in a case where the processing light EL#2 emitted from the light source 4#2 is collimated light (namely, the processing light EL#2 that is the collimated light enters the second optical system 215), the second optical system 215 may not include the collimator lens 2151. Namely, an installation of the collimator lens 2151 may be omitted. Moreover, in a case where an optical fiber is interposed between the light source 4#2 and the collimator lens 2151 as the light transmitting member for transmitting the processing light EL#2, the collimator lens 2151 may be positioned so that a front focal point of the collimator lens 2151 is positioned near an exit end of the optical fiber, and the collimator lens 2151 may convert the processing light EL#2, which is emitted from the optical fiber as a divergent light beam, into the collimated light. The processing light EL#2 that has been converted to the collimated light by the collimator lens 2151 enters the parallel plate 2152. A part of the processing light EL#2 that has entered the parallel plate 2152 passes through the parallel plate 2152. Another part of the processing light EL#2 that has entered the parallel plate 2152 is reflected by the parallel plate 2152.

The processing light EL#2 that has passed through the parallel plate 2152 enters the Galvano scanner 2154. Specifically, the processing light EL#2 that has passed through the parallel plate 2152 enters the focus control optical system 2155 of the Galvano scanner 2154.

The focus control optical system 2155 is an optical component that is configured to change a condensed position CP of the processing light EL#2 (in the below-described description, it is referred to as a "condensed position CP#2"). Therefore, the focus control optical system 2155 may be referred to as a condensed position change member. Specifically, the focus control optical system 2155 is configured to change the condensed position CP#2 of the processing light EL#2 along an irradiation direction of the processing light EL#2 with which the build surface MS is irradiated. In the example illustrated in FIG. 4, the irradiation direction of the processing light EL#2 with which the build surface MS is irradiated is a direction whose main component is the Z-axis direction. In this case, the focus control optical system 2155 is configured to change the condensed position CP#2 of the processing light EL#2 along the Z-axis direction. Moreover, since the irradiation optical system 211 irradiates the build surface MS with the processing light EL from a position above the workpiece W, the irradiation direction of the processing light EL#2 is a direction that intersects the build surface MS (for example, the surface of the workpiece W or the structural layer SL). Therefore, the focus control optical system 2155 may be considered to be configured to change the condensed position CP#2 of the processing light EL#2 along the direction that intersects the build surface MS (for example, the surface of the workpiece W or the structural layer SL).

The focus control optical system 2155 may change the condensed position CP#2 of the processing light EL#2 so that the condensed position CP#2 of the processing light EL#2 is positioned on the build surface MS. Namely, the focus control optical system 2155 may change the condensed position CP#2 of the processing light EL#2 so that the build surface MS is irradiated with the processing light EL#2 in a focused state. In other words, the focus control optical system 2155 may change the condensed position CP#2 of the processing light EL#2 so that the processing light EL#2 in the focused state builds the build object. Alternatively, the focus control optical system 2155 may change the condensed position CP#2 of the processing light EL#2 so that the condensed position CP#2 of the processing light EL#2 is positioned at a position that is away from the build surface MS along the Z axis direction. Namely, the focus control optical system 2155 may change the condensed position CP#2 of the processing light EL#2 so that the build surface MS is irradiated with the processing light EL#2 in a defocused state. In other words, the focus control optical system 2155 may change the condensed position CP#2 of the processing light EL#2 so that the processing light EL#2 in the defocused state builds the build object.

An amount of energy transferred per unit time from the processing light EL#2 in the focused state to the build surface MS is different from an amount of energy transferred per unit time from the processing light EL#2 in the defocused state to the build surface MS. Furthermore, the amount of the energy transferred per unit time from the processing light EL#2 in the defocused state to the build surface MS varies depending on a defocused amount of the processing light EL#2. Therefore, the focus control optical system 2155 may change the condensed position CP#2 of the processing light L#2 so that the amount of the energy transferred per unit time from the processing light EL#2 to the build surface MS becomes a desired amount of energy. The focus control optical system 2155 may change the condensed position CP#2 of the processing light L#2 so that the defocused amount of the processing light EL#2 becomes a desired defocused amount.

Incidentally, the irradiation direction of the processing light EL#2 may mean an irradiation direction of the processing light EL#2 emitted from the third optical system 216. In this case, the irradiation direction of the processing light EL#2 may be the same as a direction along an optical axis of the third optical system 216. The irradiation direction of the processing light EL#2 may be the same as a direction along an optical axis of a terminal optical member, which is positioned at a position closest to the build surface MS, among optical members of the third optical system 216. The terminal optical member may be the fθ lens 2162 described below. Moreover, in a case where the below-described fθ lens 2162 includes a plurality of optical members, the terminal optical member may be an optical member, which is positioned at a position closest to the build surface MS, among the plurality of optical members of the fθ lens 2162.

The focus control optical system 2155 may include a plurality of lenses that are aligned along the irradiation direction of the processing light EL#2, for example. In this case, the focus control optical system 2155 may change the condensed position CP of the processing light EL#2 by moving at least one of the plurality of lenses along its optical axis direction.

Wen the focus control optical system 2155 changes the condensed position CP#2 of the processing light EL#2, a positional relationship between the condensed position CP#2 of the processing light EL#2 and the build surface MS changes. Especially, a positional relationship between the condensed position CP#2 of the processing light EL#2 and the build surface MS in the irradiation direction of the processing light EL#2 changes. Therefore, the focus control optical system 2155 may be considered to change the positional relationship between the condensed position CP#2 of the processing light EL#2 and the build surface MS by changing the condensed position CP#2 of the processing light EL#2 by the focus control optical system 2155.

Incidentally, as described above, the Galvano scanner 2154 may not include the focus control optical system 2155. Even in this case, when the positional relationship between the irradiation optical system 211 and the build surface MS in the irradiation direction of the processing light EL#2 changes, the positional relationship between the condensed position CP#2 of the processing light EL#2 and the build surface MS in the irradiation direction of the processing light EL#2 changes. Therefore, even in a case where the Galvano scanner 2154 does not include the focus control optical system 2155, the processing system SYS can change the positional relationship between the condensed position CP#2 of the processing light EL#2 and the build surface MS in the irradiation direction of the processing light EL#2. For example, the processing system SYS may change the positional relationship between the condensed position CP#2 of the processing light EL#2 and the build surface MS in the irradiation direction of the processing light EL#2 by using the head driving system 22 to move the processing head 21 along the irradiation direction of the processing light EL#2. For example, the processing system SYS may change the positional relationship between the condensed position CP#2 of the processing light EL#2 and the build surface MS in the irradiation direction of the processing light EL#2 by using the stage driving system 32 to move the stage 31 along the irradiation direction of the processing light EL#2.

The processing light EL#2 that has been emitted from the focus control optical system 2155 enters the Galvano mirror 2156. The Galvano mirror 2156 changes an exit direction of the processing light EL#2 emitted from the Galvano mirror 2156 by deflecting the processing light EL#2. Therefore, the Galvano mirror 2156 may be referred to as a deflection member. When the exit direction of the processing light EL#2 emitted from the Galvano mirror 2156 is changed, a position from which the processing light EL#2 is emitted from the processing head 21 is changed. When the position from which the processing light EL#2 is emitted from the processing head 21 is changed, the target irradiation area EA#2 that is irradiated with the processing light EL#2 on the build surface MS moves. Namely, an irradiation position that is irradiated with the processing light EL#2 on the build surface MS moves. Specifically, the target irradiation area EA#2 moves along the build surface MS. The target irradiation area EA#2 moves along a direction that is along the build surface MS. Since the irradiation direction of the processing light EL#2 is the direction intersecting the build surface MS as described above, the target irradiation area EA#2 moves along a direction intersecting the irradiation direction of the processing light EL#2. The irradiation position of the processing light EL#2 is changed along the build surface MS. The irradiation position of the processing light EL#2 is changed along the direction that is along the build surface MS. The irradiation position of the processing light EL#2 is changed along the direction that intersects the irradiation direction of the processing light EL#2. Thus, the target irradiation area EA#2 may be an area that is stationary with respect to the irradiation optical system 211 at a certain timing.

The Galvano mirror 2156 includes an X scanning mirror 2156MX, an X scanning motor 2156AX, a Y scanning mirror 2156MY, and a Y scanning motor 2156AY, for example. The processing light EL#2 that has been emitted from the focus control optical system 2155 enters the X scanning mirror 2156MX. The X scanning mirror 2156MX reflects the processing light EL#2 that has entered the X scanning mirror 2156MX toward the Y scanning mirror 2156MY. The Y scanning mirror 2156MY reflects the processing light EL#2 that has entered the Y scanning mirror 2156MY reflects the processing light EL#2 toward the third optical system 216. Incidentally, each of the X scanning mirror 2156MX and the Y scanning mirror 2156MY may be referred to as a Galvano mirror.

The X scanning motor 2156AX is one specific example of an electrical component that is used to control the processing light EL#2. Specifically, the X scanning motor 2156AX is a driving system that is configured to electrically generate a force. The X scanning motor 2156AX swings or rotates the X scanning mirror 2156MX around a rotational axis along the Y-axis by using the electrically generated force. As a result, an angle of the X scanning mirror 2156MX relative to an optical path of the processing light EL#2 entering the X scanning mirror 2156MX is changed. In this case, the build surface MS is scanned with the processing light EL#2 along the X-axis direction due to the swing or the rotation of the X scanning mirror 2156MX. Namely, the target irradiation area EA#2 moves along the X-axis direction on the build surface MS.

The Y scanning motor 2156AY is one specific example of an electrical component that is used to control the processing light EL#2. Specifically, the Y scanning motor 2156AY is a driving system that is configured to electrically generate a force. The Y scanning motor 2156AY swings or rotates the Y scanning mirror 2156MY around a rotational axis along the X-axis by using the electrically generated force. As a result, an angle of the Y scanning mirror 2156MY relative to an optical path of the processing light EL#2 entering the Y scanning mirror 2156MY is changed. In this case, the build surface MS is scanned with the processing light EL#2 along the Y-axis direction due to the swing or the rotation of the Y scanning mirror 2156MY. Namely, the target irradiation area EA#2 moves along the Y-axis direction on the build surface MS.

In the present example embodiment, a virtual area in which the Galvano mirror 2156 moves the target irradiation area EA#2 on the build surface MS is referred to as a processing unit area BSA (especially, the processing unit area BSA#2). In this case, the target irradiation area EA#2 may be considered to move on a surface (a first surface) of the build surface MS that overlaps with the processing unit area BSA#2. Specifically, the virtual area in which the Galvano mirror 2156 moves the target irradiation area EA#2 on the build surface MS in a state where the positional relationship between the irradiation optical system 211 and the build surface MS is fixed (namely, is not changed) is referred to as the processing unit area BSA (especially, the processing unit area BSA#2). The processing unit area BSA#2 indicates a virtual area (in other words, a range) in which the processing head 21 actually performs the additive manufacturing by using the processing light EL#2 in a state where the positional relationship between the irradiation optical system 211 and the build surface MS is fixed. The processing unit area BSA#2 indicates a virtual area (in other words, a range) that is scanned by the processing head 21 with the processing light EL#2 in a state where the positional relationship between the irradiation optical system 211 and the build surface MS is fixed. The processing unit area BSA#2 indicates an area (in other words, a range) in which the target irradiation area EA#2 actually moves in a state where the positional relationship between the irradiation optical system 211 and the build surface MS is fixed. Therefore, the processing unit area BSA#2 may be regarded as a virtual area that is determined based on the processing head 21 (especially, the irradiation optical system 211). Namely, the processing unit area BSA#2 may be regarded as a virtual area positioned at a position that is determined on the build surface MS based on the processing head 21 (especially, the irradiation optical system 211). Incidentally, a maximum area in which the Galvano mirror 2156 is allowed to move the target irradiation area EA#2 on the build surface MS in a state where the positional relationship between the irradiation optical system 211 and the build surface MS is fixed may be referred to as the processing unit area BSA#2.

Here, as described above, when at least one of the processing head 21 and the stage 31 moves, the positional relationship between the processing head 21 and the build surface MS changes. Therefore, a positional relationship between the Galvano mirror 2156 of the processing head 21 and the build surface MS changes. As a result, the processing unit area BSA#2 (namely, the processing unit area BSA#2 in which the Galvano mirror 2156 moves the target irradiation area EA#2 on the build surface MS), which is determined based on the processing head 21, moves on the build surface MS. Therefore, in the present example embodiment, an operation for moving at least one of the processing head 21 and the stage 31 may be considered to be equivalent to an operation for moving the processing unit area BSA#2 relative to the build surface MS.

A characteristic (for example, the shape, a movement aspect, and so on) of the processing unit area BSA#2 may be the same as a characteristic of the above-described processing unit area BSA#1. A movement aspect (for example, a movement trajectory and so on) of the target irradiation area EA#2 in the processing unit area BSA#2 may be the same as a movement aspect of the target irradiation area EA#1 in the above-described processing unit area BSA#1. Therefore, a detailed description of the characteristic of the processing unit area BSA#2 and the movement aspect (for example, the movement trajectory and so on) of the target irradiation area EA#2 in the processing unit area BSA#2 is omitted, however, one example thereof will be briefly described below. As illustrated in FIG. 5A, the Galvano mirror 2156 may deflect the processing light EL#2 so that the target irradiation area EA#2 moves along a single direction in the processing unit area BSA#2 under the assumption that the processing unit area BSA#2 is stationary (namely, does not move) on the build surface MS. The processing unit area BSA#2 may move on the build surface MS along the movement trajectory MT0, thereby, the target irradiation area EA#2 may move on the build surface MS along a movement trajectory MT#2 illustrated in FIG. 5B (for example, a wave-shaped movement trajectory MT#2 that oscillates around the movement trajectory MT0. As illustrated in FIG. 6A and FIG. 6B, the Galvano mirror 2156 may deflect the processing light EL#2 so that the target irradiation area EA#2 moves along a plurality of directions in the processing unit area BSA#2 under the assumption that the processing unit area BSA#2 is stationary (namely, does not move) on the build surface MS.

Typically, the processing unit area BSA#1 coincides with the processing unit area BSA#2. Namely, the processing unit area BSA#1 is the same as the processing unit area BSA#2. Therefore, the Galvano mirror 2156 may be considered to deflect the processing light EL#2 so that the target irradiation area EA#2 moves in the processing unit area BSA#1. The Galvano mirror 2146 may be considered to deflect the processing light EL#1 so that the target irradiation area EA#1 moves in the processing unit area BSA#2. However, the processing unit area BSA#1 and the processing unit area BSA#2 may be partially different from each other.

However, the processing system SYS may not irradiate the build surface MS with the processing light EL#2 in a unit of the processing unit area BSA#2. The processing system SYS may irradiate the build surface MS with the processing light EL#2 without using the Galvano mirror 2156. In this case, the target irradiation area EA#2 may move on the build surface MS due to the movement of at least one of the processing head 21 and the stage 31.

Again in FIG. 4, the processing light EL#2 that has been reflected by the parallel plate 2152 enters the power meter 2153. The power meter 2153 is one specific example of an electrical component that is used to control the processing light EL#2. Specifically, the power meter 2153 is configured to detect the intensity of the processing light EL#2 that has entered the power meter 2153. For example, the power meter 2153 may include a light receiving element that detects the processing light EL#2 as light. Alternatively, the amount of the energy generated by the processing light EL#2 is larger as the intensity of the processing light EL#2 is higher. As a result, the amount of heat generated by the processing light EL#2 is larger. Therefore, the power meter 2153 may detect the intensity of the processing light EL#2 by detecting the processing light EL#2 as heat. In this case, the power meter 2153 may include a heat detection element that detects the heat of the processing light EL#2.

As described above, the processing light EL#2 that has been reflected by the parallel plate 2152 enters the power meter 2153. Therefore, the power meter 2153 detects the intensity of the processing light EL#2 that has been reflected by the parallel plate 2152. Since the parallel plate 2152 is positioned on the optical path of the processing light EL#2 between the light source 4#2 and the Galvano mirror 2156, the power meter 2153 may be considered to detect the intensity of the processing light EL#2 propagating in the optical path between the light source 4#2 and the Galvano mirror 2156. In this case, the power meter 2153 can stably detect the intensity of the processing light EL#2 without being affected by the deflection of the processing light EL#2 by the Galvano mirror 2156. However, the position of the power meter 2153 is not limited to the example illustrated in FIG. 4. For example, the power meter 2153 may detect the intensity of the processing light EL#2 propagating in the optical path between the Galvano mirror 2156 and the build surface MS. The power meter 2153 may detect the intensity of the processing light EL#2 propagating in the optical path in the Galvano mirror 2156.

A detected result by the power meter 2153 is output to the control apparatus 7. The control apparatus 7 may control (in other words, change) the intensity of the processing light EL#2 based on the detected result by the power meter 2153 (namely, the detected result of the intensity of the processing light EL#2). For example, the control apparatus 7 may control the intensity of the processing light EL#2 so that the intensity of the processing light EL#2 on the build surface MS becomes a desired intensity. In order to control the intensity of the processing light EL#2, the control apparatus 7 may control the light source 4#2 to change the intensity of the processing light EL#2 emitted from the light source 4#2 based on the detected result by the power meter 2153, for example. As a result, the processing system SYS can properly build the build object on the build surface MS by irradiating the build surface MS with the processing light EL#2 having an appropriate intensity. Incidentally, the control apparatus 7 that is configured to control (change) the intensity of the processing light EL#2 may be referred to as an intensity change apparatus.

Incidentally, an optical attenuator that is configured to actively change a degree of light attenuation may be positioned between the light source 4#2 and the parallel plate 2152. In this case, the control apparatus 7 may use the optical attenuator to change the intensity of the processing light EL#2 in addition to or instead of changing the intensity of the processing light EL#2 emitted from the light source 4#2.

As described above, the processing light EL#2 has an intensity that is capable of melting the build material M. Therefore, there is a possibility that the processing light EL#2 entering the power meter 2153 has an intensity that is capable of melting the build material M. However, if the processing light EL#2 having an intensity that is capable of melting the build material M enters the power meter 2153, there is a possibility that the power meter 2153 is damaged by the processing light EL#2. Therefore, the processing light EL#2 having an intensity that is not high enough to damage the power meter 2153 may enter the power meter 2153. In other words, the second optical system 215 may reduce the intensity of the processing light EL#2 entering the power meter 2153 so that the processing light EL#2 having an intensity that is not high enough to damage the power meter 2153 enters the power meter 2153.

For example, in order to reduce the intensity of the processing light EL#2 entering the power meter 2153, a reflectance of the parallel plate 2152 relative to the processing light EL#2 may be set to be an appropriate value. Specifically, the intensity of the processing light EL#2 entering the power meter 2153 is lower as the reflectance of the parallel plate 2152 relative to the processing light EL#2 is lower. Therefore, the reflectance of the parallel plate 2152 may be set to a value that is low enough to realize a state where the processing light EL#2 having an intensity that is not high enough to damage the power meter 2153 enters the power meter 2153. For example, the reflectance of the parallel plate 2152 may be lower than 10%. For example, the reflectance of the parallel plate 2152 may be lower than a few percent. As the parallel plate 2152 having such a low reflectance, bare glass may be used.

For example, in order to reduce the intensity of the processing light EL#2 entering the power meter 2153, the second optical system 215 may allow the processing light EL#2 to enter the power meter 2153 through a plurality of parallel plates 2152. Specifically, the processing light EL#2, which has been reflected multiple times by the plurality of parallel plates 2152, respectively, may enter the power meter 2153. In this case, the intensity of the processing light EL#2 reflected multiple times by the plurality of parallel plates 2152, respectively, is lower than the intensity of the processing light EL#2 reflected once by a single parallel plate 2152. Therefore, there is a higher possibility that the processing light EL#2 having an intensity that is not high enough to damage the power meter 2153 enters the power meter 2153.

A desired coating processing may be performed on a surface of the parallel plate 2152 (especially, at least one of an incident surface which the processing light EL#2 enters and a reflective surface that reflects the processing light EL#2). For example, an anti-reflection coating processing (AR: Anti Reflection Coating) may be performed on the surface of the parallel plate 2152.

The third optical system 216 includes a prism mirror 2161 and the fθ lens 2162.

Each of the processing light EL#1 emitted from the first optical system 214 and the processing light EL#2 emitted from the second optical system 215 enters the prism mirror 2161. The prism mirror 2161 reflects each of the processing lights EL#1 and EL#2 toward the fθ lens 2162. The prism mirror 2161 reflects, toward the same direction (specifically, toward the fθ lens 2162), the processing lights EL#1 and EL#2 that enters the prism mirror 2161 from different directions, respectively.

Note that in a case where each of the processing light EL#1 emitted from the first optical system 214 and the processing light EL#2 emitted from the second optical system 215 can directly enter the fθ lens 2162, the third optical system 216 may not include the prism mirror 2161.

The fθ lens 2162 is an optical system for emitting each of the processing lights EL#1 and EL#2, which have been reflected by the prism mirror 2161, toward the build surface MS. Namely, the fθ lens 2162 is an optical system for irradiating the build surface MS with each of the processing lights EL#1 and EL#2 that have been reflected by the prism mirror 2161. As a result, the build surface MS is irradiated with the processing lights EL#1 and EL#2 that have passed through the fθ lens 2162. Therefore, the fθ lens 2162 may be referred to as an objective optical member.

The fθ lens 2162 may be an optical element that is configured to condense each of the processing lights EL#1 and EL#2 on a condensed plane. In this case, the fθ lens 2162 may be referred to as a condensing optical system. The condensed plane of the fθ lens 2162 may be set on the build surface MS, for example. In this case, the third optical system 216 may be considered to include a condensing optical system whose projection characteristic is fθ. However, the third optical system 216 may include a condensing optical system whose projection characteristic is different from fθ. For example, the third optical system 216 may include a condensing optical system whose projection characteristic is f×tanθ. For example, the third optical system 216 may include a condensing optical system whose projection characteristic is f×sinθ.

An optical axis AX of the fθ lens 2162 is an axis along the Z-axis. Therefore, the fθ lens 2162 emits each of the processing lights EL#1 and EL#2 along the Z-axis direction. In this case, the irradiation direction of the processing light EL#1 and the irradiation direction of the processing light EL#2 may be the same direction. Both of the irradiation direction of the processing light EL#1 and the irradiation direction of the processing light EL#2 may be the Z-axis direction. Both of the irradiation direction of the processing light EL#1 and the irradiation direction of the processing light EL#2 may be directions along the optical axis AX of the fθ lens 2162. However, the irradiation direction of the processing light EL#1 and the irradiation direction of the processing light EL#2 may not be the same direction. The irradiation direction of the processing light EL#1 and the irradiation direction of the processing light EL#2 may be directions that are different from each other. Incidentally, the fθ lens 2162 may include a single lens or may include a plurality of lenses. The fθ lens 2162 may include a reflective mirror, and may include a diffractive optical element.

The irradiation optical system 211 described above may be contained in a containing space 2171 in a housing unit 217. Next, with reference to FIG. 7, the housing unit 217 in which the irradiation optical system 211 will be described. FIG. 7 is a perspective view that illustrates the housing unit 217 in which the irradiation optical system 211 is contained. Incidentally, the housing unit 217 illustrated in FIG. 7 is one example, and a configuration of the housing unit 217 is not limited to the example illustrated in FIG. 7.

As illustrated in FIG. 7, the housing unit 217 includes a housing 21741, a housing 21751, a housing 21743, a housing 21753, a housing 21754, a housing 21755, a housing 21761, and a housing 21762. The housing 21741 is a housing for containing the collimator lens 2141 therein. The housing 21751 is a housing for containing the collimator lens 2151 therein. The housing 21743 is a housing for containing the parallel plate 2142 and the power meter 2143 therein. The housing 21753 is a housing for containing the parallel plate 2152 and the power meter 2153 therein. The housing 21745 is a housing for containing the focus control optical system 2145 therein. The housing 21755 is a housing for containing the focus control optical system 2155 therein. The housing 21761 is a housing for containing the Galvano mirror 2146, the Galvano mirror 2156, and the prism mirror 2161 therein. The housing 21762 is a housing for containing the fθ lens 2162 therein.

The housing 21741, the housing 21751, the housing 21743, the housing 21753, the housing 21745, the housing 21755, the housing 21761, and the housing 21762 may be connected. For example, in the example illustrated in FIG. 7, the housing 21741 is connected to the housing 21743, the housing 21751 is connected to the housing 21753, the housing 21743 is connected to the housing 21745, the housing 21753 is connected to the housing 21755, the housings 21745 and 21755 are connected to the housing 21761, and the housing 21761 is connected to the housing 21762. In this case, two housings connected to each other may be connected so that they are separable from each other. Alternatively, two housings connected to each other may be connected so that they cannot be separated from each other. Two housings connected to each other may be connected by using a fastening member such as a screw.

The housing 21751, the housing 21743, the housing 21753, the housing 21745, the housing 21755, the housing 21761, and the housing 21762 may be aligned along the Z-axis direction (namely, the irradiation direction of the processing lights EL#1 and EL#2, and the direction of the optical axis AX of the fθ lens 2162). For example, in the example illustrated in FIG. 7, the housing 21741 and the housing 21743 are aligned along the Z-axis direction, the housing 21751 and the housing 21753 are aligned along the Z-axis direction, the housing 21743 and the housing 21745 are aligned along the Z-axis direction, the housing 21753 and the housing 21755 are aligned along the Z-axis direction, the housings 21745 and 21755 and the housing 21761 are aligned along the Z-axis direction, and the housing 21761 and the housing 21762 are aligned along the Z-axis direction. In this case, a size of the housing unit 217 is reducible in a direction that intersects the Z-axis direction. Namely, a size of the irradiation optical system 211 is reducible in the direction that intersects the Z-axis direction.

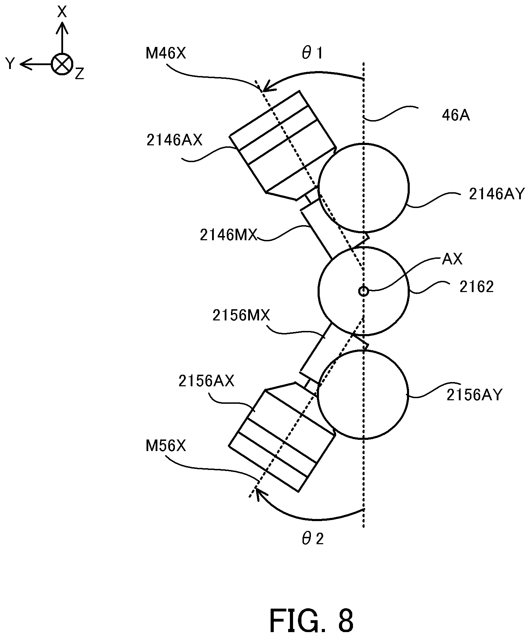

In order to reduce the size of the irradiation optical system 211 in the direction that intersects the Z-axis direction, a positional relationship among the X scanning motors 2146AX and 2156AX and the Y scanning motors 2146AY and 2156AY may be set. For example, as illustrated in FIG. 8 that is a bottom view illustrating the positional relationship among the X scanning motors 2146AX and 2156AX and the Y scanning motors 2146AY and 2156AY, the size of the irradiation optical system 211 in the direction that intersects the Z-axis direction (in the example illustrated in FIG. 8, the X-axis direction) is smaller as an angle θ1 between a rotational axis (namely, a motor axis) M46X of the X scanning motor 2146AX, which intersects the Z-axis direction, and an axis 46A that connects the two Y scanning motors 2146AY and 2156AY and that passes through the optical axis AX of the fθ lens 2162 is larger. Similarly, the size of the irradiation optical system 211 in the direction that intersects the Z-axis direction (in the example illustrated in FIG. 8, the X-axis direction) is smaller as an angle θ2 between a rotational axis (namely, a motor axis) M56X of the X scanning motor 2156AX, which intersects the Z-axis direction, and the axis 46A is larger. Therefore, the angles θ1 and θ2 may be set so that the size of the irradiation optical system 211 in the direction that intersects the Z-axis direction (in the example illustrated in FIG. 8, the X-axis direction) becomes a desired size. As one example, each of the angles θ1 and θ2 may be set to be equal to or larger than 30 degree, for example. As a result, the size of the irradiation optical system 211 in the direction that intersects the Z-axis direction (in the example illustrated in FIG. 8, the X-axis direction) is smaller, compared to a case where at least one of the angles θ1 and θ2 is smaller than 30 degree.

Again in FIG. 7, the housing unit 217 may be contained in the head housing 23 for containing the processing head 21. Namely, the irradiation optical system 211 may be contained in the head housing 23 in a state where the irradiation optical system 211 is contained in the housing unit 217. For example, in the example illustrated in FIG. 7, the head housing 23 includes: a plate-shaped rear wall member 232 along the XZ plane; and a pair of side wall members 233 that protrude from an end at the +X-side and an end at the -X-side end of the rear wall member 232 toward the -Y-axis direction, respectively, and that are along the YZ plane. In this case, a space surrounded by the rear wall member 232 and the pair of side wall members 233 is the containing space 231 for containing the processing head 21. The housing unit 217 may be contained in the containing space 231 surrounded by the rear wall member 232 and the pair of side wall members 233.

As described above, the head housing 23 may serve as the support member that supports the processing head 21. In this case, each of the rear wall member 232 and the pair of side wall members 233 may also serve as a support member that supports the processing head 21 (especially, the irradiation optical system 211). Each of the rear wall member 232 and the pair of side wall members 233 may also be adjacent to the processing head 21 along a direction that intersects the Z-axis direction (for example, a direction along the XY plane).

As illustrated in FIG. 7, the housing unit 217 may be contained in the head housing 23 by using an alignment member 2170 for aligning the housing unit 217 with the head housing 23. The alignment member 2170 may be a member for aligning the housing unit 217 with a reference coordinate of the head driving system 22 to which the head housing 23 is attached. As a result, the housing unit 217 (especially, the irradiation optical system 211 contained in the housing unit 217) is contained in an appropriate position in the housing unit 217. As a result, a burden of aligning the irradiation optical system 211 is reducible.

Incidentally, in FIG. 7, the material nozzle 212 is omitted for the simplicity of the drawing. However, the material nozzle 212 may be attached to a position that is fixed to the irradiation optical system 211. Namely, the material nozzle 212 may be attached to a position that is fixe to the housing unit 217 that contains the irradiation optical system 211. For example, the material nozzle 212 may be attached to the alignment member 2170. For example, the material nozzle 212 may be attached to the housing unit 217. For example, the material nozzle 212 may be attached to the head housing 23.

As can be seen from the exterior appearance of the processing system SYS illustrated in FIG. 1, a general machine tool (for example, a NC machine tool) may be used to manufacture the processing system SYS. In this case, the head housing 23 may be attached to a main spindle of the machine tool as a tool (namely, as an end mill). Alternatively, the head housing 23 may be attached to a position that is secured by detaching the main spindle of the machine tool. In both cases, the head housing 23 (namely, the processing head 21) is attachable to the general machine tool. In this case, in a case where the size of the head housing 23 is reduced by aligning the housings 21751 to 21762 in the Z-axis direction as described above, it is even easier to attach the head housing 23 (namely, the processing head 21) to the general machine tool.

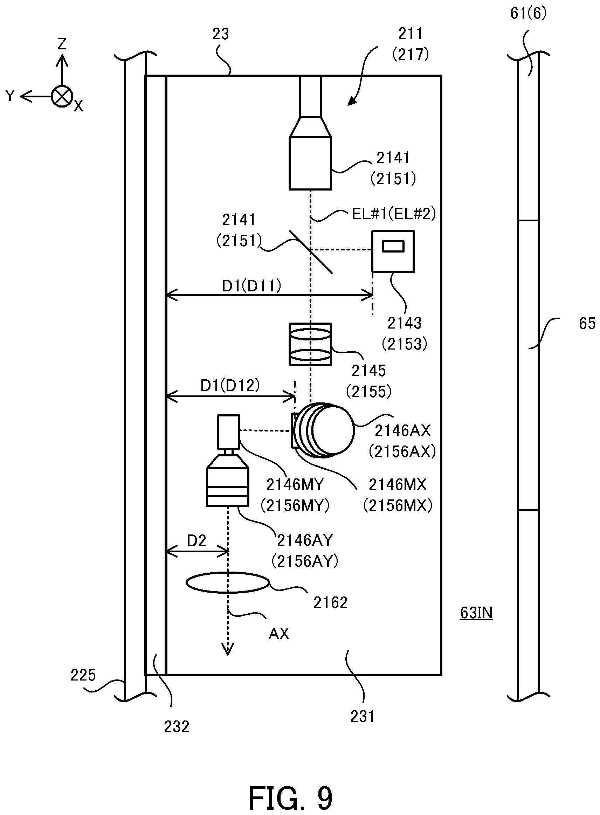

The irradiation optical system 211 may be contained in the head housing 23 so that the irradiation optical system 211 is easily maintained. Namely, the irradiation optical system 211 may be contained in the housing unit 217 so that the irradiation optical system 211 is easily maintained. In other words, the housing unit 217, in which the irradiation optical system 211 is housed so that the irradiation optical system 211 is easily maintained, may be contained in the head housing 23. One example of the irradiation optical system 211 contained in the head housing 23 so that the irradiation optical system 211 is easily maintained is illustrated in FIG. 9. As illustrated in FIG. 9, the irradiation optical system 211 may be contained in the head housing 23 so that the electrical component, which has a higher possibility of needing to be maintained, is positioned at a front side in the head housing 23. Note that at least one of the power meter 2143, the power meter 2153, the X scanning motor 2146AX, the X scanning motor 2156AX, the Y scanning motor 2146AY, and the Y scanning motor 2146AY is one specific example of the electrical component as described above.

Specifically, since the processing head 21 is positioned in the chamber space 63IN in which the additive manufacturing is performed as described above, the head housing 23 that contains the processing head 21 is also positioned in the chamber space 63IN. A door 65 that is allowed to be opened and closed may be formed in the wall member 61 of the housing 6 forming the chamber space 63IN to maintain the irradiation optical system 211. In this case, as illustrated in FIG. 9, the irradiation optical system 211 may be contained in the head housing 23 so that an operator who maintains the irradiation optical system 211 can easily access the irradiation optical system 211 through the door 65 from an outside of the housing 6. As one example, as illustrated in FIG. 9, the head housing 23 may be positioned so that the chamber space 63IN is positioned on an opposite side of the rear wall member 232 of the head housing 23 (in the example illustrated in FIG. 9, at the -Y side) with respect to the processing head 21 (especially, the irradiation optical system 211). Furthermore, the door 65 may be positioned at a position that is away from the processing head 21 (especially, the irradiation optical system 211) toward the chamber space 63IN (in the example illustrated in FIG. 9, the -Y side). In this case, the electrical component may be positioned at a position that is closer to the door 65 than to the rear wall member 232. For example, the irradiation optical system 211 may be contained in the head housing 23 so that a distance D1 between the electrical component and the rear wall member 232 in the direction intersecting the optical axis AX of the fθ lens 2162 (in the example illustrated in FIG. 9, the direction intersecting the Z-axis, and it is the Y-axis) is longer than a distance D2 between the optical axis AX and the rear wall member 232 in the direction intersecting the optical axis AX of the fθ lens 2162. In the example illustrated in FIG. 9, the power meters 2143 and 2153 are positioned in the head housing 23 so that a distance D11 between each of the power meters 2143 and 2153 and the rear wall member 232 is longer than the distance D2 between the optical axis AX and the rear wall member 232. Furthermore, in the example illustrated in FIG. 9, the X scanning motors 2146AX and 2156AX are positioned in the head housing 23 so that a distance D12 between each of the X scanning motors 2146AX and 2156AX and the rear wall member 232 is longer than the distance D2 between the optical axis AX and the rear wall member 232. As a result, the electrical component, which has a higher possibility of needing to be maintained, is positioned at a position that is closer to the door 65, compared to a case where the distance D1 is shorter than the distance D2. As a result, the electrical component is maintained more easily.

The processing system SYS may cool at least a part of the irradiation optical system 211 contained in the containing space 2171. Namely, the processing system SYS may cool the optical member included in the irradiation optical system 211. As a result, a temperature of the irradiation optical system 211 is kept being an appropriate temperature even in a case where the irradiation optical system 211 is heated due to the processing light EL that passes through the irradiation optical system 211. For example, the processing system SYS may cool at least one of the collimator lens 2141, the parallel plate 2142, the power meter 2143, and the Galvano scanner 2144. For example, the processing system SYS may cool at least one of the collimator lens 2151, the parallel plate 2152, the power meter 2153, and the Galvano scanner 2154. For example, the processing system SYS may cool at least one of the prism mirror 2161 and the fθ lens 2162. In the below-described description, an example in which the processing system SYS cools the fθ lens 2162 will be described.

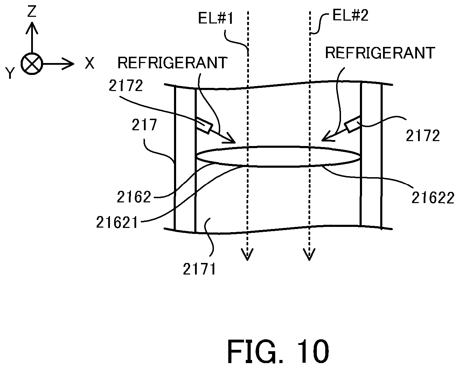

The processing system SYS may cool at least a part of the irradiation optical system 211 contained in the containing space 2171 by using gas as a refrigerant. For example, the processing system SYS may cool at least a part of the irradiation optical system 211 contained in the containing space 2171 by using a liquid as a refrigerant. In this case, as illustrated in FIG. 10, a refrigerant supply nozzle 2172 that supplies the refrigerant to at least a part of the irradiation optical system 211 (in the example illustrated in FIG. 10, at least a part of the fθ lens 2162) may be formed in the housing unit 217.

Incidentally, in the example illustrated in FIG. 10, the refrigerant supply nozzle 2172 is directed obliquely downwardly so that a supply direction of the refrigerant by the refrigerant supply nozzle 2172 is directed toward a position through which the processing lights EL#1 and EL#2 pass in the fθ lens 2162. However, the supply direction of the refrigerant by the refrigerant supply nozzle 2172 is not limited to an oblique downward direction. The refrigerant is not limited to the gas, but may be the liquid, for example.

As described above, the fθ lens 2162 irradiates the build surface MS with each of the processing lights EL#1 and EL#2. Here, in a case where the characteristic of the processing light EL#1 is different from the characteristic of the processing light EL#2, there is a possibility that a heating aspect of the first part 21621, which is irradiated with the processing light EL#1, of the fθ lens 2162 by the processing light EL#1 is different from a heating aspect of the second part 21622, which is irradiated with the processing light EL#2, of the fθ lens 2162 by the processing light EL#2. Incidentally, the heating aspect may include at least one of a temperature of a heated part, a temperature distribution of the heated part, an amount of change in the temperature(for example, an amount of change in temperature per unit time) of the heated part, and an amount of heat (for example, an amount of heat per unit time) transferred to the heated part. For example, in a case where the intensity of the processing light EL#1 is different from the intensity of the processing light EL#2, there is a possibility that the heating aspect of the first part 21621 is different from the heating aspect of the second part 21622. As a result, there is a possibility that the temperature of the first part 21621 is different from the temperature of the second part 21622. Therefore, the processing system SYS may cool the fθ lens 2162 so that a cooling aspect of the first part 21621 is different from a cooling aspect of the second part 21622. Namely, the processing system SYS may cool the fθ lens 2162 so that a difference between the temperature of the first part 21621 and the temperature of the second part 21622 is not excessively large by allowing the cooling aspect of the first part 21621 to be different from the cooling aspect of the second part 21622. The processing system SYS may cool the fθ lens 2162 so that the temperature of the first part 21621 is equal to the temperature of the second part 21622 by allowing the cooling aspect of the first part 21621 to be different from the cooling aspect of the second part 21622. Incidentally, the cooling aspect may include at least one of a temperature of the cooled part, a temperature distribution of the cooled part, an amount of change in temperature (for example, an amount of change in temperature per unit time) of the cooled part, and an amount of heat (for example, an amount of heat per unit time) absorbed from the cooled part.

As one example, in a case where the intensity of processing light EL#1 is higher than the intensity of processing light EL#2, there is a possibility that the first part 21621 is heated faster than the second part 21622 is. In this case, the processing system SYS may cool the first part 21621 faster than the second part 21622.

The intensity of the processing light EL#1 and the intensity of the processing light EL#2 are detectable by the power meters 2143 and 2153, respectively. Therefore, the processing system SYS may cool the fθ lens 2162 based on the detected results by the power meters 2143 and 2153. For example, in a case where the detected results by the power meters 2143 and 2153 indicate that the intensity of the processing light EL#1 is higher than the intensity of the processing light EL#2, the processing system SYS may cool the first part 21621 faster than the second part 21622.

In a case where the refrigerant supply nozzle 2172 supplies the gas as the refrigerant, a pressure in the containing space 2171 in the housing unit 217 may be set to be higher than a pressure in a space outside the housing unit 217 (for example, the chamber space 63IN) by the gas supplied by the refrigerant supply nozzle 2172. Namely, the containing space 2171 in the housing unit 217 may be a positive pressure space. In this case, there is a lower possibility that unwanted substance (for example, the build material M) enters the housing unit 217 from the space outside the housing unit 217 (for example, the chamber space 63IN), compared to a case where the containing space 2171 is not the positive pressure space. As a result, there is a lower possibility that the unwanted substance adheres to the irradiation optical system 211. As a result, there is a lower possibility that the irradiation of the processing light EL to the build surface MS is prevented by the unwanted substance adhering to the irradiation optical system 211.

### (2) Operation of Processing System SYS

Next, an operation of the processing system SYS will be described.

### (2-1) Additive Manufacturing Operation

Firstly, the additive manufacturing (an additive manufacturing operation) performed by the processing system SYS on the workpiece W will be described. The additive manufacturing performed on the workpiece W corresponds to an operation for building the build object so as to add, to the workpiece W, the build object that is integrated with (alternatively, separable from) the workpiece W. In the below-described description, the additive manufacturing for building the 3D structural object ST that is the build object having a desired shape will be described, for the purpose of simple description. As described above, the processing system SYS builds the 3D structural object ST by performing the additive manufacturing based on the Laser Metal Deposition. Therefore, the processing system SYS may build the 3D structural object ST by performing the existing additive manufacturing based on the Laser Metal Deposition. Next, one example of the operation for building the 3D structural object ST by using the Laser Metal Deposition will be briefly described.

The processing system SYS builds the 3D structural object ST on the workpiece W based on 3D model data (in other words, 3D model information) and the like of the 3D structural object ST that should be built. Measured data of the solid object measured by at least one of a non-illustrated measurement apparatus mounted in the processing system SYS and a 3D shape measurement device mounted separately from the processing system SYS may be used as the 3D model data. The processing system SYS sequentially builds a plurality of layered partial structural objects (it is referred to as the "structural layer" in the below-described description) SL that are arranged along the Z-axis direction in order to build the 3D structural object ST, for example. For example, the processing system SYS sequentially builds, one by one in sequence, the plurality of structural layers SL based on data related to the plurality of layers that are obtained by slicing the model of the 3D structural object ST along the Z-axis direction. As a result, the 3D structural object ST that is a layered structural body in which the plurality of structural layers SL are stacked is built. Note that the structural layer SL may not be the build object having a layered shape. Next, a flow of an operation for forming the 3D structural obj ect ST by forming the plurality of structural layers SL one by one in sequence will be described.

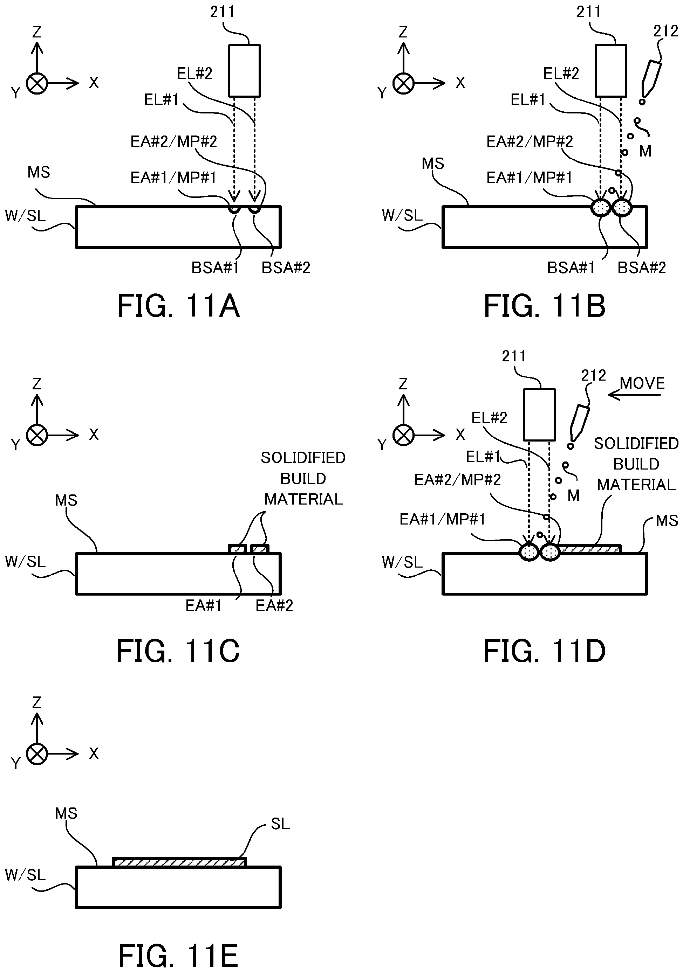

Firstly, with reference to FIG. 11A to FIG. 11E, an operation for building each structural layer SL will be described. The processing system SYS moves at least one of the processing head 21 and the stage 31 under the control of the control apparatus 7 so that the processing unit areas BSA#1 and BSA#2 are set in a desired area on the build surface MS that corresponds to the surface of the workpiece W or the surface of the already built structural layer SL. Then, the irradiation optical system 211 irradiate the processing unit areas BSA#1 and BSA#2 with the processing lights EL#1 and EL#2, respectively. In this case, the condensed positions CP#1 and CP#2 on which the processing lights EL#1#1 and EL#2 are condensed in the Z-axis direction, respectively, may be positioned on the build surface MS. Alternatively, the condensed positions CP#1 and CP#2 on which the processing lights EL#1#1 and EL#2 are condensed in the Z-axis direction, respectively, may be away from the build surface MS. As a result, as illustrated in FIG. 11A, the melt pools MP#1 and MP#2 are formed on the build surface MS that is irradiated with the processing lights EL#1 and EL#2, respectively. Furthermore, as illustrated in FIG. 11B, the processing system SYS supplies the build material M from the material nozzle 212 under the control of the control apparatus 7. As a result, the build material M is supplied to each of the melt pools MP#1 and MP#2. The build material M supplied to the melt pool MP#1 is molten by the processing light EL#1 with which the melt pool MP#1 is irradiated. Similarly, the build material M supplied to the melt pool MP#2 is molten by the processing light EL#2 with which the melt pool MP#2 is irradiated.

Furthermore, the irradiation optical system 211 moves the target irradiation areas EA#1 and EA#2 in the processing unit areas BSA#1 and BSA#2, respectively, by using the Galvano mirrors 2146 and 2156. Namely, the irradiation optical system 211 scans the processing unit areas BSA#1 and BSA#2 with the processing lights EL#1 and EL#2, respectively, by using the Galvano mirrors 2146 and 2156. After the melt pool MP#1 is no longer irradiated with the processing light EL#1 due to the movement of the target irradiation area EA#1, the build material M molten in the melt pool MP#1 is cooled and solidified (namely, coagulated). Similarly, after the melt pool MP#2 is no longer irradiated with the processing light EL#2 due to the movement of the target irradiation area EA#2, the build material M molten in the melt pool MP#2 is cooled and solidified (namely, coagulated). Furthermore, the melt pools MP#1 and MP#2 move due to the movement of the target irradiation areas EA#1 and EA#2. As a result, as illustrated in FIG. 11C, the build objects including the solidified build material M are deposited on the build surface MS in the processing unit areas BSA#1 and BSA#2 in which the melt pools MP#1 and MP#2 move. Note that the melt pools MP1 and MP2 may be formed in almost the entire processing unit areas BSA#1 and BSA#2.

Incidentally, in FIG. 11C, for convenience of description, the build object made of the build material M solidified in the processing unit area BSA#1 is physically separated from the build object made of the build material M solidified in the processing unit area BSA#2. However, the build object made of the build material M solidified in the processing unit area BSA#1 may be integrated with the build object made of the build material M solidified in the processing unit area BSA#2. Especially in a case where the processing unit areas BSA#1 and BSA#2 coincide with each other (alternatively, partially overlap with each other), the build object made of the build material M solidified in the processing unit area BSA#1 is physically separated from the build object made of the build material M solidified in the processing unit area BSA#2. Physically separated.

In a period during which the target irradiation areas EA#1 and EA#2 move in the processing unit areas BSA#1 and BSA#2, respectively, the processing system SYS may move at least one of the processing head 21 and the stage 31 so that the processing unit areas BSA#1 and BSA#2 move on the build surface MS. Namely, the processing system SYS may move each of the target irradiation areas EA#1 and EA#2 in the processing unit areas BSA#1 and BSA#2 and move the processing unit areas BSA#1 and BSA#2 on the build surface MS in parallel.

Alternatively, in the period during which the target irradiation areas EA#1 and EA#2 move in the processing unit areas BSA#1 and BSA#2, respectively, the processing system SYS may not move the processing head 21 and the stage 31 to prevent the processing unit areas BSA#1 and BSA#2 from moving on the build surface MS. In this case, after the additive manufacturing (namely, the building) in the processing unit areas BSA#1 and BSA#2 is completed, the processing system SYS may move at least one of the processing head 21 and the stage 31 so that the processing unit areas BSA#1 and BSA#2 are set in another area on the build surface MS . Namely, the processing system SYS may move at least one of the processing head 21 and the stage 31 so that the processing unit areas BSA#1 and BSA#2 move on the build surface MS. In this case, the processing system SYS may move at least one of the processing head 21 and the stage 31 so that an area on which the processing unit areas BSA#1 and BSA#2 have already been set (namely, an area in which the additive manufacturing has already been performed) on the build surface MS is adjacent to an area on which the processing unit areas BSA#1 and BSA#2 are newly set (namely, an area in which the additive manufacturing is performed next) on the build surface MS. Especially, the processing system SYS may move at least one of the processing head 21 and the stage 31 so that the area on which the processing unit areas BSA#1 and BSA#2 have already been set on the build surface MS does not overlap with the area on which the processing unit areas BSA#1 and BSA#2 are newly set on the build surface MS. However, the processing system SYS may move at least one of the processing head 21 and the stage 31 so that the area on which the processing unit areas BSA#1 and BSA#2 have already been set on the build surface MS partially overlaps with the area on which the processing unit areas BSA#1 and BSA#2 are newly set on the build surface MS.

The processing system SYS repeats a series of build process including the formation of the melt pool MP by the irradiation with the processing light EL in the processing unit area BSA, the supply of the build material M to the melt pool MP, the melting of the supplied build material M and the solidification of the molten build material M while relatively moving the processing head 21 relative to the build surface MS along at least one of the X-axis direction and the Y-axis direction, as illustrated in FIG. 11D. As a result, as illustrated in FIG. 11E, the structural layer SL corresponding to the build object that is an aggregation of the build material M, which has been solidified after being molten, is built on the build surface MS. Namely, the structural layer SL that corresponds to an aggregation of the build object built in a pattern based on the movement trajectory of the processing unit area BSA on the build surface MS (namely, the structural layer SL having a shape based on the movement trajectory of the processing unit area BSA in a planar view) is built.

Incidentally, in a case where the target irradiation area EA#1 is set at the area on which the build object should not be built, the processing system SYS may not irradiate the target irradiation areas EA#1 with the processing light EL#1. Alternatively, the processing system SYS may irradiate the target irradiation areas EA#1 with the processing light EL#1 and stop the supply of the build material M. Alternatively, the processing system SYS may supply the build material M to the target irradiation areas EA#1 and irradiate the target irradiation areas EA#1 with the processing light EL#1 having an intensity by which the melt pool MP is not formed. The same may be applied to a case where the target irradiation area EA#2 is set at the area on which the build object should not be built.

A movement path (in other words, the movement trajectory) of the processing unit area BSA may be referred to as a processing path (in other words, a tool path). Processing path information may include information (for example, coordinate information) related to a plurality of positions at which the processing unit area BSA is sequentially set. In this case, each position at which the processing unit area BSA is set may be referred to as a unit processing path. The control apparatus 7 may move at least one of the processing head 21 and the stage 31 so that the processing unit area BSA moves along the movement path designated by the processing path information. Incidentally, since the additive manufacturing (namely, the building) is performed in the processing unit area BSA, the processing path may mean a path along which the processing unit 2 performs the building on the build surface MS.

The processing system SYS repeats the operation for building the structural layer SL based on the 3D model data under the control of the control apparatus 7. Specifically, the control apparatus 7 firstly generates slice data by performing a slicing process on the 3D model data by a layer pitch before performing the operation for building the structural layer SL. The processing system SYS performs an operation for building a first structural layer SL#1 on the build surface MS that corresponds to the surface of the workpiece W based on the slice data corresponding to the structural layer SL#1. Specifically, the control apparatus 7 acquires the processing path information that is for building the first structural layer SL#1 and that is generated based on the slice data corresponding to the structural layer SL#1. Incidentally, the control apparatus 7 may generate the processing path information after or before the processing system SYS starts the additive manufacturing. Then, the control apparatus 7 controls the processing unit 2 and the stage unit 3 to build the first structural layer SL#1 based on the processing path information. As a result, as illustrated in FIG. 12A, the structural layer SL#1 is built on the build surface MS. Then, the processing system SYS sets a surface (namely, an upper surface) of the structural layer SL#1 to be a new build surface MS and builds a second structural layer SL#2 on the new build surface MS. In order to build the structural layer SL#2, firstly, the control apparatus 7 controls at least one of the head driving system 22 and the stage driving system 32 so that the processing head 21 moves along the Z-axis direction relative to the stage 31. Specifically, the control apparatus 7 controls at least one of the head driving system 22 and the stage driving system 32 to move the processing head 21 toward the +Z-axis side and / or to move the stage 31 toward the -Z-axis direction so that the processing unit areas BSA#1 and BSA#2 are set on the surface of the structural layer SL#1 (namely, the new build surface MS). Then, the processing system SYS builds the structural layer SL#2 on the structural layer SL#1 based on the slice data corresponding to the structural layer SL#2, by performing an operation that is the same as the operation for building the structural layer SL#1 under the control of the control apparatus 7. As a result, as illustrated in FIG. 12B, the structural layer SL#2 is built. Then, the same operation is repeated until all structural layers SL constituting the 3D structural object ST that should be built on the workpiece W are built. As a result, the 3D structural object ST is built by a layered structural object in which the plurality of structural layers SL are stacked, as illustrated in FIG. 12C.

Note that the control apparatus 7 (alternatively, any other apparatus that generates the processing path information, the same is applied in this paragraph) may generate the processing path information with information for identifying whether the processing path is the build object that serves as a wall or the build object for an infill (namely, the build object for filling an interior of the 3D structural object ST).

Furthermore, the control apparatus 7 (alternatively, any other apparatus that generates the processing path information, the same is applied in this paragraph) may generate the processing path information including bead width information that defines a width of the build object (it may be referred to as a line width or a bead width). Specifically, the control apparatus 7 may generate the processing path information for building the build object by using a plurality of bead widths so that there is no gap in the build object for the infill and / or the build object whose width is thin widths (especially, build object that serves as the wall) can be properly formed. In this case, the processing unit 2 may build the build object for each bead width.

Furthermore, the control apparatus 7 (alternatively, any other apparatus that generates the processing path information, the same is applied in this paragraph) may generate, in addition to the processing path information used by the processing unit 2 to build the build object, the processing path information used by the processing unit 2 to perform a finish-processing on the built object that has been built. The finish-processing may include a processing for reducing a flatness of a surface (namely, for reducing a surface roughness, for making the surface closer to a flat surface) of the build object. In this case, an algorithm for generating the processing path information used by the processing unit 2 to build the build object may be the same as or different from an algorithm for generating the processing path information used by the processing unit 2 to perform the finish-processing on the build object.

Furthermore, in a case where the processing system SYS includes a measurement apparatus, the control apparatus 7 (alternatively, any other apparatus that generates the processing path information, the same is applied in this paragraph) may generate, in addition to or instead of the processing path information indicating the path along which the processing unit 2 performs the building (the processing), measurement path information indicating a path along which the measurement apparatus performs a measurement. In this case, an algorithm for generating the measurement path information may be the same as or different from the algorithm for generating the processing path information. Incidentally, a monitoring apparatus that monitors a state of a spot formed by measurement light on the build surface MS (for example, an imaging apparatus that captures an image of the spot) is an example of the measurement apparatus.

### (2-2) Specific Example of Usage of two Processing Lights EL#1 and EL#2

As described above, the processing system SYS may perform the additive manufacturing to build the build obj ect by using the processing light EL#1 and the processing light EL#2.

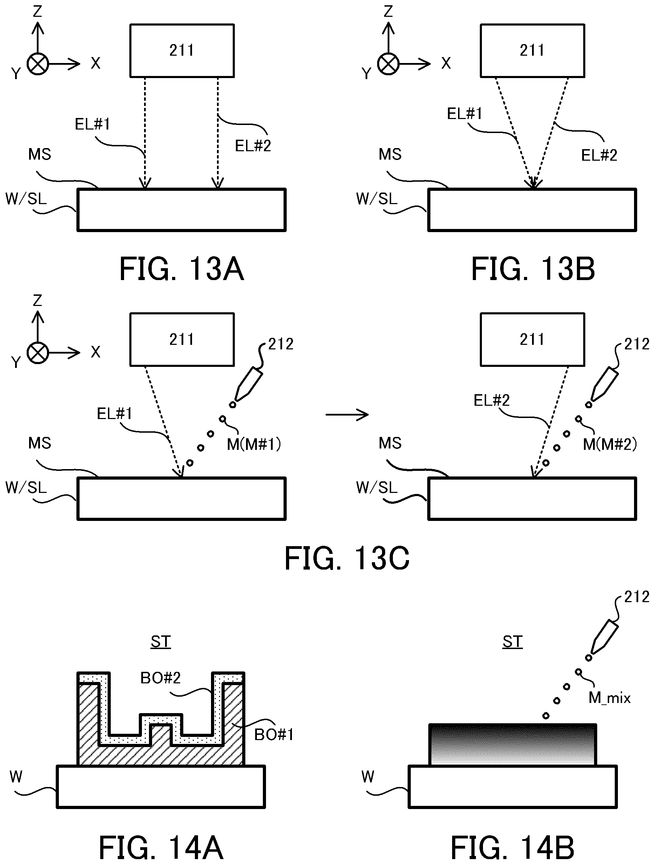

In this case, the irradiation position of the processing light EL#1 may be different from the irradiation position of the processing light EL#2. For example, as illustrated in FIG. 13A, the processing system SYS may irradiate a first part of the build surface MS with the processing light EL#1 and irradiate a second part of the build surface MS that is different from the first part with the processing light EL#2. In this case, the processing system SYS may perform the additive manufacturing using the processing light EL#1 and the additive manufacturing using the processing light EL#2 in parallel. For example, the processing system SYS may perform the additive manufacturing for building a first part of the 3D structural object ST by using the processing light EL#1 and the additive manufacturing for building a second part of the same 3D structural object ST that is different from the first part by using the processing light EL#2 in parallel. For example, the processing system SYS may perform the additive manufacturing for building a first part of the structural layer SL by using the processing light EL#1 and the additive manufacturing for building a second part of the same structural layer SL different from the first part by using the processing light EL#2 in parallel in a period during which a certain structural layer SL is built. As a result, a throughput of the additive manufacturing is improved.

Alternatively, the irradiation position of the processing light EL#1 may be the same as the irradiation position of the processing light EL#2. For example, the processing system SYS may irradiate same one part of the build surface MS with both of the processing lights EL#1 and EL#2, as illustrated in FIG. 13B. In this case, the processing system SYS may perform the additive manufacturing using both of the processing lights EL#1 and EL#2. For example, the processing system SYS may perform the additive manufacturing for building same one part of the 3D structural object ST by using both of the processing lights EL#1 and EL#2. For example, the processing system SYS may perform the additive manufacturing for building same one part of the structural layer SL by using both of processing lights EL#1 and EL#2 in the period during which a certain structural layer SL is built.

A usage of the processing light EL#1 may be different from a usage of the processing light EL#2. In the below-described description, one example of the usage of the processing lights EL#1 and EL#2 will be described.

As one example of the usage of the processing lights EL#1 and EL#2, the processing system SYS may use the processing light EL#2 to preheat the build surface MS and may use the processing light EL#1 to form the melt pool MP (as a result, build the build object) on the preheated build surface MS. As a result, the processing system SYS can properly form the melt pool MP on the build surface MS even in a situation where the amount of the energy transferred from the processing light EL#1 to the build surface MS cannot be so large. As one example, the amount of the energy transferred from the processing light EL#1 to the build surface MS is smaller as the absorption rate of the workpiece W (alternatively, the object whose surface is the build surface MS, the same is applied in the below-described description) to the processing light EL#1 is lower. In this case, the build surface MS may be preheated by using the processing light EL#2 that satisfies a condition that the absorption rate of the workpiece W to the processing light EL#2 is different from the absorption rate of the workpiece W (alternatively, the object whose surface is the build surface MS, the same is applied in the below-described description) to the processing light EL#1. As a result, the processing system SYS can properly form the melt pool MP on the build surface MS even in a situation where the absorption rate of the workpiece W to the processing light EL#1 is low.

In this case, the absorption rate of the workpiece W (alternatively, the object whose surface is the build surface MS, the same is applied in the below-described description) to the processing light EL#2 may be higher than the absorption rate of the workpiece W to the processing light EL#1. As a result, the processing system SYS can efficiently preheat the build surface MS by using the processing light EL#2 and properly form the melt pool MP on the build surface MS by using the processing light EL#1.

The processing system SYS may form the melt pool MP on the build surface MS by using the processing light EL#2 to preheat the build surface MS. In this case, the processing system SYS may irradiate the melt pool MP, which is formed on the build surface MS by the processing light EL#2, with the processing light EL#1. The processing system SYS may enlarge the melt pool MP by irradiating the melt pool MP, which is formed on the build surface MS by the processing light EL#2, with the processing light EL#1. Alternatively, the processing system SYS may preheat the build surface MS by using the processing light EL#2 without forming the melt pool MP on the build surface MS. In this case, the processing system SYS may form the melt pool MP by irradiating the build surface MS, which has been preheated by the processing light EL#2, with the processing light EL#1.

As another example of the usage of the processing lights EL#1 and EL#2, as illustrated in FIG. 13C, the processing system SYS may use the processing light EL#1 to build the build object by using a first type of build material M#1 and may use the processing light EL#2 to build the build object by using a second type of build material M#2 that is different from the first type M#1. In this case, an absorption rate of the first type of build material M to the processing light EL#1 may be higher than an absorption rate of the first type of build material M to the processing light EL#2. On the other hand, an absorption rate of the second type of build material M to the processing light EL#2 may be higher than an absorption rate of the second type of build material M to the processing light EL#1. As a result, the processing system SYS can build the build object by using each of the plurality of different types of build materials M in a case where the material nozzle 212 is configured to supply the plurality of different types of build materials M. For example, even in a case where the second type of build material M#2 cannot be efficiently molten by using the processing light EL#1 due to the low absorption rate of the second type of build material M#2 to the processing light EL#1, the processing system SYS can melt the second type of build material M#2 efficiently by using the processing light EL#2. As a result, the processing system SYS can efficiently build the build object by using the second type of build material M#2. For example, even in a case where the first type of build material M#1 cannot be efficiently molten by using the processing light EL#2 due to the low absorption rate of the first type of build material M#1 to the processing light EL#2, the processing system SYS can melt the first type of build material M#1 efficiently by using the processing light EL#1. As a result, the processing system SYS can efficiently build the build object by using the first type of build material M#1.

As one example, the processing system SYS may use the processing light EL#1 including the infrared light to build the build object by using the build material M including stainless steel. On the other hand, the processing system SYS may use the processing light EL#2 including the visible light (for example, blue light) to build the build object by using the build material M including copper. In this case, although the absorption rate of the copper to the infrared light is low, the processing system SYS can properly build the build object from the build material M including the copper by using the processing light EL#2 including the visible light that is different from the infrared light. Even in a case where the workpiece W is the copper, the processing system SYS can appropriately build the build object on the workpiece W.

The processing system SYS, which is configured to build the build object by using each of the plurality of different types of build materials M, may build the 3D structural object ST including a plurality of build objects by building the plurality of build objects that are built from the plurality of different types of build materials M, respectively, in sequence, as illustrated in FIG. 14A. For example, the processing system SYS may build a build object BO#1 formed by the first type of build material M#1 by supplying the first type of build material M#1 to the build surface MS without supplying the second type of build material M#2 to the build surface MS, and by irradiating the supplied first type of build material M#1 with the processing light EL#1. Then, the processing system SYS may build a build object BO#2 formed by the second type of build material M#2 by supplying the second type of build material M#2 to the build surface MS without supplying the first type of build material M#1 to the build surface MS, and by irradiating the supplied second type of build material M#2 with the processing light EL#2. As a result, the 3D structural object ST including the build objects BO#1 and BO#2 is built.

Alternatively, the processing system SYS, which is configured to build the build object by using each of the plurality of different types of build materials M, may build the 3D structural object ST by supplying mixed build material M_mix, which is obtained by mixing the plurality of different types of build materials M, to the build surface MS, as illustrated in FIG. 14B. For example, the processing system SYS may build the 3D structural object by formed by the mixed build material M_mix by supplying the mixed build material M_mix, which is obtained by mixing the first type of build material M#1 and the second type of build material M#2 at a predetermined mixing ratio, to the build surface MS, and by irradiating the supplied mixed build material M_mix with each of the processing lights EL#1 and EL#2.

In this case, the processing system SYS may change the mixing ratio in a period during which the 3D structural object ST is built. For example, the processing system SYS may gradually increase or decrease the mixing ratio in the period during which the 3D structural object ST is built. As a result, the processing system SYS can build the 3D structural object ST whose linear coefficient of expansion varies gradually (in other words, relatively smoothly) along a stacking direction of the structural layers SL. As a result, the processing system SYS can build the 3D structural object ST that is less likely to be damaged by heat, compared to a build object whose linear coefficient of expansion changes abruptly along the stacking direction of structural layers SL.

As another example of the usage of the processing lights EL#1 and EL#2, the processing system SYS may use the processing light EL#1 to build the build object and may use the processing light EL#2 to smooth the surface of the build object that has been built by the processing light EL#1. Specifically, the processing system SYS may melt the surface of the build object by irradiating the surface of the build object, which has been built by the processing light EL#1, with the processing light EL#2. Then, after the molten surface of the build object solidifies, the surface of the build object becomes smoother than the surface before the irradiation of the processing light EL#2. As a result, the processing system SYS can build the build object whose surface is smoother.

### (2-3) Irradiation Control Operation for Controlling Irradiation Aspect of two Processing Lights EL#1 and EL#2

The processing system SYS (especially, the control apparatus 7) may perform an irradiation control operation for controlling an irradiation aspect of the processing lights EL#1 and EL#2 in at least a part of a period during which the additive manufacturing for building the build object is performed. Specifically, the control apparatus 7 may perform the irradiation control operation for controlling the irradiation aspects of the two processing lights EL#1 and EL#2 with respect to the build surface MS. Next, the irradiation control operation will be described.

The control apparatus 7 may perform the irradiation control operation so that the irradiation aspect of the processing light EL#1 on the build surface MS is the same as the irradiation aspect of the processing light EL#2 on the build surface MS. The control apparatus 7 may perform the irradiation control operation so that the irradiation aspect of the processing light EL#1 on the build surface MS is different from the irradiation aspect of the processing light EL#2 on the build surface MS. The control apparatus 7 may perform the irradiation control operation so that the irradiation aspect of the processing light EL#1 on the build surface MS is a desired first aspect. The control apparatus 7 may perform the irradiation control operation so that the irradiation aspect of the processing light EL#2 on the build surface MS is a desired second aspect.

The irradiation aspect of the processing light EL may include the intensity (typically, a peak intensity corresponding to a maximum intensity) of the processing light EL on the build surface MS. The irradiation aspect of the processing light EL may include an intensity distribution of the processing light EL on the build surface MS. The irradiation aspect of the processing light EL may include an irradiation period of the processing light EL to the build surface MS. In a case where the processing light EL includes a plurality of pulsed lights, the irradiation period of the processing light EL may mean a series of periods during which the build surface MS is irradiated with the plurality of pulsed lights continuously. The irradiation aspect of the processing light EL may include an irradiation period during which the build surface MS is irradiated with the pulsed light included in the processing light EL (namely, a period corresponding to a pulse width). The irradiation aspect of the processing light EL may include a start timing of the irradiation of the processing light EL to the build surface MS. The irradiation aspect of the processing light EL may include an end timing of the irradiation of the processing light EL to the build surface MS. The irradiation aspect of the processing light EL may include a position that is irradiated with the processing light EL on the build surface MS (namely, a position of the target irradiation area EA). The irradiation aspect of the processing light EL may include a diameter (namely, a size) of a beam spot BS formed by the processing light EL on the build surface MS. The irradiation aspect of the processing light EL may include a movement aspect of the processing light EL (namely, a movement aspect of the target irradiation area EA) on the build surface MS. The movement aspect of the target irradiation area EA may include a movement direction of the target irradiation area EA. The movement aspect of the target irradiation area EA may include a movement trajectory (especially, its shape) of the target irradiation area EA. The movement aspect of the target irradiation area EA may include a movement speed of the target irradiation area EA.

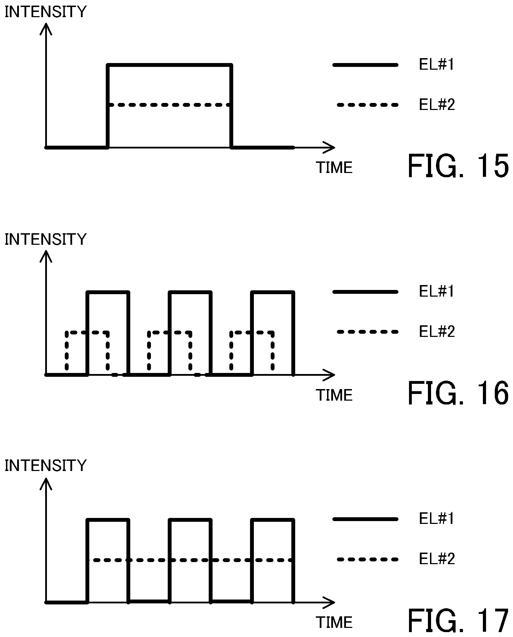

Next, with reference to FIG. 15 to FIG. 20, a first specific example to a second specific example of the irradiation control operations will be described in sequence as specific examples of the irradiation control operations.

### (2-3-1) First Specific Example of Irradiation Control Operation

The first specific example of the irradiation control operation is an irradiation control operation for controlling at least the intensity of at least one of the processing lights EL#1 and EL#2.

For example, the control apparatus 7 may perform the irradiation control operation so that the intensity (for example, the peak intensity) of the processing light EL#1 is higher than the intensity (for example, the peak intensity) of the processing light EL#2, as illustrated in FIG. 15 to FIG. 17. Incidentally, "the intensity of the processing light EL" described in the first specific example of the irradiation control operation may mean the intensity of the processing light EL on the build surface MS, or may mean the intensity of the processing light EL at a light concentration position of the irradiation optical system 211.

For example, as illustrated in FIG. 15, the control apparatus 7 may perform the irradiation control operation so that a period during which the build surface MS is irradiated with the processing light EL#1 overlaps with a period during which the build surface MS is irradiated with the processing light EL#2, and the intensity of the processing light EL#1 is higher than the intensity of the processing light EL#2. Namely, the control apparatus 7 may perform the irradiation control operation so that the build surface MS is irradiated with the processing lights EL#1 and EL#2 simultaneously, and the intensity of the processing light EL#1 is higher than the intensity of the processing light EL#2. Alternatively, the control apparatus 7 may perform the irradiation control operation so that the build surface MS is irradiated with the processing light EL#1 in at least a part of a period from a time at which the irradiation of the processing light EL#2 to the build surface MS is started to a time at which the irradiation of the processing light EL#2 to the build surface MS is completed, and the intensity of the processing light EL#1 is higher than the intensity of the processing light EL#2.

For example, as illustrated in FIG. 16, the control apparatus 7 may perform the irradiation control operation so that one part of the build surface MS is irradiated with the processing light EL#2 and then the same one part of the build surface MS is irradiated with the processing light EL#1, and the intensity of the processing light EL#1 is higher than the intensity of the processing light EL#2. Namely, the control apparatus 7 may perform the irradiation control operation so that the build surface MS is irradiated with the processing light EL#2 prior to the processing light EL#1, and the intensity of the processing light EL#1 is higher than the intensity of the processing light EL#2. In FIG. 16, the irradiation period of the processing light EL#2 partially overlaps with the irradiation period of the processing EL#1, however, the irradiation period of the processing light EL#2 may not overlap with the irradiation period of the processing light EL#1. For example, the irradiation period of the processing light EL#1 may be set between a first irradiation period of the processing light EL#2 and a second irradiation period of the processing light EL#2.

For example, as illustrated in FIG. 17, the control apparatus 7 may perform the irradiation control operation so that the build surface MS is irradiated with the processing light EL#1 multiple times in at least a part of a period during which the build surface MS is irradiated with the processing light EL#2, and the intensity of the processing light EL#1 is higher than the intensity of the processing light EL#2.

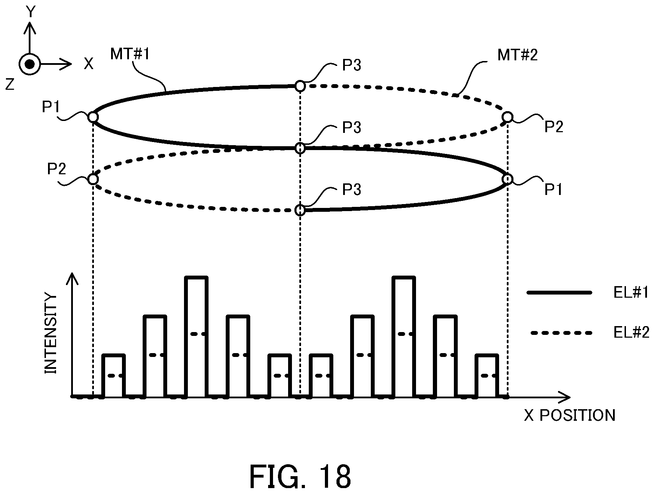

Incidentally, the processing light EL#1 may include the plurality of pulsed lights in one irradiation period of the processing light EL#1 illustrated in FIG. 15 to FIG. 17. Similarly, the processing light EL#2 may include the plurality of pulsed lights in one irradiation period of the processing light EL#2 illustrated in FIG. 15 to FIG. 17. The same is applied to FIG. 18 described below.

The control apparatus 7 may perform the irradiation control operation illustrated in FIG. 15 to FIG. 17 in a case where the processing light EL#2 is used for preheating the build surface MS and the processing light EL#1 is used for a usage that is different from a usage for forming the melt pool MP (as a result, building the build object) on the preheated build surface MS. As a result, the processing system SYS can efficiently preheat the build surface MS by using the processing light EL#2 and properly form the melt pool MP on the build surface MS by using the processing light EL#1. However, the control apparatus 7 may perform the irradiation aspect control operation illustrated in FIG. 15 to FIG. 17 even in a case where the processing light EL#2 is used for a usage that is different from the usage for preheating the build surface MS. The control apparatus 7 may perform the irradiation aspect control operation illustrated in FIG. 15 to FIG. 17 even in a case where the processing light EL#1 is used for a usage that is different from the usage for forming the melt pool MP (as a result, building the build object) on the preheated build surface MS.

The control apparatus 7 may perform the irradiation control operation for modulating (namely, changing) the intensities (for example, the peak intensities) of the processing lights EL#1 and EL#2 in accordance with the movement of the target irradiation areas EA#1 and EA#2, in addition to or instead of the irradiation control operation for allowing the intensity of the processing light EL#1 to be higher than the intensity of the processing light EL#2. For example, an upper drawing in FIG. 18 illustrates movement trajectories MT#1 and MT#2 of the target irradiation areas EA#1 and EA#2 on the build surface MS in a case the target irradiation areas EA#1 and EA#2 reciprocate regularly along a first direction (the X-axis direction in FIG. 18) in the processing unit areas BSA#1 and BSA#2, respectively, and the processing unit areas BSA#1 and BSA#2 move in a second direction (the X-axis direction in FIG. 18) that is orthogonal to the first direction. Furthermore, a lower drawing in FIG. 18 illustrates the intensities of the processing lights EL#1 and EL#2 as well as the movement trajectories MT#1 and MT#2. Incidentally, a graph in the lower drawing in FIG. 18 is a graph in which a vertical axis represents the intensities of the processing lights EL#1 and EL#2 and a horizontal axis represents the irradiation positions of the processing lights EL#1 and EL#2 in the X-axis direction. Therefore, FIG. 18 illustrates a relationship between the movement trajectories MT#1 and MT#2 and the intensities of the processing lights EL#1 and EL#2. In other words, FIG. 18 illustrates a relationship between the position of the target irradiation area EA#1 on the movement trajectory MT#1 and the processing light EL#1, and a relationship between the position of the target irradiation area EA#2 on the movement trajectory MT#2 and the processing light EL#2.

As illustrated in FIG. 18, the control apparatus 7 may perform the irradiation control operation so that the intensity of the processing light EL#1 with which at least one of a reversal position P1, at which the movement direction of the target irradiation area EA#1 is reversed in the first direction, and an overlap position P3, at which the target irradiation area EA#1 overlaps with the target irradiation area EA#2, is irradiated is lower than the intensity of the processing light EL#1 at a position that is different form the reversal position P1 and the overlap position P#. Namely, the irradiation control operation may be performed so that the intensity of the processing light EL#1 at at least one of a first reversal timing, at which the movement direction of the target irradiation area EA#1 is reversed in the first direction, and an overlap timing, at which the target irradiation area EA#1 overlaps with the target irradiation area EA#2, is lower than the intensity of the processing light EL#1 at a timing that is different from the first reversal timing and the overlap timing. Incidentally, the reversal position P1 may be a position at which a sign of a derivative value of a movement speed of the target movement area EA#1 (namely, an acceleration of the target movement area EA#1 during the movement) changes. Incidentally, FIG. 18 illustrates the intensity of the processing light EL#1 in a case where the build surface MS is irradiated with the processing light EL#1 that is the pulsed light.

As one example, the control apparatus 7 may perform the irradiation control operation so that the intensity of the processing light EL#1 increases and then decreases in a period during which the target irradiated area EA#1 moves from the overlap position P3 toward the reversal position P1. Furthermore, the control apparatus 7 may perform the irradiation control operation so that the intensity of the processing light EL#1 increases and then decreases in a period during which the target irradiation area EA#1 moves from the reversal position P1 toward the overlap position P3.

Similarly, as illustrated in FIG. 18, the control apparatus 7 may perform the irradiation control operation so that the intensity of the processing light EL#2 with which at least one of a reversal position P2, at which the movement direction of the target irradiation area EA#2 is reversed in the first direction, and the overlap position P3, at which the target irradiation area EA#2 overlaps with the target irradiation area EA#1, is irradiated is lower than the intensity of the processing light EL#2 at a position that is different form the reversal position P2 and the overlap position P#. Namely, the irradiation control operation may be performed so that the intensity of the processing light EL#2 at at least one of a second reversal timing, at which the movement direction of the target irradiation area EA#2 is reversed in the first direction, and an overlap timing, at which the target irradiation area EA#2 overlaps with the target irradiation area EA#1, is lower than the intensity of the processing light EL#2 at a timing that is different from the second reversal timing and the overlap timing. Incidentally, the reversal position P2 may be a position at which a sign of a derivative value of a movement speed of the target movement area EA#2 (namely, an acceleration of the target movement area EA#1 during the movement) changes. Incidentally, FIG. 18 illustrates the intensity of the processing light EL#2 in a case where the build surface MS is irradiated with the processing light EL#2 that is the pulsed light.

As one example, the control apparatus 7 may perform the irradiation control operation so that the intensity of the processing light EL#2 increases and then decreases in a period during which the target irradiated area EA#2 moves from the overlap position P3 toward the reversal position P2. Furthermore, the control apparatus 7 may perform the irradiation control operation so that the intensity of the processing light EL#2 increases and then decreases in a period during which the target irradiation area EA#2 moves from the reversal position P2 toward the overlap position P3.

By performing the irradiation control operation illustrated in FIG. 18, the processing system SYS can reduce a possibility that the amount of the energy transferred per unit time from each of the processing lights EL#1 and EL#2 to the build surface MS varies depending on the position of each of the target irradiation areas EA#1 and EA#2 on the build surface MS. A technical reason for this will be described below.

As illustrated in FIG. 18, the movement direction of the target irradiation area EA#1 is reversed at the reversal position P1. Therefore, the movement speed of the target irradiation area EA#1 moving to approach the reversal position P1 decreases in the vicinity of the reversal position P1 and becomes zero at the reversal position P1. The movement speed of the target irradiation area EA#1 moving away from the reversal position P1 after reaching the reversal position P1 increases from zero. Namely, the movement speed of the target irradiation area EA#1 varies in the vicinity of the reversal position P1. Here, the amount of the energy transferred per unit time from the processing light EL#1 to the build surface MS is larger as the movement speed of the target irradiation area EA#1 is slower. Therefore, if the intensity of the processing light EL#1 is not modulated (namely, if it is fixed at a certain value), there is a possibility that the amount of the energy transferred per unit time from the processing light EL#1 to the build surface MS varies depending on the position of the target irradiation area EA#1 on the build surface MS. Typically, there is a possibility that the amount of the energy transferred per unit time from the processing light EL#1 to the build surface MS at the reversal position P1 is larger than the amount of the energy transferred per unit time from the processing light EL#1 to the build surface MS at a position that is away from the reversal position P1. For the same reason, there is a possibility that the amount of the energy transferred per unit time from the processing light EL#2 to the build surface MS at the reversal position P2 is larger than the amount of the energy transferred per unit time from the processing light EL#2 to the build surface MS at a position that is away from the reversal position P2.

Moreover, the target irradiation areas EA#1 and EA#2 overlap with each other at the overlap position P3. Therefore, the energy is transferred to the build surface MS from both of the processing lights EL#1 and EL#2 at the overlap position P3. Therefore, there is a possibility that the amount of the energy transferred per unit time from both of the processing lights EL#1 and EL#2 to the build surface MS at the overlap position P3 is larger than the amount of the energy transferred per unit time from either one of the processing lights EL#1 and EL#2 to the build surface MS at a position that is away from the overlap position P3.

In the present example embodiment, however, the processing system SYS performs the irradiation control operation so that the intensity of the processing light EL#1 at the reversal position P1 is lower than the intensity of the processing light EL#1 at positions that is different from the reversal position P1 and the overlap position P3, as described above. Therefore, a difference between the amount of the energy transferred per unit time from the processing light EL#1 to the build surface MS at the reversal position P1 and the amount of the energy transferred per unit time from the processing light EL#1 to the build surface MS at the position that is away from the reversal position P1 is reduced. Similarly, the processing system SYS performs the irradiation control operation so that the intensity of the processing light EL#2 at the reversal position P2 is lower than the intensity of the processing light EL#1 at positions that is different from the reversal position P2 and the overlap position P3, as described above. Therefore, a difference between the amount of the energy transferred per unit time from the processing light EL#2 to the build surface MS at the reversal position P2 and the amount of the energy transferred per unit time from the processing light EL#2 to the build surface MS at the position that is away from the reversal position P2 is reduced. Similarly, the processing system SYS performs the irradiation control operation so that the intensities of the processing lights EL#1 and EL#2 at the overlap position P3 are lower than the intensities of the processing lights EL#1 and EL#2 at the position that is different from the reversal position P1, the reversal position P2 and the overlap position P3, respectively, as described above. Therefore, a difference between the amount of the energy transferred per unit time from both of the processing lights EL#1 and EL#2 to the build surface MS at the overlap position P3 and the amount of the energy transferred per unit time from either one of the processing lights EL#1 or EL#2 to the build surface MS at the position that is away from the overlap position P3 is reduced. Therefore, the processing system SYS can reduce the possibility that the amount of the energy transferred per unit time from each of the processing lights EL#1 and EL#2 to the build surface MS varies depending on the position of each of the target irradiation areas EA#1 and EA#2 on the build surface MS.

### (2-3-2) Second Specific Example of Irradiation Control Operation

The second specific example of the irradiation control operation is an irradiation control operation for controlling at least the diameter of the beam spot BS of at least one of the processing lights EL#1 and EL#2.

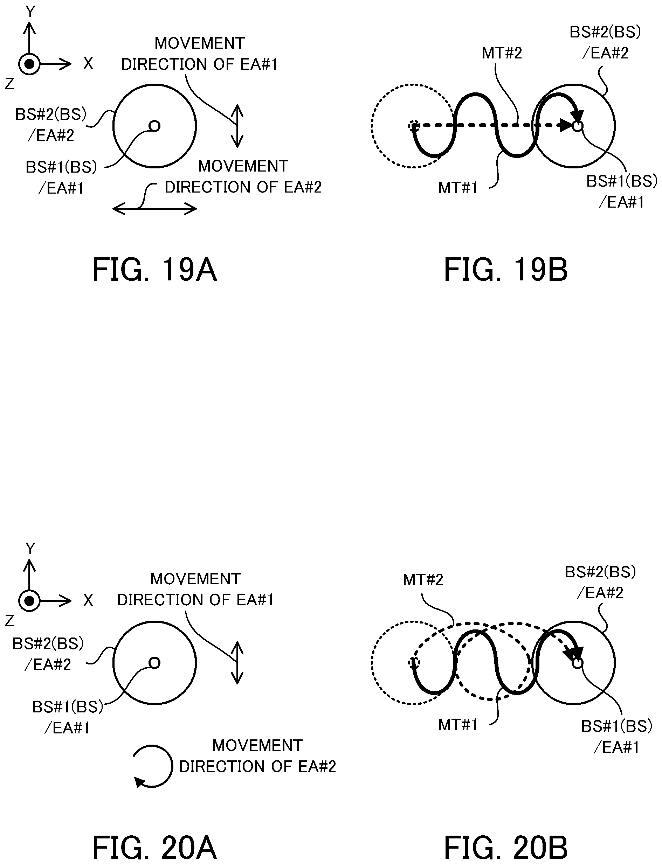

For example, the control apparatus 7 may perform the irradiation control operation so that the diameter of the beam spot BS (BS#2) of the processing light EL#2 is larger than the diameter of the beam spot BS (BS#1) of the processing light EL#1, as illustrated in FIG. 19A and FIG. 20A. For example, when the focus control optical system 2145 changes the positional relationship between the condensed position CP#1 of the processing light EL#1 and the build surface MS in the Z-axis direction, the diameter of the beam spot BS#1 changes. Therefore, the control apparatus 7 may control the focus control optical system 2145 so that the diameter of the beam spot BS#2 is larger than that of the beam spot BS#1. namely, changing the diameter of the beam spot BS#1 may include changing the condensed position CP#1 of processing light EL#1 (namely, changing a focus). For example, when the focus control optical system 2155 changes the positional relationship between the condensed position CP#2 of the processing light EL#2 and the build surface MS in the Z-axis direction, the diameter of the beam spot BS#2 changes. Therefore, the control apparatus 7 may control the focus control optical system 2155 so that the diameter of the beam spot BS#2 is larger than the diameter of the beam spot BS#1. Namely, changing the diameter of the beam spot BS#2 may include changing the condensed position CP#2 of processing light EL#2 (namely, changing a focus).

Since the beam spots BS#1 and BS#2 are formed by the processing lights EL#1 and EL#2 with which the target irradiation areas EA#1 and EA#2 are irradiated, respectively, the irradiation control operation for allowing the diameter of the beam spot BS#2 to be larger than the diameter of the beam spot BS#1 may be considered to be substantially equivalent to the irradiation control operation for allowing the target irradiation area EA#2 to be larger than the target irradiation area EA#1. Namely, the irradiation control operation for allowing the diameter of the beam spot BS#2 to be larger than the diameter of the beam spot BS#1 may be considered to be equivalent to the irradiation control operation for allowing the target irradiation area EA#1 to be smaller than the target irradiation area EA#2.

Incidentally, in a case where shapes of the beam spots BS#1 and BS#2 are different from circular shapes, widths of the beam spots BS#1 and BS#2 in a direction along an axis that is orthogonal to the optical axis of the irradiation optical system 211 may be used as the diameters of the beam spots BS#1 and BS#2, respectively. Alternatively, a maximum widths of the beam spots BS#1 and BS#2 in the direction along the axis that is orthogonal to the optical axis of the irradiation optical system 211 may be used as the diameters of the beam spots BS#1 and BS#2, respectively. Alternatively, average values of the widths of the beam spots BS#1 and BS#2 in the direction along the axis that is orthogonal to the optical axis of the irradiation optical system 211 may be used as the diameters of the beam spots BS#1 and BS#2, respectively.

The control apparatus 7 may perform the irradiation control operation illustrated in FIG. 19 and FIG. 20 in a case where the processing light EL#2 is used for preheating the build surface MS and the processing light EL#1 is used for a usage that is different from the usage for forming the melt pool MP (as a result, building the build object) on the preheated build surface MS. As a result, the processing system SYS can efficiently preheat the build surface MS by using the processing light EL#2 and properly build the melt pool MP on the build surface MS by using the processing light EL#1. This is because the processing system SYS can irradiate a relatively wide area on the build surface MS with the processing light EL#2 to preheat this relatively wide area and can form the melt pool MP by irradiating an area in which the melt pool MP should be formed in the preheated area with the processing light EL#1. However, the control apparatus 7 may perform the irradiation aspect control operation illustrated in FIG. 19A to FIG. 20A even in a case where the processing light EL#2 is used for the usage that is different from the usage for preheating the build surface MS. The control apparatus 7 may perform the irradiation aspect control operation illustrated in FIG. 19A to FIG. 20A even in a case where the processing light EL#1 is used for the usage that is different from the usage for forming the melt pool MP (as a result, building the build object) on the preheated build surface MS.

Alternatively, although it is not illustrated, the control apparatus 7 may perform the irradiation control operation so that the diameter of the beam spot BS#1 is larger than the diameter of the beam spot BS#2. Namely, the control apparatus 7 may perform the irradiation control operation so that the target irradiation area EA#1 is larger than the target irradiation area EA#2 (in other words, the target irradiation area EA#2 is smaller than the target irradiation area EA#1). Alternatively, the control apparatus 7 may perform the irradiation control operation so that the diameter of the beam spot BS#1 is the same as the diameter of the beam spot BS#2. Namely, the control apparatus 7 may perform the irradiation control operation so that the size of the target irradiation area EA#1 is the same as that of the target irradiation area EA#2.

The control apparatus 7 may control a position of at least one of the beam spots BS#1 and BS#2, in addition to controlling the diameter of at least one of the beam spots BS#1 and BS#2. Since the beam spots BS#1 and BS#2 are formed in the target irradiation areas EA#1 and EA#2, respectively, the control apparatus 7 may change a position of at least one of the target irradiation areas EA#1 and EA#2. For example, as illustrated in FIG. 19A and FIG. 20, the control apparatus 7 may perform the irradiation control operation so that at least a part of the beam spot BS#1 overlaps with the beam spot BS#2. Namely, the control apparatus 7 may perform the irradiation control operation so that at least a part of the target irradiation area EA#1 overlaps with the target irradiation area EA#2.

In the example illustrated in FIG. 19A and FIG. 20A, whole of the beam spot BS#1 whose diameter is small is included in the beam spot BS#2 whose diameter is large. In this case, the beam spot BS#1 whose dimeter is small may move inside the beam spot BS#2 whose diameter is larger. In this case, the processing system SYS can efficiently form the melt pool MP on the build surface MS, because the area preheated by the processing light EL#2 can be properly irradiated with the processing light EL#1. However, in a case where the diameter of the beam spot BS#1 is larger than the diameter of the beam spot BS#2, whole of the beam spot BS#2 whose diameter is small may be included in the beam spot BS#1 whose diameter is large. In this case, the beam spot BS#2 whose dimeter is small may move inside the beam spot BS#1 whose diameter is larger.

The control apparatus 7 may change the diameter of the beam spot BS#1 included in the beam spot BS#2. For example, the control apparatus 7 may change the diameter of the beam spot BS#1 included in the beam spot BS#2 while moving the beam spots BS#1 and BS#2 on the build surface MS. However, in a case where the diameter of the beam spot BS#1 is larger than the diameter of the beam spot BS#2, control apparatus 7 may change the diameter of the beam spot BS#2 included in the beam spot BS#1. For example, the control apparatus 7 may change the diameter of the beam spot BS#2 included in the beam spot BS#1 while moving the beam spots BS#1 and BS#2 on the build surface MS.

The control apparatus 7 may control (for example, change) at least one of a movement direction of the beam spot BS#1 in the processing unit area BSA#1 and a movement direction of the beam spot BS#2 in the processing unit area BSA#2, in addition to controlling the diameter of at least one of the beam spots BS#1 and BS#2. Incidentally, the movement direction of the beam spot BS#1 in the processing unit area BSA#1 is equivalent to the movement direction of the target irradiation area #1 in the processing unit area BSA#1. The movement direction of the beam spot BS#2 in the processing unit area BSA#2 is equivalent to the movement direction of the target irradiation area #2 in the processing unit area BSA#2.

For example, as illustrated in FIG. 19A, the control apparatus 7 may perform the irradiation control operation so that the beam spot BS#1 (the target irradiation area EA#1) reciprocates regularly along the Y-axis direction that intersects the movement directions of the processing unit areas BSA#1 and BSA#2, and the beam spot BS#2 (the target irradiation area EA#2) reciprocates regularly along the X-axis direction that is along the movement directions of the processing unit areas BSA#1 and BSA#2. As a result, as illustrated in FIG. 19B, due to the movement of the processing unit areas BSA#1 and BSA#2 move, the beam spot BS#2 (the target irradiation area EA#2) moves along the linear movement trajectory MT#2 that is along the X-axis direction and the beam spot BS#1 (the target irradiation area EA#1) moves along the wave-shaped movement trajectory MT#1 that oscillates around the movement trajectory MT#2 on the build surface MS. In this case, the processing system SYS can efficiently form the melt pool MP on the build surface MS, because the area preheated by the processing light EL#2 can be properly irradiated with the processing light EL#1.

The control apparatus 7 may control (for example, change) at least one of a movement trajectory of the beam spot BS#1 in the processing unit area BSA#1 and a movement trajectory of the beam spot BS#2 in the processing unit area BSA#2, in addition to controlling the diameter of at least one of the beam spots BS#1 and BS#2. Incidentally, the movement trajectory of the beam spot BS#1 in the processing unit area BSA#1 is equivalent to the movement trajectory of the target irradiation area #1 in the processing unit area BSA#1. The movement trajectory of the beam spot BS#2 in the processing unit area BSA#2 is equivalent to the movement trajectory of the target irradiation area #2 in the processing unit area BSA#2.

For example, as illustrated in FIG. 20A, the control apparatus 7 may perform the irradiation control operation so that the beam spot BS#1 (the target irradiation area EA#1) reciprocates regularly along the Y-axis direction that intersects the movement directions of the processing unit areas BSA#1 and BSA#2, and the beam spot BS#2 (the target irradiation area EA#2) moves along a circular moment trajectory (see FIG. 6A) in the processing unit area BSA#2. As a result, as illustrated in FIG. 20B, due to the movement of the processing unit areas BSA#1 and BSA#2 move, the beam spot BS#2 (the target irradiation area EA#2) moves along the spiral-shaped movement trajectory MT#2 that is along the X-axis direction and the beam spot BS#1 (the target irradiation area EA#1) moves along the wave-shaped movement trajectory MT#1 that oscillates around the movement trajectory MT#2 on the build surface MS. In this case, the processing system SYS can efficiently form the melt pool MP on the build surface MS, because the area preheated by the processing light EL#2 can be properly irradiated with the processing light EL#1.

Incidentally, in a case where the movement direction of the beam spot BS#1 (the target irradiation area EA#1) is different from the movement direction of the beam spot BS#2 (the target irradiation area EA#2) as illustrated in FIG. 19B and FIG. 20B, the beam spot BS#1 (the target irradiation area EA#1) and the beam spot BS#2 (the target irradiation area EA#2) may be considered to move relative to each other. Similarly, in a case where the movement trajectory of the beam spot BS#1 (the target irradiation area EA#1) is different from the movement trajectory of the beam spot BS#2 (the target irradiation area EA#2), the beam spot BS#1 (the target irradiation area EA#1) and the beam spot BS#2 (the target irradiation area EA#2) may be considered to move relative to each other. In this case, the control apparatus 7 be considered to move the beam spot BS#1 (the target irradiation area EA#1) and the beam spot BS#2 (the target irradiation area EA#2) relative to each other by changing the movement aspect of at least one of the beam spots BS#1 (the target irradiation area EA#1) and the beam spot BS#2 (the target irradiation area EA#2).

The control apparatus 7 may control (for example, change) the shape of at least one of the beam spots BS#1 and BS#2, in addition to controlling the diameter of at least one of the beam spots BS#1 and BS#2. Namely, the control apparatus 7 may control (for example, change) the shape of at least one of the target irradiation areas EA#1 and EA#2. In this case, the irradiation optical system 211 may include an optical system that is configured to control (for example, change) the shape of at least one of the beam spots BS#1 and BS#2.

The control apparatus 7 may perform a control of changing the diameter of the beam spots BS#1 and BS#2 in a period during which the beam spots BS#1 and / or BS#2 are moving. For example, the control apparatus 7 may change the diameters of the beam spots BS#1 and BS#2 in accordance with their positions on the processing path.

### (2-4) Galvano-Focus-Linked Control Operation

As described above, the processing system SYS changes the condensed position CP#1 of the processing light EL#1 in the direction intersecting the build surface MS by using the focus control optical system 2145, and moves the target irradiation area EA#1 in the direction along the build surface MS by using the Galvano mirror 2146. In this case, the processing system SYS (especially the control apparatus 7) perform a Galvano-focus-linked control operation for controlling either one of the focus control optical system 2145 and the Galvano mirror 2146 based on a controlled amount of the other one of the focus control optical system 2145 and the Galvano mirror 2146. For example, the control apparatus 7 may perform the Galvano-focus-linked control operation for controlling the Galvano mirror 2146 based on the controlled amount of the focus control optical system 2145 (for example, an amount of change in the condensed position CP#1). For example, the control apparatus 7 may perform the Galvano-focus-linked control operation for controlling the focus control optical system 2145 based on the controlled amount of the Galvano mirror 2146 (for example, a movement distance of the target irradiation area EA#1, which is an amount of change in the position of the target irradiation area EA#1).

Similarly, the processing system SYS (especially the control apparatus 7) perform the Galvano-focus-linked control operation for controlling either one of the focus control optical system 2155 and the Galvano mirror 2156 based on a controlled amount of the other one of the focus control optical system 2155 and the Galvano mirror 2156. For example, the control apparatus 7 may perform the Galvano-focus-linked control operation for controlling the Galvano mirror 2156 based on the controlled amount of the focus control optical system 2155 (for example, an amount of change in the condensed position CP#2). For example, the control apparatus 7 may perform the Galvano-focus-linked control operation for controlling the focus control optical system 2155 based on the controlled amount of the Galvano mirror 2156 (for example, a movement distance of the target irradiation area EA#2, which is an amount of change in the position of the target irradiation area EA#2).

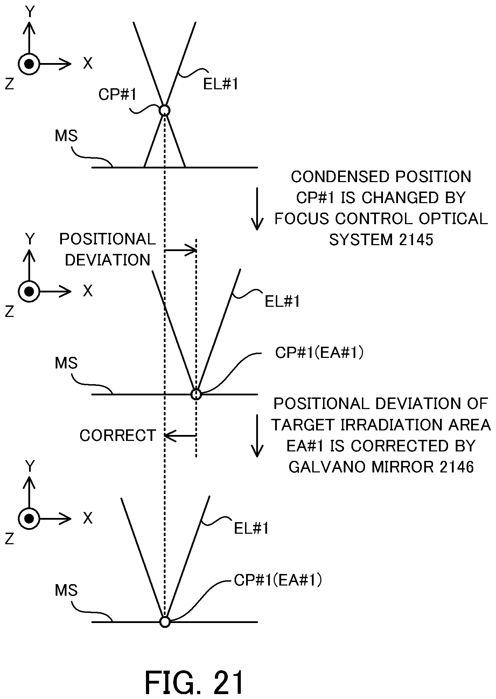

One example of a Galvano-focus-linked control operation for controlling the Galvano mirror 2146 based on the controlled amount of the focus control optical system 2145 is illustrated in FIG. 21. Specifically, a first upper drawing in FIG. 21 illustrates a positional relationship between the condensed position CP#1 and the build surface MS before the focus control optical system 2145 changes the condensed position CP#1. A second upper drawing in FIG. 21 illustrates the positional relationship between the condensed position CP#1 and the build surface MS after the focus control optical system 2145 changes the condensed position CP#1. As illustrated in FIG. 21, when the focus control optical system 2145 changes the condensed position CP#1 along the direction that intersects the build surface MS (in FIG. 21, the Z-axis direction), there is a possibility that the condensed position CP#1 moves unintentionally along the direction that is along the build surface MS (in FIG. 21, the direction intersecting the Z-axis) in some cases. Namely, there is a possibility that the target irradiation area #1 moves unintentionally along the direction that is along the build surface MS. Therefore, as illustrated in a third upper drawing in FIG. 21, the control apparatus 7 may control the Galvano mirror 2146 so as to cancel a movement of the condensed position CP#1 (namely, the movement of the irradiation position of the processing light EL#1) in the direction along the build surface MS which is caused by the focus control optical system 2145 changing the condensed position CP#1 along the direction intersecting the build surface MS. Namely, the control apparatus 7 may control the Galvano mirror 2146 so as to correct a positional deviation of the condensed position CP#1 (namely, a positional deviation of the irradiation position of the processing light EL#1) in the direction along the build surface MS which is caused by the focus control optical system 2145 changing the condensed position CP#1 along the direction intersecting the build surface MS. As a result, the processing system SYS can properly irradiate a desired position on the build surface MS with the processing light EL#1.

Incidentally, in a case where the condensed position CP#1 moves in the direction along the build surface MS by the focus control optical system 2145 changing the condensed position CP#1 along the direction intersecting the build surface MS, the processing system SYS may cancel the movement of the condensed position CP#1 (namely, the movement of the irradiation position of the processing light EL#1) in the direction along the build surface MS by using the head driving system 22 to move the processing head 21 in the direction along the build surface MS. However, when the processing head 21 moves, the supply position of the build material M also moves. As a result, there is a possibility that a technical problem arises that the processing system SYS cannot supply the build material M to the irradiation position of the processing light EL#1. In the present example embodiment, this technical problem does not arise because the irradiation position of the processing light EL#1 is moved independently from the supply position of the build material M.

Even in the case where the Galvano-focus-linked control operation for controlling the Galvano mirror 2156 based on the controlled amount of the focus control optical system 2155 is performed, the control apparatus 7 may perform the same operation as in a case where the Galvano-focus-linked control operation for controlling the Galvano mirror 2146 based on the controlled amount of the focus control optical system 2145 is performed. Namely, the control apparatus 7 may control the Galvano mirror 2156 so as to cancel a movement of the condensed position CP#2 (namely, the movement of the irradiation position of the processing light EL#2) in the direction along the build surface MS which is caused by the focus control optical system 2155 changing the condensed position CP#2 along the direction intersecting the build surface MS. Namely, the control apparatus 7 may control the Galvano mirror 2156 so as to correct a positional deviation of the condensed position CP#2 (namely, a positional deviation of the irradiation position of the processing light EL#2) in the direction along the build surface MS which is caused by the focus control optical system 2155 changing the condensed position CP#2 along the direction intersecting the build surface MS. As a result, the processing system SYS can properly irradiate a desired position on the build surface MS with the processing light EL#2.

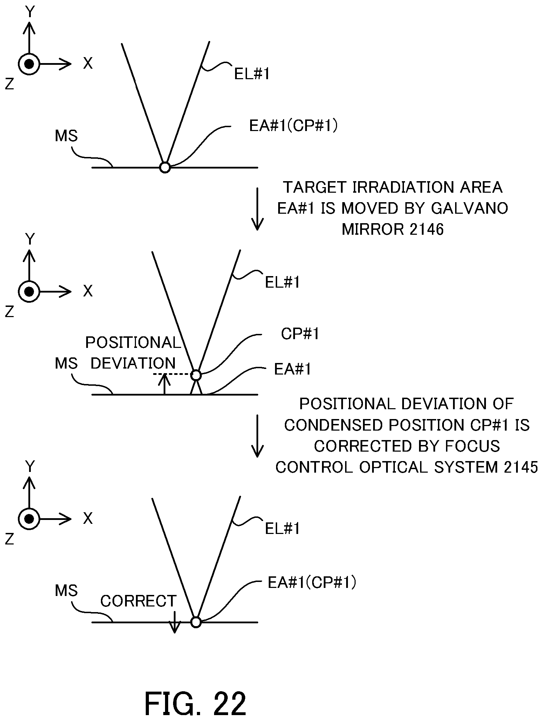

One example of the Galvano-focus-linked control operation for controlling the focus control optical system 2145 based on the controlled amount of the Galvano mirror 2146 is illustrated in FIG. 22. Specifically, a first upper drawing in FIG. 22 illustrates the position of the target irradiation area EA#1 on the build surface MS before the Galvano mirror 2146 moves the target irradiation area EA#1. A second upper drawing in FIG. 22 illustrates the position of the target irradiation area EA#1 on the build surface MS after the Galvano mirror 2146 moves the target irradiation area EA#1. As illustrated in FIG. 22, when the Galvano mirror 2146 moves the target irradiation area EA#1 (namely, moves the condensed position CP#1) along the direction that is along the build surface MS, there is a possibility that the condensed position CP#1 unintentionally moves along the direction that intersects the build surface MS (namely, the Z-axis direction) in some cases. Therefore, as illustrated in a third upper drawing in FIG. 22, the control apparatus 7 may control the focus control optical system 2145 so as to cancel a movement of the condensed position CP#1 in the direction intersecting the build surface MS which is caused by the Galvano mirror 2146 moving the target irradiation area EA#1 along the direction that is along the build surface MS. Namely, the control apparatus 7 may control the focus control optical system 2145 so as to correct a positional deviation of the condensed position CP#1 in the direction intersecting the build surface MS which is caused by the Galvano mirror 2146 moving the target irradiation area EA#1 along the direction that is along the build surface MS. As a result, the processing system SYS can set the condensed position CP#1 at a desired position in the direction intersecting the build surface MS. Namely, the processing system SYS can irradiate the build surface MS with the processing light EL#1 in a desired focus state.

Incidentally, in a case where the condensed position CP#1 moves in the direction intersecting the build surface MS by the Galvano mirror 2146 moving the target irradiation area EA#1 along the direction that is along the build surface MS, the processing system SYS may cancel the movement of the condensed position CP#1 in the direction intersecting the build surface MS by using the head driving system 22 to move the processing head 21 in the direction intersecting the build surface MS. However, when the processing head 21 moves, the supply position of the build material M also moves. As a result, there is a possibility that a technical problem arises that the processing system SYS cannot supply the build material M to the irradiation position of the processing light EL#1. In the present example embodiment, this technical problem does not arise because the irradiation position of the processing light EL#1 is moved independently from the supply position of the build material M.

Even in the case where the Galvano-focus-linked control operation for controlling the focus control optical system 2155 based on the controlled amount of the Galvano mirror 2156 is performed, the control apparatus 7 may perform the same operation as in a case where the Galvano-focus-linked control operation for controlling the focus control optical system 2145 based on the controlled amount of the Galvano mirror 2146 is performed. Namely, the control apparatus 7 may control the focus control optical system 2155 so as to cancel a movement of the condensed position CP#2 in the direction intersecting the build surface MS which is caused by the Galvano mirror 2156 moving the target irradiation area EA#2 along the direction that is along the build surface MS. Namely, the control apparatus 7 may control the focus control optical system 2155 so as to correct a positional deviation of the condensed position CP#2 in the direction intersecting the build surface MS which is caused by the Galvano mirror 2156 moving the target irradiation area EA#2 along the direction that is along the build surface MS. As a result, the processing system SYS can set the condensed position CP#2 at a desired position in the direction intersecting the build surface MS. Namely, the processing system SYS can irradiate the build surface MS with the processing light EL#2 in a desired focus state.

### (3) Technical Effect

As described above, the processing system SYS in the present example embodiment can perform the additive manufacturing by using the two processing lights EL#1 and EL#2. Namely, the processing system SYS can build the build object by using the two processing lights EL#1 and EL#2. Therefore, compared to a case where a single processing light EL is used to build the build object, the processing system SYS can build the build object appropriately. For example, as described above, the processing system SYS can improve the throughput of the additive manufacturing (namely, the throughput for building the build object) by performing the additive processing using the processing light EL#1 and the additive manufacturing using the processing light EL#2 in parallel. For example, as described above, the processing system SYS can efficiently preheat the build surface MS by using the processing light EL#2 and properly form the melt pool MP on the build surface MS by using the processing light EL#1. For example, as described above, the processing system SYS can build the build object by using the plurality of different types of build materials M whose absorption rates to the two processing lights EL#1 and EL#2 are different from each other. For example, as described above, the processing system SYS can build the build object whose surface is smoother by using the processing light EL#1 to build the build object and by using the processing light EL#2 to smooth the surface of the build object built by the processing light EL#1.

Furthermore, in the present example embodiment, the processing system SYS includes the first optical system 214 for controlling the processing light EL#1 and the second optical system 215 for controlling the processing light EL#2 separately and independently. Therefore, the processing system SYS can control the processing lights EL#1 and EL#2 separately and independently. As a result, the processing system SYS can control the irradiation aspects of the processing lights EL#1 and EL#2 more flexibly, compared to a case where the processing lights EL#1 and EL#2 cannot be controlled separately and independently.

### (4) Modified Example

Next, a modified example of the processing system SYS will be described.

### (4-1) First Modified Example

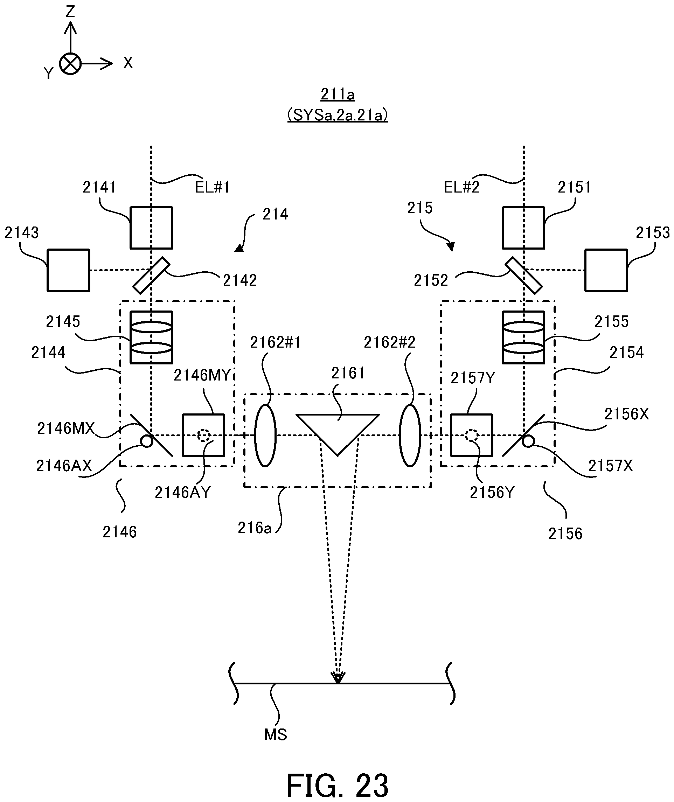

Firstly, a first modified example of the processing system SYS will be described. In the below-described description, the first modified example of the processing system SYS is referred to as a "processing system SYSa". The processing system SYSa is different from the above-described processing system SYS in that it includes a processing unit 2a instead of the processing unit 2. Other features of the processing system SYSa may be the same as other features of the processing system SYS. The processing unit 2a is different from the above-described processing unit 2 in that it includes a processing head 21a instead of the processing head 21. Other features of the processing unit 2a may be the same as other features of the processing unit 2. The processing head 21a is different from the above-described processing head 21 in that it includes an irradiation optical system 211a instead of the irradiation optical system 211. Other features of the processing head 21a may be the same as other features of the processing head 21. Therefore, in the below-described description, the irradiation optical system 211a in the first modified example will be described with reference to FIG. 23. FIG. 23 is a cross-sectional view that illustrates a configuration of the irradiation optical system 211a in the first modified example.

As illustrated in FIG. 23, the irradiation optical system 211a is different from the above-described irradiation optical system 211 in that it includes a third optical system 216a instead of the third optical system 216. Other features of the irradiation optical system 211a may be the same as other features of the irradiation optical system 211.

The third optical system 216a is different from the above-described third optical system 216 in that it includes two fθ lenses 2162 (specifically, fθ lenses 2162#1 and 2162#2). Other features of the third optical system 216a may be the same as other features of the third optical system 216.

In the first modified example, the processing light EL#1 emitted from the first optical system 214 enters the fθ lens 2162#1. The processing light EL#2 emitted from the second optical system 215 enters the fθ lens 2162#2. Each of the processing light EL#1 that has passed through the fθ lens 2162#1 and the processing light EL#2 that has passed through the fθ lens 2162#2 enters the prism mirror 2161. The prism mirror 2161 reflects each of the processing lights EL#1 and EL#2 toward the build surface MS. Namely, in the first modified example, the fθ lens 2162#1 emits the processing light EL#1 toward the build surface MS through the prism mirror 2161, and the fθ lens 2162#2 emits the processing light EL#2 toward the build surface MS through the prism mirror 2161.

Incidentally, in the first modified example, the irradiation optical system 211a may irradiate the build surface MS with the processing light EL#1 emitted from the fθ lens 2162#1 and the processing light EL#2 emitted from the fθ lens 2162#2 without using the prism mirror 2161. In this case, the irradiation optical system 211a may not include the prism mirror 2161. Furthermore, the fθ lenses 2162#1 and 2162#2 may be aligned with each other so that an optical axis of the fθ lens 2162#1 and an optical axis of the fθ lens 2162#2 intersect each other on the build surface MS or near the build surface MS. In a case where the irradiation optical system 211a includes the plurality of fθ lenses 2162#1 and 2162#2 as described in the first modified example, each of the fθ lenses 2162#1 and 2161 #2 may be referred to as the terminal optical member. Furthermore, in a case where each of the fθ lenses 2162#1 and 2162#2 includes a plurality of optical members, an optical member, which is positioned at a position closest to the build surface MS, among the optical members of each of the fθ lenses 2162#1 and 2162#2 may be referred to as the terminal optical member.

Even the processing system SYSa in the first modified example can achieve an effect that is the same as an effect achievable by the above-described processing system SYS.

### (4-2) Second Modified Example

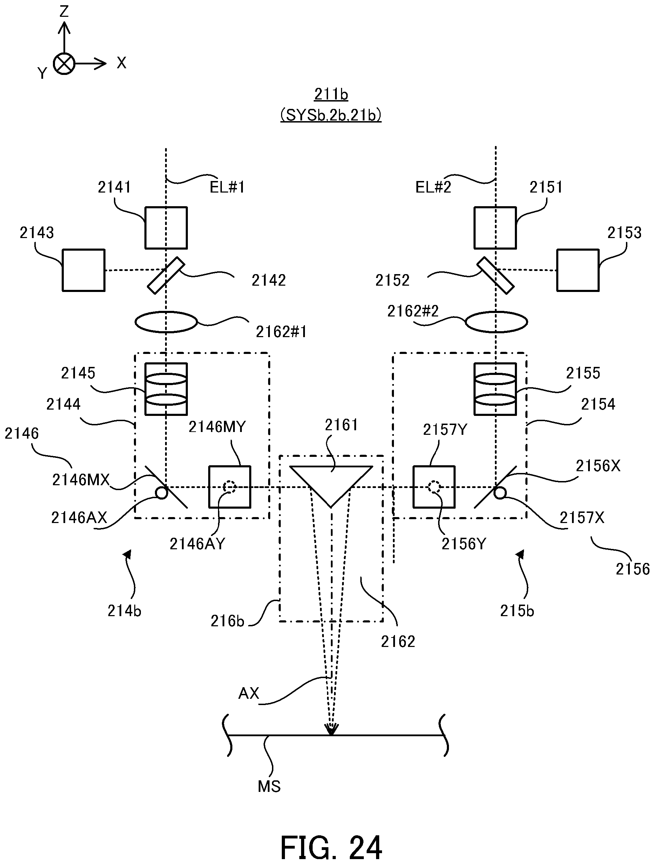

Next, a second modified example of the processing system SYS will be described. In the below-described description, the second modified example of the processing system SYS is referred to as a "processing system SYSb". The processing system SYSb is different from the above-described processing system SYSa in that it includes a processing unit 2b instead of the processing unit 2a. Other features of the processing system SYSb may be the same as other features of the processing system SYSa. The processing unit 2b is different from the above-described processing unit 2a in that it includes a processing head 21b instead of the processing head 21a. Other features of the processing unit 2b may be the same as other features of the processing unit 2a. The processing head 21b is different from the above-described processing head 21a in that it includes an irradiation optical system 211b instead of the irradiation optical system 211a. Other features of the processing head 21b may be the same as other features of the processing head 21a. Therefore, in the below-described description, the irradiation optical system 211b in the second modified example will be described with reference to FIG. 24. FIG. 24 is a cross-sectional view that illustrates a configuration of the irradiation optical system 211b in the second modified example.

As illustrated in FIG. 24, the irradiation optical system 211b is different from the above-described irradiation optical system 211a in that it includes a first optical system 214b, a second optical system 215b, and a third optical system 216b instead of the first optical system 214, the second optical system 215, and the third optical system 216a. Other features of the irradiation optical system 211b may be the same as other features of the irradiation optical system 211a.

The first optical system 214b is different from the above-described first optical system 214 in that it includes the fθ lens 2162#1. In the example illustrated in FIG. 24, the fθ lens 2162#1 is positioned on the optical path of the processing light EL#1 between the parallel plate 2142 and the Galvano scanner 2144. However, the position of the fθ lens 2162#1 is not limited to the position illustrated in FIG. 24. Other features of the first optical system 214b may be the same as other features of the first optical system 214a.

The second optical system 215b is different from the above-described second optical system 215 in that it includes the fθ lens 2162#2. In the example illustrated in FIG. 24, the fθ lens 2162#2 is positioned on the optical path of the processing light EL#2 between the parallel plate 2152 and the Galvano scanner 2154. However, the position of the fθ lens 2162#2 is not limited to the position illustrated in FIG. 24. Other features of the second optical system 215b may be the same as other features of the second optical system 215a.

The third optical system 216b is different from the above-described third optical system 216a in that it may not include the two fθ lenses 2162#1 and 2162#2. Other features of the third optical system 216b may be the same as other features of the third optical system 216a.

Incidentally, in the second modified example, the prism mirror 2161 having a plurality of reflective surfaces may be referred to as the terminal optical member. Moreover, the processing system SYSb in the second modified example may not include the third optical system 216b. In this case, the first optical system 214b and the second optical system 215b may be aligned with each other so that the optical axis of the first optical system 214b at an exit side and the optical axis of the second optical system 215b at an exit side intersect each other on the build surface MS or near the build surface MS. Incidentally, in the second modified example, the optical axis of the third optical system 2161 may be an axis extending in a direction of a vector that is obtained by combining normal vectors of each reflective surface of the prism mirror 2161. In a case where the optical axis of the first optical system 214b at the exit side and the optical axis of the second optical system 215b at the exit side are considered to be bent by the prism mirror 2161, the irradiation direction of the processing light EL#1 may mean a direction of the optical axis of the first optical system 214a at the exit side after a bending position, and the irradiation direction of the processing light EL#2 may mean a direction of the optical axis of the second optical system 215a at the exit side after a bending position.

Thus, the irradiation optical system 211b is different from the irradiation optical system 211a in that the positions of the two fθ lenses 2162#1 and 2162#2 are changed. Even the processing system SYSb in the second modified example including the irradiation optical system 211b can achieve an effect that is the same as an effect achievable by the above-described processing system SYSa.

### (4-3) Third Modified Example

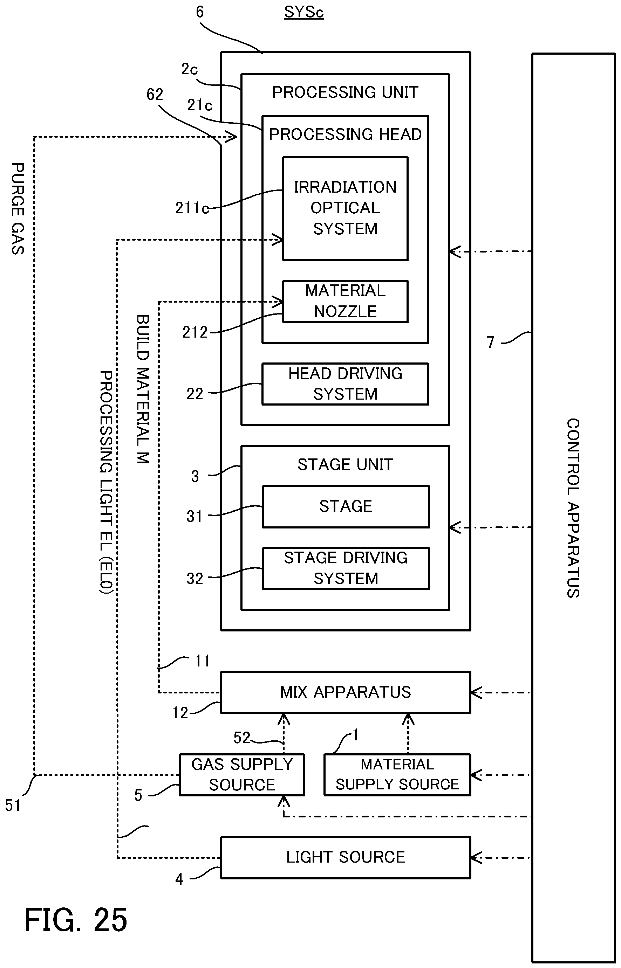

Next, with reference to FIG. 25, a third modified example of the processing system SYS will be described. FIG. 25 is a block diagram that illustrates a system configuration of the third modified example of the processing system SYS. Incidentally, in the below-described description, the third modified example of the processing system SYS is referred to as a "processing system SYSc".

As illustrated in FIG. 25, the processing system SYSc is different from the above-described processing system SYS in that it includes a processing unit 2c instead of the processing unit 2. Furthermore, the processing system SYSc is different from the above-described processing system SYS in that it may not include the plurality of light sources 4 (namely, may include a single light source 4). Other features of the processing system SYSc may be the same as other features of the processing system SYS. The processing unit 2c is different from the above-described processing unit 2 in that it includes a processing head 21c instead of the processing head 21. Other features of the processing unit 2c may be the same as other features of the processing unit 2. The processing head 21c is different from the above-described processing head 21 in that it includes an irradiation optical system 211c instead of the irradiation optical system 211. Other features of the processing head 21c may be the same as other features of the processing head 21.

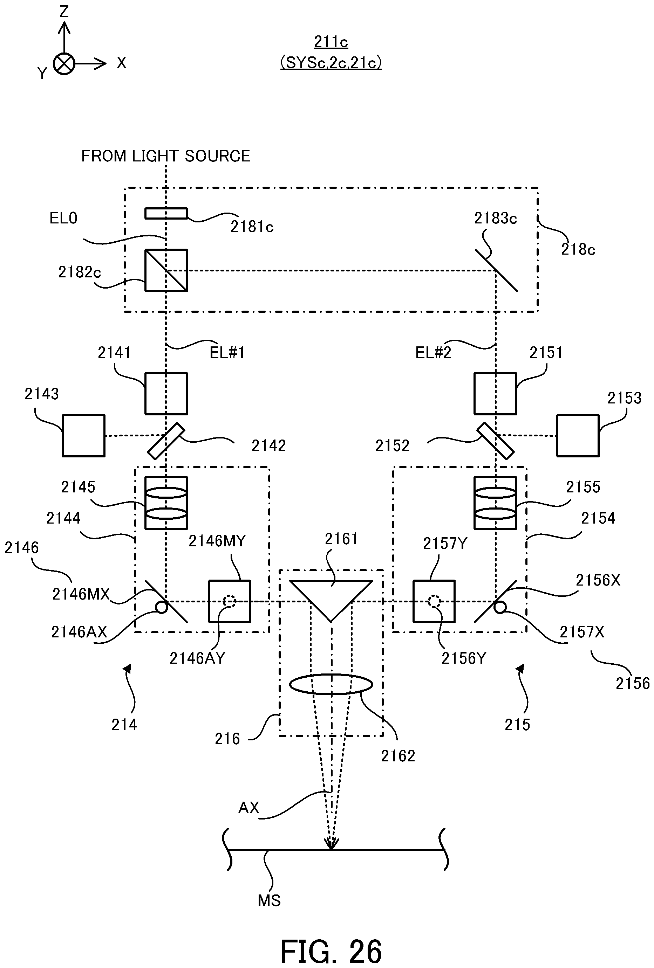

Next, with reference to FIG. 26, the irradiation optical system 211c in the third modified example will be described. FIG. 26 is a cross-sectional view that illustrates a configuration of the irradiation optical system 211c in the third modified example.

As illustrated in FIG. 26, the irradiation optical system 211c is different from the above-described irradiation optical system 211 in that it further includes a fourth optical system 218c. Other features of the irradiation optical system 211c may be the same as other features of the irradiation optical system 211.

The fourth optical system 218c includes a wave plate 2181c, a polarization beam splitter 2182c, and a mirror 2183c. The processing light EL (in the below-described description, it is referred to as "processing light EL0") emitted from the light source 4 enters the polarization beam splitter 2182c through the wave plate 2181c. p-polarized light included in the processing light EL0 passes through the polarization beam splitter 2182c. On the other hand, s-polarized light included in the processing light EL0 is reflected by the polarization beam splitter 2182c. The p-polarized light that has passed through the polarization beam splitter 2182c enters the first optical system 214 as the processing light EL#1. The s-polarized light that has been reflected by the polarization beam splitter 2182c enters the second optical system 215 as the processing light EL#2 through the mirror 2183c.

Incidentally, in the third modified example, the irradiation optical system 211c may change the intensity of the processing light EL#1 entering the first optical system 214 and the intensity of the processing light EL#2 entering the second optical system 215 by using the wave plate 2181c to change a polarization state (typically, it is a polarization direction, or it may be a direction of a major axis of elliptical polarization in the case of the elliptical polarization) of the processing light EL0 entering the polarization beam splitter 2182c. In a case where the processing light EL0 emitted from the light source 4 is linearly polarized light, a 1/2 wave plate may be used as the wave plate 2181c. The irradiation optical system 211c may change the polarization direction of the processing light EL0 emitted from the wave plate 2181c by rotating the wave plate 2181c, which is the 1/2 wave plate, around its optical axis.

The collimator lenses 2141 and 2151 in the third modified example convert the processing lights EL#1 and EL#2 divided by the fourth optical system 218c into the collimated light, respectively. However, at least one of the collimator lenses 2141 and 2151 may convert the processing light EL0 that has not been divided by the polarization beam splitter 2182c into the collimated light. In this case, a collimator lens may be positioned on an optical path at the light source side of wave plate 2181c instead of the collimator lenses 2141 and 2151. The collimator lens may be positioned on the optical path between the wave plate 2181c and the polarization beam splitter 2182c. This enables accurate polarization control because the processing light EL0 passing through the wave plate 2181c and the polarization beam splitter 2182c that are polarizing optical members is the collimated light.

Even the processing system SYSc in the third modified example can achieve an effect that is the same as an effect achievable by the above-described processing system SYS. Furthermore, the processing system SYSc can divide the processing light EL0 emitted from the single light source 4 into the two processing lights EL#1 and EL#2. Therefore, a cost of the processing system SYSc is reducible because the processing system SYSc may not include two light sources 4.

### (4-4) Fourth Modified Example

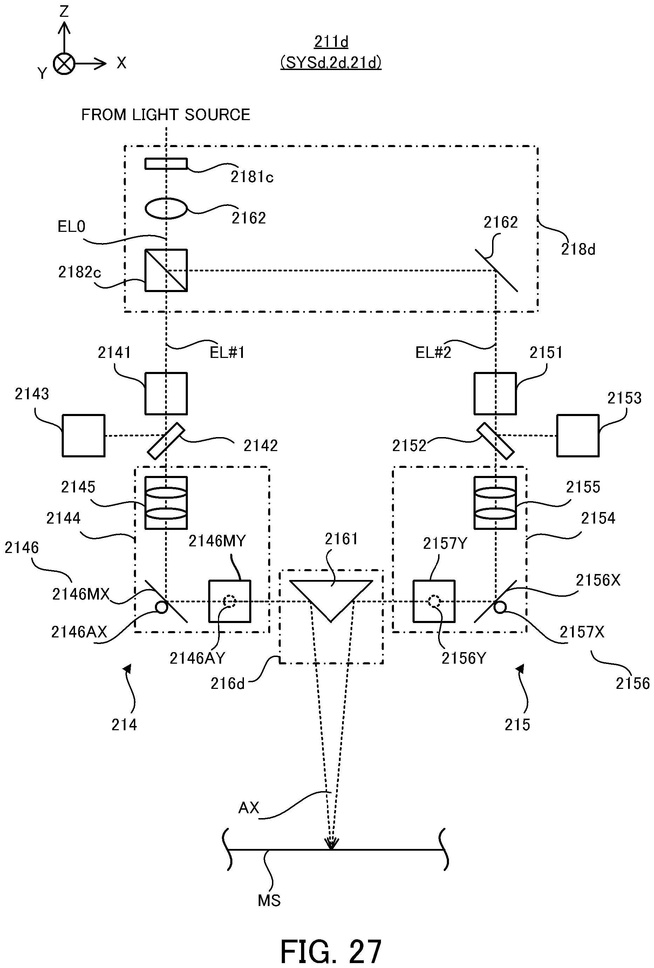

Next, a fourth modified example of the processing system SYS will be described. In the below-described description, the fourth modified example of the processing system SYS is referred to as a "processing system SYSd". The processing system SYSd is different from the above-described processing system SYSc in that it includes a processing unit 2d instead of the processing unit 2c. Other features of the processing system SYSd may be the same as other features of the processing system SYSc. The processing unit 2d is different from the above-described processing unit 2c in that it includes a processing head 21d instead of the processing head 21c. Other features of the processing unit 2d may be the same as other features of the processing unit 2c. The processing head 21d is different from the above-described processing head 21c in that it includes an irradiation optical system 211d instead of the irradiation optical system 211c. Other features of the processing head 21d may be the same as other features of the processing head 21c. Therefore, in the below-described description, the irradiation optical system 211d in the fourth modified example will be described with reference to FIG. 27. FIG. 27 is a cross-sectional view that illustrates a configuration of the irradiation optical system 211d in the fourth modified example.

As illustrated in FIG. 27, the irradiation optical system 211d is different from the above-described irradiation optical system 211c in that it includes a third optical system 216d and a fourth optical system 218d instead of the third optical system 216 and the fourth optical system 218c. Other features of the irradiation optical system 211d may be the same as other features of the irradiation optical system 211c.

The fourth optical system 218d is different from the above-described fourth optical system 218c in that it includes the fθ lens 2162. In the example illustrated in FIG. 27, the fθ lens 2162 is positioned on the optical path of the processing light EL0 between the wave plate 2181c and the polarization beam splitter 2182c. However, the position of the fθ lens 2162 is not limited to the position illustrated in FIG. 27. Other features of the fourth optical system 218d may be the same as other features of the fourth optical system 218c.

The third optical system 216d is different from the third optical system 216 described above in that it may not include the fθ lens 2162. Other features of the third optical system 216d may be the same as other features of the third optical system 216.

Even the processing system SYSd in the fourth modified example can achieve an effect that is the same as an effect achievable by the above-described processing system SYSc.

### (4-5) Fifth Modified Example

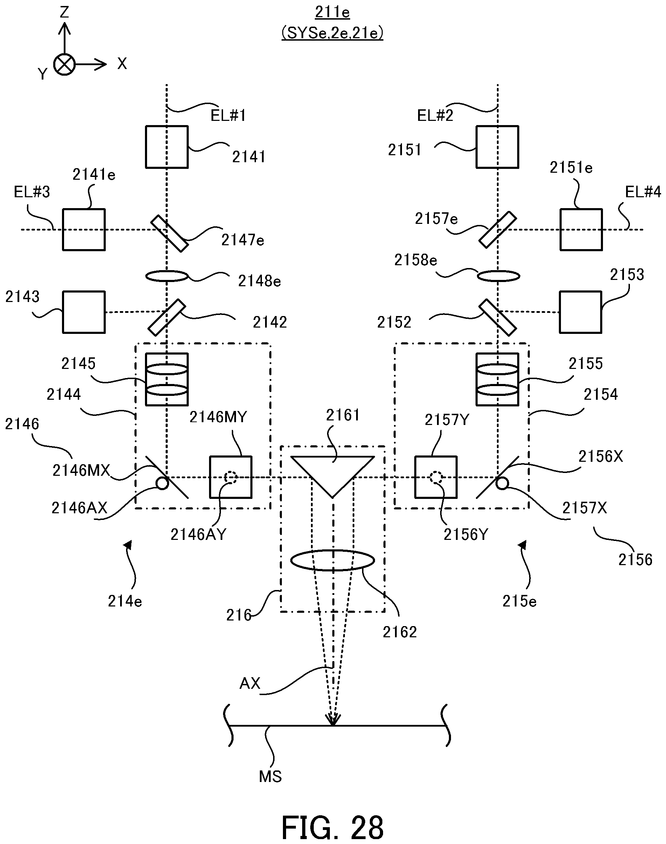

Next, a fifth modified example of the processing system SYS will be described. In the below-described description, the fifth modified example of the processing system SYS is referred to as a "processing system SYSe". The processing system SYSa is different from the above-described processing system SYS (alternatively, the processing systems SYSa to SYSd) in that it includes a processing unit 2e instead of the processing unit 2. Other features of the processing system SYSe may be the same as other features of the processing system SYS. The processing unit 2e is different from the above-described processing unit 2 in that it includes a processing head 21e instead of the processing head 21. Other features of the processing unit 2e may be the same as other features of the processing unit 2. The processing head 21e is different from the above-described processing head 21 in that it includes an irradiation optical system 211e instead of the irradiation optical system 211. Other features of the processing head 21e may be the same as other features of the processing head 21. Therefore, in the below-described description, the irradiation optical system 211e in the fifth modified example will be described with reference to FIG. 28. FIG. 28 is a cross-sectional view that illustrates a configuration of the irradiation optical system 211e in the fifth modified example.

As illustrated in FIG. 28, the irradiation optical system 211e is different from the above-described irradiation optical system 211 in that it includes a first optical system 214e and a second optical system 215e instead of the first optical system 214 and the second optical system 215. Other features of the irradiation optical system 211e may be the same as other features of the irradiation optical system 211.

The first optical system 214e is different from the above-described first optical system 214 in that it includes a collimator lens 2141e and a beam splitter 2147e. Other features of the first optical system 214e may be the same as other features of the first optical system 214.

Processing light EL#3 enters the collimator lens 2141e. The processing light EL#3 may be light whose wavelength band is the same as the wavelength band of the processing light EL#2 entering the second optical system 215e. In this case, the processing light EL#2 emitted from the light source 4#2 may enter the collimator lens 2141e as the processing light EL#3. Alternatively, the processing system SYSe may include a light source that generates the processing light EL#3 separately from the light source 4#2. However, the processing light EL#3 may be any light as long as it is usable to process the workpiece W.

The collimator lens 2141e converts the processing light EL#3 that has entered the collimator lens 2141e into collimated light. Incidentally, in a case where the processing light EL#3 that is the collimated light enters the first optical system 214e, the first optical system 214e may not include the collimator lens 2141e. Namely, an installation of the collimator lens 2141e may be omitted. Moreover, in a case where an optical fiber is positioned at an incident side of the beam splitter 2147e as an optical transmitting member for transmitting the processing light EL#3, the collimator lens 2141e is positioned so that a front focal point of the collimator lens 2141e may be positioned near an exit end of the optical fiber, and the collimator lens 2141e may convert the processing light EL#3, which is emitted from the optical fiber as a divergent light beam, into the collimated light. The processing light EL#3 that has been converted to the collimated light by the collimator lens 2141e enters the beam splitter 2147e. Furthermore, the processing light EL#1 that has been converted to the collimated light by the collimator lens 2141 also enters the beam splitter 2147e. The beam splitter 2147e serves as a combining optical system that combines the processing lights EL#1 and EL#3. Specifically, the processing light EL#1 passes through the beam splitter 2147e. The processing light EL#3 is reflected by the beam splitter 2147e. Both of the processing light EL#1 that has passed through the beam splitter 2147e and the processing light EL#3 that has been reflected by the beam splitter 2147e enter the parallel plate 2142. The build surface MS is irradiated with the processing lights EL#1 and EL#3, which has entered the parallel plate 2142, through the Galvano scanner 2144 and the third optical system 216. Therefore, in the fifth modified example, the first optical system 214e emits the processing lights EL#1 and EL#3 toward the third optical system 216, and the third optical system 216 irradiates the build surface MS with the processing lights EL#1 and EL#3.

The irradiation direction of the processing light EL#1 may be the same as the irradiation direction of the processing light EL#3. For example, the irradiation direction of each of the processing lights EL#1 and EL#3 may be a direction along the optical axis AX of the fθ lens 2162 (in FIG. 28, the Z-axis direction). Alternatively, the irradiation direction of the processing light EL#1 may be different from the irradiation direction of the processing light EL#3.

The irradiation optical system 211e may irradiate the build surface MS with the processing lights EL#1 and EL#3 simultaneously. Namely, the irradiation optical system 211e may irradiate the build surface MS with the processing light EL#3 in at least a part of a period during which the build surface MS is irradiated with the processing light EL#1. The irradiation optical system 211e may irradiate the build surface MS with the processing light EL#1 in at least a part of a period during which the build surface MS is irradiated with the processing light EL#3. Alternatively, the irradiation optical system 211e may irradiate the build surface MS with the processing lights EL#1 and EL#3 separately. Namely, the irradiation optical system 211e may irradiate the build surface MS with the processing light EL#3 in at least a part of a period during which the build surface MS is not irradiated with the processing light EL#1. The irradiation optical system 211e may irradiate the build surface MS with the processing light EL#1 in at least a part of a period during which the build surface MS is not irradiated with the processing light EL#3.

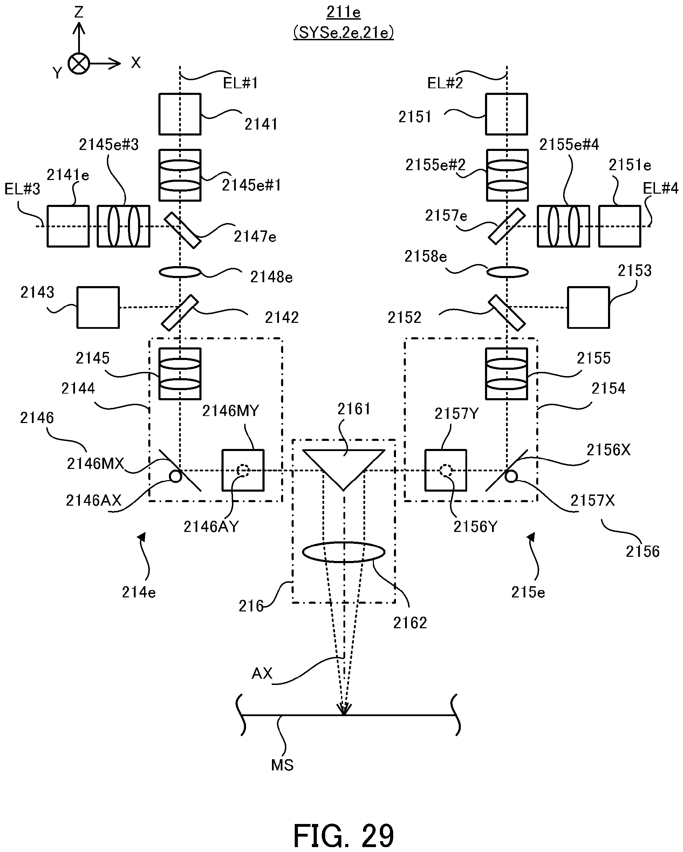

In a case where the wavelength band of the processing light EL#1 is different from a wavelength band of the processing light EL#3, there is a possibility that the condensed position CP of the processing light EL#1 with which the build surface MS is irradiated through the first optical system 214e and the third optical system 216 is deviated from a condensed position CP of the processing light EL#3 with which the build surface MS is irradiated through the first optical system 214e and the third optical system 216 along the irradiation directions of the processing lights EL#1 and EL#3 (in FIG. 28, the Z-axis direction). Namely, there is a possibility that chromatic aberration (especially, axial chromatic aberration or longitudinal chromatic aberration) occurs. Furthermore, there is a possibility that the position of the beam spot BS#1 formed on the build surface MS by the processing light EL#1 with which the build surface MS is irradiated through the first optical system 214e and the third optical system 216 is different from a position of a beam spot BS#3 (it is not illustrated in FIG. 28) formed on the build surface MS by the processing light EL#3 with which the build surface MS is irradiated through the first optical system 214e and the third optical system 216. Namely, there is a possibility that chromatic aberration (especially, lateral chromatic aberration or traverse chromatic aberration) occurs. Therefore, as illustrated in FIG. 29, the first optical system 214e may include an aberration correction member 2148e that corrects the chromatic aberration. The aberration correction member 2148e may include at least one of an achromatic lens, a chromatic lens, and a direct-vision prism. As a result, the processing system SYSe can irradiate the build surface MS with the processing lights EL#1 and EL#3 while reducing an effect of the chromatic aberration.

The control apparatus 7 may correct the chromatic aberration by controlling a driving amount of the Galvano mirror 2146 (namely, a rotational amount of at least one of the X scanning mirror 2146MX and the Y scanning mirror 2146MY). For example, the control apparatus 7 may correct the chromatic aberration by controlling the driving amount of the Galvano mirror 2146 so that the driving amount of the Galvano mirror 2146 in a case where the build surface MS is irradiated with the processing light EL#1 is different from the driving amount of the Galvano mirror 2146 in a case where the build surface MS is irradiated with the processing light EL#3. As a result, the processing system SYSe can irradiate the build surface MS with the processing lights EL#1 and EL#3 while reducing the effect of chromatic aberration.

Next, the second optical system 215e is different from the above-described second optical system 215 in that it includes a collimator lens 2151e and a beam splitter 2157e. Other features of the second optical system 215e may be the same as other features of the second optical system 215.

Processing light EL#4 enters the collimator lens 2151e. The processing light EL#4 may be light whose wavelength band is the same as the wavelength band of the processing light EL#1 entering the first optical system 214e. In this case, the processing light EL#1 emitted from the light source 4#1 may enter the collimator lens 2151e as the processing light EL#4. Alternatively, the processing system SYSe may include a light source that generates the processing light EL#4 separately from the light source 4#1. However, the processing light EL#4 may be any light as long as it is usable to process the workpiece W.

The collimator lens 2151e converts the processing light EL#4 that has entered the collimator lens 2151e into collimated light. Incidentally, in a case where the processing light EL#4 that is the collimated light enters the second optical system 215e, the second optical system 215e may not include the collimator lens 2151e. Namely, an installation of the collimator lens 2151e may be omitted. Moreover, in a case where an optical fiber is positioned at an incident side of the beam splitter 2157e as an optical transmitting member for transmitting the processing light EL#4, the collimator lens 2151e may be positioned so that a front focal point of the collimator lens 2151e is positioned near an exit end of the optical fiber, and the collimator lens 2151e may convert the processing light EL#4, which is emitted from the optical fiber as a divergent light beam, into the collimated light. The processing light EL#4 that has been converted to the collimated light by the collimator lens 2151e enters the beam splitter 2157e. Furthermore, the processing light EL#2 that has been converted to the collimated light by the collimator lens 2151 also enters the beam splitter 2157e. The beam splitter 2157e serves as a combining optical system that combines the processing lights EL#2 and EL#4. Specifically, the processing light EL#2 passes through the beam splitter 2157e. The processing light EL#4 is reflected by the beam splitter 2157e. Both of the processing light EL#2 that has passed through the beam splitter 2157e and the processing light EL#4 that has been reflected by the beam splitter 2157e enter the parallel plate 2152. The build surface MS is irradiated with the processing lights EL#2 and EL#4, which has entered the parallel plate 2152, through the Galvano scanner 2154 and the third optical system 216. Therefore, in the fifth modified example, the second optical system 215e emits the processing lights EL#2 and EL#4 toward the third optical system 216, and the third optical system 216 irradiates the build surface MS with the processing lights EL#2 and EL#4.

The irradiation direction of the processing light EL#2 may be the same as the irradiation direction of the processing light EL#4. For example, the irradiation direction of each of the processing lights EL#2 and EL#4 may be a direction along the optical axis AX of the fθ lens 2162 (in FIG. 28, the Z-axis direction). Alternatively, the irradiation direction of the processing light EL#2 may be different from the irradiation direction of the processing light EL#4.

The irradiation optical system 211e may irradiate the build surface MS with the processing lights EL#2 and EL#4 simultaneously. Namely, the irradiation optical system 211e may irradiate the build surface MS with the processing light EL#4 in at least a part of a period during which the build surface MS is irradiated with the processing light EL#2. The irradiation optical system 211e may irradiate the build surface MS with the processing light EL#2 in at least a part of a period during which the build surface MS is irradiated with the processing light EL#4. Alternatively, the irradiation optical system 211e may irradiate the build surface MS with the processing lights EL#2 and EL#4 separately. Namely, the irradiation optical system 211e may irradiate the build surface MS with the processing light EL#4 in at least a part of a period during which the build surface MS is not irradiated with the processing light EL#2. The irradiation optical system 211e may irradiate the build surface MS with the processing light EL#2 in at least a part of a period during which the build surface MS is not irradiated with the processing light EL#4.

In a case where the wavelength band of the processing light EL#2 is different from a wavelength band of the processing light EL#4, there is a possibility that the condensed position CP of the processing light EL#2 with which the build surface MS is irradiated through the second optical system 215e and the third optical system 216 is deviated from a condensed position CP of the processing light EL#4 with which the build surface MS is irradiated through the second optical system 215e and the third optical system 216 along the irradiation directions of the processing lights EL#2 and EL#4 (in FIG. 28, the Z-axis direction). Namely, there is a possibility that chromatic aberration (especially, axial chromatic aberration or longitudinal chromatic aberration) occurs. Furthermore, there is a possibility that the position of the beam spot BS#1 formed on the build surface MS by the processing light EL#2 with which the build surface MS is irradiated through the second optical system 215e and the third optical system 216 is different from a position of a beam spot BS#4 (it is not illustrated in FIG. 28) formed on the build surface MS by the processing light EL#4 with which the build surface MS is irradiated through the second optical system 215e and the third optical system 216. Namely, there is a possibility that chromatic aberration (especially, lateral chromatic aberration or traverse chromatic aberration) occurs. Therefore, as illustrated in FIG. 28, the second optical system 215e may include an aberration correction member 2158e that corrects the chromatic aberration. The aberration correction member 2158e may include at least one of an achromatic lens, a chromatic lens, and a direct-vision prism. As a result, the processing system SYSe can irradiate the build surface MS with the processing lights EL#2 and EL#4 while reducing an effect of the chromatic aberration.

The control apparatus 7 may correct the chromatic aberration by controlling a driving amount of the Galvano mirror 2156 (namely, a rotational amount of at least one of the X scanning mirror 2156MX and the Y scanning mirror 2156MY). For example, the control apparatus 7 may correct the chromatic aberration by controlling the driving amount of the Galvano mirror 2156 so that the driving amount of the Galvano mirror 2156 in a case where the build surface MS is irradiated with the processing light EL#2 is different from the driving amount of the Galvano mirror 2156 in a case where the build surface MS is irradiated with the processing light EL#4. As a result, the processing system SYSe can irradiate the build surface MS with the processing lights EL#2 and EL#4 while reducing the effect of chromatic aberration.

Even the processing system SYSe in the fifth modified example can achieve an effect that is the same as an effect achievable by the above-described processing system SYS.

Incidentally, as illustrated in FIG. 29, the first optical system 214e may include a focus control optical system 2145e#1 that changes the condensed position CP of the processing light EL#1 separately and independently from the condensed position of the processing light EL#3, in addition to or instead of the focus control optical system 2145 that collectively changes the condensed position CP of the processing light EL#1 and the condensed position of the processing light EL#3. The first optical system 214e may include a focus control optical system 2145e#3 that changes the condensed position CP of the processing light EL#3 separately and independently from the condensed position of the processing light EL#1, in addition to or instead of the focus control optical system 2145. In this case, the processing system SYSe can irradiate the build surface with the processing lights EL#1 and EL#3 while reducing the effect of chromatic aberration.

Moreover, the second optical system 215e may include a focus control optical system 2155e#2 that changes the condensed position CP of the processing light EL#2 separately and independently from the condensed position of the processing light EL#4, in addition to or instead of the focus control optical system 2155 that collectively changes the condensed position CP of the processing light EL#2 and the condensed position of the processing light EL#4. The second optical system 215e may include a focus control optical system 2155e#4 that changes the condensed position CP of the processing light EL#4 separately and independently from the condensed position of the processing light EL#2, in addition to or instead of the focus control optical system 2155. In this case, the processing system SYSe can irradiate the build surface with the processing lights EL#2 and EL#4 while reducing the effect of chromatic aberration.

Moreover, the first optical system 214e may include a power meter that detects the intensity of the processing light EL#1 and a power meter that detects the intensity of the processing light EL#3 separately. In this case, the processing lights EL#1 and EL#3 that have been reflected by the parallel plate 2142 may enter the two power meters through an optical member that separating the processing lights EL#1 and EL#3, respectively. A dichroic mirror is one example of the optical member that separates the processing lights EL#1 and EL#3.

Moreover, the second optical system 215e may include a power meter that detects the intensity of the processing light EL#2 and a power meter that detects the intensity of the processing light EL#4 separately. In this case, the processing lights EL#2 and EL#4 that have been reflected by the parallel plate 2152 may enter the two power meters through an optical member that separating the processing lights EL#2 and EL#4, respectively. A dichroic mirror is one example of the optical member that separates the processing lights EL#2 and EL#4.

### (4-6) Sixth Modified Example

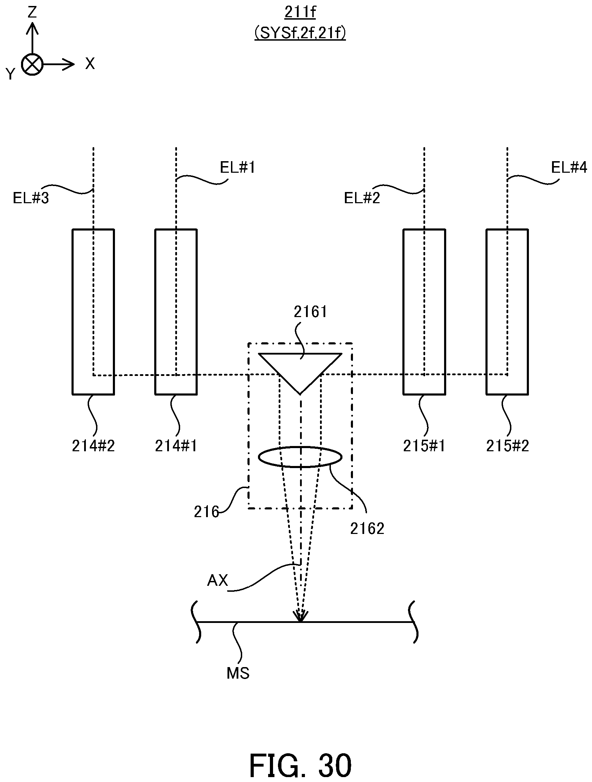

Next, a sixth modified example of the processing system SYS will be described. In the below-described description, the sixth modified example of the processing system SYS is referred to as a "processing system SYSf'. The processing system SYSf is different from the above-described processing system SYSe in that it includes a processing unit 2f instead of the processing unit 2e. Other features of the processing system SYSf may be the same as other features of the processing system SYSe. The processing unit 2f is different from the above-described processing unit 2e in that it includes a processing head 21f instead of the processing head 21e. Other features of the processing unit 2f may be the same as other features of the processing unit 2e. The processing head 21f is different from the above-described processing head 21e in that it includes an irradiation optical system 211f instead of the irradiation optical system 211e. Other features of the processing head 21f may be the same as other features of the processing head 21e. Therefore, in the below-described description, the irradiation optical system 211f in the sixth modified example will be described with reference to FIG. 30 FIG. 30s a cross-sectional view that illustrates a configuration of the irradiation optical system 211fin the sixth modified example.

As described above, in the fifth modified example, the irradiation optical system 211e includes the first optical system 214e that emits the processing lights EL#1 and EL#3 toward the third optical system 216. On the other hand, in the sixth modified example, as illustrated in FIG. 30, the irradiation optical system 211f includes the first optical system 214 (214#1) that emits the processing light EL#1 toward the third optical system 216 and the first optical system 214 (214#2) that emits the processing light EL#3 toward the third optical system 216 separately. Similarly, in the fifth modified example, the irradiation optical system 211e includes the second optical system 215e that emits the processing lights EL#2 and EL#4 toward the third optical system 216. On the other hand, in the sixth modified example, as illustrated in FIG. 30, the irradiation optical system 211f includes the second optical system 215 (215#1) that emits processing light EL#2 toward third optical system 216 and the second optical system 215 (215#2) that emits processing light EL#4 toward third optical system 216 separately. Namely, the irradiation optical system 211f is different from the irradiation optical system 211e in that it includes four optical systems (namely, the first optical systems 214#1 and 214#2 and the second optical systems 215#1 and 215#2) that emit the four processing lights EL#1 to EL#4 toward third optical system 216, respectively. Other features of the irradiation optical system 211f may be the same as other features of the irradiation optical system 211e.

Even the processing system SYSf in the sixth modified example can achieve an effect that is the same as an effect achievable by the above-described processing system SYSe.

### (4-7) Other Modified Example

The light source 4 of the processing system SYS may be replaceable. For example, in a case where the processing system SYS includes a first light source 4 that emits the processing light EL having a first wavelength, the first light source 4 may be replaced with a second light source 4 that emits the processing light EL having a second wavelength different from the first wavelength. For example, in a case where the processing system SYS includes a third light source 4 that emits the processing light EL having a first intensity, the third light source 4 may be replaced with a fourth light source 4 that emits the processing light EL having a fourth wavelength different from the first intensity. In a case where the processing system SYS includes the light source 4 that has deteriorated over time, the light source 4 may be replaced with a new light source 4.

In the above-described description, the processing system SYS melts the build material M by irradiating the build material M with the processing light EL. However, the processing system SYS may melt the build material M by irradiating the build material M with any energy beam. At least one of a charged particle beam, an electromagnetic wave and the like is one example of any energy beam. A least one of an electron beam, an ion beam and the like is one example of the charged particle beam.

In the above-described description, the processing unit 2 builds the 3D structural object ST by performing the additive manufacturing based on the Laser Metal Deposition. However, the processing unit 2 may build the 3D structural object ST by performing the additive manufacturing based on another method for building the 3D structural object. At least one of a PBF (Powder Bed Fusion) such as a SLS (Selective Laser Sintering), a Binder Jetting, a Material Jetting, a SLA (Stereolithography), and a LMS (Laser Metal Fusion) is one example of another method for building the 3D structural object. Alternatively, the processing unit 2 may build the 3D structural object ST by performing a subtractive manufacturing in addition to or instead of performing the additive manufacturing. The processing unit 2 may build the 3D structural object ST by performing a machining-processing in addition to or instead of performing at least one of the additive manufacturing and the subtractive manufacturing.

The processing system SYS may perform both of the additive manufacturing and the subtracting manufacturing. For example, the processing system SYS illustrated in FIG. 1 to FIG. 3 may perform the additive manufacturing by using either one of the processing lights EL#1 and EL#2, and may perform the subtracting manufacturing by using the other one of the processing lights EL#1 or EL#2. For example, the processing system SYSe illustrated in FIG. 28 or the processing system SYSf illustrated in FIG. 30 may perform the additive manufacturing by using at least one of the processing lights EL#1 to EL#3 and may perform the subtracting manufacturing by using at least other one of the processing lights EL#1 to EL#4. In this case, the processing system SYS, SYSe or SYSf may perform the additive manufacturing and the subtracting manufacturing simultaneously. In a case where the processing system SYS, SYSe or SYSf may not perform the additive manufacturing and the subtracting manufacturing simultaneously, the processing system SYS, SYSe or SYSf may perform the additive manufacturing and the subtracting manufacturing by using the same processing light EL.

In addition to at least one of the additive manufacturing and subtractive manufacturing, the processing system SYS may perform a remelt processing for reducing a flatness of the surface (namely, for reducing a surface roughness, for making the surface closer to a flat surface) of the workpiece W (alternatively, the build object built on the workpiece W) processed by the additive manufacturing or the subtractive manufacturing, in addition to or instead of at least one of the additive manufacturing and the subtractive manufacturing. For example, the processing system SYS illustrated in FIG. 1 to FIG. 3 may perform at least one of the additive manufacturing and the subtractive manufacturing by using either one of the processing lights EL#1 and EL#2, and may perform the remelt processing by using the other one of the processing lights EL#1 or EL#2. For example, the processing system SYSe illustrated in FIG. 28 or the processing system SYSf illustrated in FIG. 30 may perform at least one of the additive manufacturing and the subtractive manufacturing by using at least one of the processing lights EL#1 to EL#3 and may perform the remelt processing by using at least other one of the processing lights EL#1 to EL#4. In this case, the processing system SYS, SYSe or SYSf may perform the remelt processing and at least one of the additive manufacturing and the subtractive manufacturing simultaneously. In a case where the processing system SYS, SYSe or SYSf may not perform the remelt processing and at least one of the additive manufacturing and the subtracting manufacturing simultaneously, the processing system SYS, SYSe or SYSf may perform the remelt processing and at least one of the additive manufacturing and the subtracting manufacturing by using the same processing light EL.

The above-described processing unit 2 (especially, the processing head 21) may be attached to a robot. For example, the processing unit 2 (especially, the processing head 21) may be attached to a welding robot for performing a welding. For example, the processing unit 2 (especially, the processing head 21) may be attached to a self-propelled mobile robot.

### (5) Supplementary Note

Regarding the above-described example embodiment, below described Supplementary notes are further disclosed.

### [Supplementary Note 1]

A processing apparatus including:
an irradiation optical system that is configured to irradiate an object with first processing light that is emitted from a first light source, and second processing light that is emitted from a second light source different from the first light source and whose peak wavelength is different from that of the first processing light; and
a material supply member that is configured to supply a build material to a melt pool formed by the first and second processing lights,
wherein
the peak wavelength of the second processing light is shorter than the peak wavelength of the first processing light, and
a second area that is irradiated with the second processing light is larger than a first area that is irradiated with the first processing light.

### [Supplementary Note 2]

The processing apparatus according to the Supplementary Note 1, wherein
a wavelength band of the first processing light is different from a wavelength band of the second processing light.

### [Supplementary Note 3]

The processing apparatus according to the Supplementary Note 1 or 2, wherein
an absorption rate of the object to the second processing light is higher than an absorption rate of the object to the first processing light.[Supplementary Note 4]

The processing apparatus according to any one of clams 1 to 3, wherein
the first processing light includes infrared light, and
the second processing light includes visible light.

### [Supplementary Note 5]

The processing apparatus according to any one of clams 1 to 4, wherein
the build material includes copper.

### [Supplementary Note 6]

The processing apparatus according to any one of clams 1 to 5, wherein
the irradiation optical system includes:
a first optical system that emits the first processing light; and
a second optical system that emits the second processing light.

### [Supplementary Note 7]

The processing apparatus according to the Supplementary Note 6, wherein
the irradiation optical system includes a third optical system to which the first processing light emitted from the first optical system and the second processing light emitted from the second optical system enter and which irradiates the object with the entering first and second processing lights.

### [Supplementary Note 8]

The processing apparatus according to the Supplementary Note 7, wherein
the third optical system includes a terminal optical member through which the first processing light and the second processing light pass and which is positioned at a position closest to the object among optical members of the third optical system.

### [Supplementary Note 9]

The processing apparatus according to the Supplementary Note 7 or 8, wherein
the third optical system includes a condensing optical system that condenses the first processing light and the second processing light on the object.

### [Supplementary Note 10]

The processing apparatus according to any one of clams 6 to 9, wherein
the first optical system includes: a first condensed position change member that is configured to change a condensed position of the first processing light along an irradiation direction of the first processing light; and a first deflection member that is configured to deflect the first processing light so as to change a first irradiation position that is irradiated with the first processing light along a direction intersecting the irradiation direction of the first processing light,
the second optical system includes: a second condensed position change member that is configured to change a condensed position of the second processing light along the irradiation direction of the first processing light; and a second deflection member that is configured to deflect the second processing light so as to change a second irradiation position that is irradiated with the second processing light along a direction intersecting the irradiation direction of the first processing light.

### [Supplementary Note 11]

The processing apparatus according to any one of clams 1 to 10, wherein
the irradiation optical system irradiates a surface of the object with the first processing light and the second processing light so that an irradiation aspect of the first processing light is different from an irradiation aspect of the second processing light.

### [Supplementary Note 12]

The processing apparatus according to the Supplementary Note 11, wherein
the irradiation aspect includes at least one of an intensity, an intensity distribution, an irradiation period, an irradiation timing, a diameter of a spot formed on the surface of the object, and a movement aspect of an irradiation position on the surface of the object.

### [Supplementary Note 13]

The processing apparatus according to any one of clams 1 to 12, wherein
the irradiation optical system irradiates the object with the first processing light and the second processing light so that a peak intensity of the first processing light is higher than a peak intensity of the second processing light.

### [Supplementary Note 14]

The processing apparatus according to any one of clams 1 to 13, wherein
the irradiation optical system irradiates the object with the first processing light and the second processing light so that a size of an area that is scanned per unit time with the second processing light on a surface of the object is larger than a size of an area that is scanned per unit time with the first processing light on a surface of the object.

### [Supplementary Note 15]

The processing apparatus according to any one of clams 1 to 14, wherein
the irradiation optical system irradiates the object with the first processing light and the second processing light so that (i) a period during which the object is irradiated with the first processing light overlaps with a period during which the object is irradiated with the second processing light, and (ii) an intensity of the first processing light is higher than an intensity of the second processing light.

### [Supplementary Note 16]

The processing apparatus according to any one of clams 1 to 15, wherein
the irradiation optical system irradiates the object with the first processing light and the second processing light so that (i) one part of the object is irradiated with the second processing light and then the one part of the object is irradiated with the first processing light, and (ii) an intensity of the first processing light is higher than an intensity of the second processing light.

### [Supplementary Note 17]

The processing apparatus according to any one of clams 1 to 16, wherein
the irradiation optical system irradiates the object with the first processing light and the second processing light so that (i) the object is irradiated with the first processing light multiple times in at least a part of a period during which the object is irradiated with the second processing light, and (ii) an intensity of the first processing light is higher than an intensity of the second processing light.

### [Supplementary Note 18]

The processing apparatus according to any one of clams 1 to 17, wherein
the irradiation optical system irradiates the object with the first processing light and the second processing light so that (i) each of a first irradiation position that is irradiated with the first processing light and a second irradiation position that is irradiated with the second processing light in a first plane intersecting an irradiation direction of the first processing light reciprocates regularly along a movement direction in the first plane, (ii) an intensity of the first processing light at at least one of a first reversal timing at which a movement direction of the first irradiation position is reversed in the movement direction and an overlap timing at which the first irradiation position overlaps with the second irradiation position is lower than an intensity of the first processing light at a timing that is different from the first reversal timing and the overlap timing, and (iii) an intensity of the second processing light at at least one of a second reversal timing at which a movement direction of the second irradiation position is reversed in the movement direction and the overlap timing is lower than an intensity of the second processing light at a timing that is different from the second reversal timing and the overlap timing.

### [Supplementary Note 19]

The processing apparatus according to any one of clams 1 to 17, wherein
the irradiation optical system irradiates the object with the first processing light and the second processing light so that (i) a first irradiation position that is irradiated with the first processing light in a first plane intersecting an irradiation direction of the first processing light reciprocates regularly along a first movement direction in the first plane, (ii) a second irradiation position that is irradiated with the second processing light in the first plane reciprocates regularly along a second movement direction that is along the first plane and that intersects the first movement direction, and (iii) a diameter of a sport formed on the object by the second processing light is larger than a diameter of a sport formed on the object by the first processing light.

### [Supplementary Note 20]

The processing apparatus according to any one of clams 1 to 17, wherein
the irradiation optical system irradiates the object with the first processing light and the second processing light so that (i) a first irradiation position that is irradiated with the first processing light in a first plane intersecting an irradiation direction of the first processing light moves along a first movement trajectory, (ii) a second irradiation position that is irradiated with the second processing light in the first plane moves along a second movement trajectory that is different from the first movement trajectory, and (iii) a diameter of a sport formed on the object by the second processing light is larger than a diameter of a sport formed on the object by the first processing light.

### [Supplementary Note 21]

The processing apparatus according to any one of clams 1 to 20, wherein
the irradiation optical system is further configured to irradiate the object with third processing light whose wavelength band is the same as a wavelength band of the second processing light and fourth processing light whose wavelength band is the same as a wavelength band of the first processing light.

### [Supplementary Note 22]

The processing apparatus according to the Supplementary Note 21, wherein
the irradiation optical system includes:
a first optical system that emits the first and third processing lights; and
a second optical system that emits the second and fourth processing lights.

### [Supplementary Note 23]

The processing apparatus according to the Supplementary Note 22, wherein
the first optical system includes: a first condensed position change member that is configured to change a condensed position of each of the first and third processing lights along an irradiation direction of the first processing light; and a first deflection member that is configured to deflect the first and the third processing light so as to change each of a first irradiation position that is irradiated with the first processing light and a third irradiation position that is irradiated with the third processing light along a direction intersecting the irradiation direction of the first processing light,
the second optical system includes: a second condensed position change member that is configured to change a condensed position of each of the second and fourth processing lights along the irradiation direction of the first processing light; and a second deflection member that is configured to deflect the second and fourth processing lights so as to change a second irradiation position that is irradiated with the second processing light and a fourth irradiation position that is irradiated with the fourth processing light along a direction intersecting the irradiation direction of the first processing light.

### [Supplementary Note 24]

The processing apparatus according to the Supplementary Note 23, wherein
a driving amount of the first deflection member in a case where the first optical system irradiates one part of the object with the first processing light is different form a driving amount of the first deflection member in a case where the first optical system irradiates the one part of the object with the third processing light,
a driving amount of the second deflection member in a case where the second optical system irradiates one part of the object with the second processing light is different form a driving amount of the second deflection member in a case where the second optical system irradiates the one part of the object with the fourth processing light.

### [Supplementary Note 25]

The processing apparatus according to any one of the Supplementary Notes 22 to 24, wherein
the first optical system includes a first aberration correction member that corrects chromatic aberration due to the first and third processing lights, and
the second optical system includes a second aberration correction member that corrects chromatic aberration due to the second and fourth processing lights.

### [Supplementary Note 26]

The processing apparatus according to the Supplementary Note 21, wherein
the irradiation optical system includes:
a first optical system that emits the first processing light;
a second optical system that emits the second processing light;
a third optical system that emits the third processing light; and
a fourth optical system that emits the fourth processing light.

### [Supplementary Note 27]

The processing apparatus according to the Supplementary Note 26, wherein
the first optical system includes: a first condensed position change member that is configured to change a condensed position of the first processing light along an irradiation direction of the first processing light; and a first deflection member that is configured to deflect the first processing light so as to change a first irradiation position that is irradiated with the first processing light along a direction intersecting the irradiation direction of the first processing light,
the second optical system includes: a second condensed position change member that is configured to change a condensed position of the second processing light along the irradiation direction of the first processing light; and a second deflection member that is configured to deflect the second processing light so as to change a second irradiation position that is irradiated with the second processing light along a direction intersecting the irradiation direction of the first processing light,
the third optical system includes: a third condensed position change member that is configured to change a condensed position of the third processing light along the irradiation direction of the first processing light; and a third deflection member that is configured to deflect the third processing light so as to change a third irradiation position that is irradiated with the third processing light along a direction intersecting the irradiation direction of the first processing light,
the fourth optical system includes: a fourth condensed position change member that is configured to change a condensed position of the fourth processing light along the irradiation direction of the first processing light; and a fourth deflection member that is configured to deflect the fourth processing light so as to change a fourth irradiation position that is irradiated with the fourth processing light along a direction intersecting the irradiation direction of the first processing light.

### [Supplementary Note 28]

The processing apparatus according to any one of clams 1 to 27 further including a cooling apparatus that is configured to cool an optical member included in the irradiation optical system, wherein
the cooling apparatus cools the optical member so that a cooling aspect of a first part of the optical member which the first processing light enters is different from a cooling aspect of a second part of the optical member which the second processing light enters.

### [Supplementary Note 29]

The processing apparatus according to the Supplementary Note 28, wherein
the first part is cooled faster than the second part by the cooling apparatus.

### [Supplementary Note 30]

A processing apparatus that performs an additive manufacturing on an object, wherein
the processing apparatus includes:
a first optical system that is configured to irradiate the object with first processing light that is emitted from a first light source;
a second optical system that is configured to irradiate the object with second processing light that is emitted from a second light source different from the first light source and whose peak wavelength is different from that of the first processing light; and
a material supply member that is configured to supply a build material to a melt pool formed by the first and second processing lights,
the first optical system includes: a first condensed position change member that is configured to change a condensed position of the first processing light along an irradiation direction of the first processing light; and a first deflection member that is configured to deflect the first processing light so as to change a first irradiation position that is irradiated with the first processing light along a direction intersecting the irradiation direction of the first processing light,
the second optical system includes: a second condensed position change member that is configured to change a condensed position of the second processing light along an irradiation direction of the second processing light; and a second deflection member that is configured to deflect the second processing light so as to change a second irradiation position that is irradiated with the second processing light along a direction intersecting the irradiation direction of the second processing light.

### [Supplementary Note 31]

A processing apparatus that performs an additive manufacturing on an object, wherein the processing apparatus includes:
a first optical system that is configured to irradiate the object with first processing light that is emitted from a first light source, and that is configured to irradiate the object with second processing light that is emitted from a second light source different from the first light source and whose peak wavelength is different from that of the first processing light; and
a material supply member that is configured to supply a build material to a melt pool formed by the first and second processing lights,
the first optical system includes:
   a first condensed position change member that is configured to change a condensed position of the first processing light along an irradiation direction of the first processing light;
   a second condensed position change member that is configured to change a condensed position of the second processing light along an irradiation direction of the second processing light; and
   a first deflection member that is configured to deflect the first processing light and the second processing light so as to change a first irradiation position that is irradiated with the first processing light and a second irradiation position that is irradiated with the second processing light along a direction intersecting the irradiation directions of the first processing light and the second processing light.

### [Supplementary Note 32]

A processing apparatus that performs an additive manufacturing on an object, wherein
the processing apparatus includes:
a first optical system that is configured to irradiate the object with first processing light, and that is configured to irradiate the object with second processing light whose peak wavelength is different from that of the first processing light;
a second optical system that is configured to irradiate the object with third processing light, and that is configured to irradiate the object with fourth processing light whose peak wavelength is different from that of the third processing light; and
a material supply member that is configured to supply a build material to a melt pool formed by the first processing light, the second processing light, the third processing light, and the fourth processing light,
the first optical system includes:
   a first condensed position change member that is configured to change a condensed position of the first processing light along an irradiation direction of the first processing light;
   a second condensed position change member that is configured to change a condensed position of the second processing light along an irradiation direction of the second processing light; and
   a first deflection member that is configured to deflect the first processing light and the second processing light so as to change a first irradiation position that is irradiated with the first processing light and a second irradiation position that is irradiated with the second processing light along a direction intersecting the irradiation directions of the first processing light and the second processing light,
   the second optical system includes:
      a third condensed position change member that is configured to change a condensed position of the third processing light along an irradiation direction of the third processing light;
      a fourth condensed position change member that is configured to change a condensed position of the fourth processing light along an irradiation direction of three the fourth processing light; and
      a second deflection member that is configured to deflect the third processing light and the fourth processing light so as to change a third irradiation position that is irradiated with the third processing light and a fourth irradiation position that is irradiated with the fourth processing light along a direction intersecting the irradiation directions of the third processing light and the fourth processing light.

### [Supplementary Note 33]

A processing apparatus that performs an additive manufacturing on an object, wherein
the processing apparatus includes:
a first optical system that is configured to irradiate the object with first processing light;
a second optical system that is configured to irradiate the object with second processing light; and
a material supply member that is configured to supply a build material to a melt pool formed by the first and second processing lights,
the first optical system includes: a first condensed position change member that is configured to change a condensed position of the first processing light along an irradiation direction of the first processing light; and a first deflection member that is configured to deflect the first processing light so as to change a first irradiation position that is irradiated with the first processing light along a direction intersecting the irradiation direction of the first processing light,
the second optical system includes: a second condensed position change member that is configured to change a condensed position of the second processing light along an irradiation direction of the second processing light; and a second deflection member that is configured to deflect the second processing light so as to change a second irradiation position that is irradiated with the second processing light along a direction intersecting the irradiation direction of the second processing light.

### [Supplementary Note 34]

The processing apparatus according to the Supplementary Note 33, wherein
the first deflection member is controlled based on an amount of change of the condensed position of the first processing light by the first condensed position change member,
the second deflection member is controlled based on an amount of change of the condensed position of the second processing light by the second condensed position change member.

### [Supplementary Note 35]

The processing apparatus according to the Supplementary Note 33 or 34, wherein
the first deflection member changes the first irradiation position along a direction that is along a surface of the object so as to correct a deviation, which is caused by the first condensed position change member changing the condensed position of the first processing light, of the first irradiation position in a direction along the surface of the object,
the second deflection member changes the second irradiation position along a direction that is along a surface of the object so as to correct a deviation, which is caused by the second condensed position change member changing the condensed position of the second processing light, of the second irradiation position in a direction along the surface of the object.

### [Supplementary Note 36]

The processing apparatus according to any one of the Supplementary Notes 33 to 35, wherein
the first condensed position change member is controlled based on an amount of change of the first irradiation position by the first deflection member,
the second condensed position change member is controlled based on an amount of change of the second irradiation position by the second deflection member.

### [Supplementary Note 37]

The processing apparatus according to any one of the Supplementary Notes 33 to 36, wherein
the first condensed position change member changes the condensed position of the first processing light along a direction that intersects a surface of the object so as to correct a deviation, which is caused by the first deflection member changing the first irradiation position, of the condensed position of the first processing light in a direction intersecting the surface of the object,
the second condensed position change member changes the condensed position of the second processing light along a direction that intersects a surface of the object so as to correct a deviation, which is caused by the second deflection member changing the second irradiation position, of the condensed position of the second processing light in a direction intersecting the surface of the object.

### [Supplementary Note 38]

The processing apparatus according to any one of the Supplementary Notes 33 to 37, wherein
the first optical system includes a first detector that is configured to detect an intensity of the first processing light,
the second optical system includes a second detector that is configured to detect an intensity of the second processing light.

### [Supplementary Note 39]

A processing apparatus that performs an additive manufacturing on an object, wherein
the processing apparatus includes:
a first optical system that is configured to irradiate the object with first processing light;
a second optical system that is configured to irradiate the object with second processing light; and
a material supply member that is configured to supply a build material to a melt pool formed by the first and second processing lights,
the first optical system includes: a first deflection member that is configured to deflect the first processing light so as to change a first irradiation position that is irradiated with the first processing light along a direction intersecting the irradiation direction of the first processing light; and a first detector that is configured to detect an intensity of the first processing light,
the second optical system includes: a second deflection member that is configured to deflect the second processing light so as to change a second irradiation position that is irradiated with the second processing light along a direction intersecting the irradiation direction of the second processing light; and a second detector that is configured to detect an intensity of the second processing light.

### [Supplementary Note 40]

The processing apparatus according to the Supplementary Note 38 or 39, wherein
the first detector is configured to detect the intensity of the first processing light propagating along an optical path between a first light source that emits the first processing light and the first deflection member,
the second detector is configured to detect the intensity of the second processing light propagating along an optical path between a second light source that emits the second processing light and the second deflection member.

### [Supplementary Note 41]

The processing apparatus according to any one of the Supplementary Notes 38 to 40 further including an intensity change apparatus that is configured to change the intensity of at least one of the first processing light and the second processing light, wherein
the intensity change apparatus changes the intensity of at least one of the first processing light and the second processing light based on a detected result by at least one of the first detector and the second detector.

### [Supplementary Note 42]

The processing apparatus according to any one of the Supplementary Notes 38 to 41, wherein
the processing apparatus further including:
an objective optical member that irradiates the object with the first processing light and the second processing light; and
a cooling apparatus that is configured to cool the objective optical member,
the cooling apparatus cools the objective optical member based on a detected result by at least one of the first detector and the second detector.

### [Supplementary Note 43]

A processing apparatus including:
a processing head that includes: a condensing optical system that condenses processing light on an object; and an electrical component that is used to control the processing light; and
a support member that is adjacent to the processing head along a direction intersecting an optical axis of the condensing optical system and that support the processing head,
a first distance between the electrical component and the support member in the direction intersecting the optical axis is longer than a second distance between the optical axis and the support member in the direction intersecting the optical axis.

### [Supplementary Note 44]

The processing apparatus according to the Supplementary Note 43, wherein
the electrical component includes a detector that is configured to detect an intensity of the processing light.

### [Supplementary Note 45]

The processing apparatus according to the Supplementary Note 43 or 44, wherein
the electrical component includes a driving system that drives a deflection member configured to deflect the processing light so as to change an irradiation position that is irradiated with the processing light along a direction that is along a surface of the object.

### [Supplementary Note 46]

The processing apparatus according to any one of the Supplementary Notes 43 to 45, wherein
a position of the processing head relative to the object is changeable.

### [Supplementary Note 47]

The processing apparatus according to any one of the Supplementary Notes 43 to 46, wherein
the processing apparatus further including a driving apparatus that changes a position of the support member,
a position of the processing head is changed due to the change of the position of the support member.

### [Supplementary Note 48]

The processing apparatus according to any one of the Supplementary Notes 43 to 47, wherein
the processing apparatus includes a first space at an opposite side of the support member with respect to the processing head.

### [Supplementary Note 49]

The processing apparatus according to any one of the Supplementary Note 48, wherein
the processing apparatus includes a door that is allowed to be opened and closed at the first space side from the processing head.

### [Supplementary Note 50]

The processing apparatus according to the Supplementary Note 48 or 49, wherein
an additive manufacturing is performed in the first space.

### [Supplementary Note 51]

A processing apparatus including:
an irradiation apparatus that is configured to irradiate an object with first processing light and second processing light whose peak wavelength is different from that of the first processing light; and
a material supply member that is configured to supply a build material to a melt pool formed by at least one of the first and second processing lights.

### [Supplementary Note 52]

A processing apparatus including:
an irradiation apparatus that is configured to irradiate an object with first processing light and second processing light whose peak wavelength is different from that of the first processing light; and
a material supply member that is configured to supply a build material to a position that is irradiated with the first processing light and the second processing light by the irradiation apparatus.

### [Supplementary Note 53]

A processing apparatus including:
an irradiation apparatus that is configured to irradiate an object with first processing light and second processing light whose peak wavelength is different from that of the first processing light; and
a material supply member that is configured to supply a build material to an irradiation area that is irradiated with the first processing light by the irradiation apparatus,
at least a part of the irradiation area that is irradiated with the first processing light overlaps with an irradiation area that is irradiated with the second processing light.

### [Supplementary Note 54]

The processing apparatus according to any one of the Supplementary Notes 51 to 53, wherein
a first area that is irradiated with the first processing light is the same as a second area that is irradiated with the second processing light.

### [Supplementary Note 55]

The processing apparatus according to any one of the Supplementary Notes 51 to 53, wherein
a first area that is irradiated with the first processing light is smaller than a second area that is irradiated with the second processing light.

### [Supplementary Note 56]

The processing apparatus according to the Supplementary Note 55, wherein
the first processing light is movable inside the second area.

### [Supplementary Note 57]

The processing apparatus according to the Supplementary Note 55 or 56, wherein
a size of the first processing light is changed inside the second area.

### [Supplementary Note 58]

The processing apparatus according to any one of the Supplementary Notes 51 to 53, wherein
a second area that is irradiated with the second processing light is smaller than a first area that is irradiated with the first processing light.

### [Supplementary Note 59]

The processing apparatus according to the Supplementary Note 58, wherein
the second processing light is movable inside the first area.

### [Supplementary Note 60]

The processing apparatus according to the Supplementary Note 58 or 59, wherein
a size of the second processing light is changed inside the first area.

### [Supplementary Note 61]

The processing apparatus according to any one of the Supplementary Notes 51 to 60, wherein
a melt pool formed by the second processing light is irradiated with the first processing light.

### [Supplementary Note 62]

The processing apparatus according to any one of the Supplementary Notes 51 to 61, wherein
the object is irradiated with the first processing light and the second processing light simultaneously.

### [Supplementary Note 63]

The processing apparatus according to any one of the Supplementary Notes 51 to 62, wherein
the object is irradiated with the second processing light prior to the first processing light.

### [Supplementary Note 64]

The processing apparatus according to any one of the Supplementary Notes 51 to 63, wherein
the object is irradiated with the first processing light in at least a part of a period during which the object is irradiated with the second processing light.

### [Supplementary Note 65]

The processing apparatus according to any one of the Supplementary Notes 51 to 64, wherein
the processing apparatus modulates a peak intensity of at least one of the first processing light and the second processing light.

### [Supplementary Note 66]

The processing apparatus according to any one of the Supplementary Notes 51 to 65, wherein
the processing apparatus is configured to change a shape of an irradiation area or a size of an irradiation area of at least one of the first processing light and the second processing light.

### [Supplementary Note 67]

The processing apparatus according to any one of the Supplementary Notes 51 to 66, wherein
the processing apparatus is configured to change scanning direction of at least one of the first processing light and the second processing light.

### [Supplementary Note 68]

The processing apparatus according to any one of the Supplementary Notes 51 to 67, wherein
the processing apparatus is configured to move an irradiation area of the first processing light and an irradiation area of the second processing light relative to each other.

### [Supplementary Note 69]

The processing apparatus according to any one of the Supplementary Notes 51 to 68, wherein
changing a size of an irradiation area of at least one of the first processing light and the second processing light includes changing a focus of at least one of the first processing light and the second processing light.

### [Supplementary Note 70]

A processing apparatus that performs an additive manufacturing on an object, wherein
the processing apparatus includes:
a first optical system that is configured to irradiate the object with first processing light;
a second optical system that is configured to irradiate the object with second processing light whose peak wavelength is different from that of the first processing light; and
a material supply member that is configured to supply a build material to a melt pool formed by at least one of the first and second processing lights,
the first optical system includes: at least one of a first condensed position change member that is configured to change a condensed position of the first processing light along an irradiation direction of the first processing light; and a first deflection member that is configured to deflect the first processing light so as to change a first irradiation position that is irradiated with the first processing light along a direction intersecting the irradiation direction of the first processing light,
the second optical system includes: at least one of a second condensed position change member that is configured to change a condensed position of the second processing light along an irradiation direction of the second processing light; and a second deflection member that is configured to deflect the second processing light so as to change a second irradiation position that is irradiated with the second processing light along a direction intersecting the irradiation direction of the second processing light.

### [Supplementary Note 71]

A processing apparatus that performs an additive manufacturing on an object, wherein
the processing apparatus includes:
a first optical system that is configured to irradiate the object with first processing light, and that is configured to irradiate the object with second processing light whose peak wavelength is different from that of the first processing light; and
a material supply member that is configured to supply a build material to a melt pool formed by at least one of the first and second processing lights,
the first optical system includes at least one of a first condensed position change member that is configured to change a condensed position of the first processing light along an irradiation direction of the first processing light, a second condensed position change member that is configured to change a condensed position of the second processing light along an irradiation direction of the second processing light, and a first deflection member that is configured to deflect the first processing light and the second processing light so as to change a first irradiation position that is irradiated with the first processing light and a second irradiation position that is irradiated with the second processing light along a direction intersecting the irradiation directions of the first processing light and the second processing light.

### [Supplementary Note 72]

A processing apparatus that performs an additive manufacturing on an object, wherein
the processing apparatus includes:
a first optical system that is configured to irradiate the object with first processing light, and that is configured to irradiate the object with second processing light whose peak wavelength is different from that of the first processing light;
a second optical system that is configured to irradiate the object with third processing light, and that is configured to irradiate the object with fourth t processing light whose peak wavelength is different from that of the third processing light; and
a material supply member that is configured to supply a build material to a melt pool formed by at least one of the first processing light, the second processing light, the third processing light, and the fourth processing light,
the first optical system includes at least one of a first condensed position change member that is configured to change a condensed position of the first processing light along an irradiation direction of the first processing light, a second condensed position change member that is configured to change a condensed position of the second processing light along an irradiation direction of the second processing light, and a first deflection member that is configured to deflect the first processing light and the second processing light so as to change a first irradiation position that is irradiated with the first processing light and a second irradiation position that is irradiated with the second processing light along a direction intersecting the irradiation directions of the first processing light and the second processing light,
the second optical system includes at least one of a third condensed position change member that is configured to change a condensed position of the third processing light along an irradiation direction of the third processing light, a fourth condensed position change member that is configured to change a condensed position of the fourth processing light along an irradiation direction of three the fourth processing light, and a second deflection member that is configured to deflect the third processing light and the fourth processing light so as to change a third irradiation position that is irradiated with the third processing light and a fourth irradiation position that is irradiated with the fourth processing light along a direction intersecting the irradiation directions of the third processing light and the fourth processing light.

### [Supplementary Note 73]

A processing apparatus that performs an additive manufacturing on an object, wherein
the processing apparatus includes:
a first optical system that is configured to irradiate the object with first processing light;
a second optical system that is configured to irradiate the object with second processing light whose peak wavelength is different from that of the first processing light; and
a material supply member that is configured to supply a build material to a position that is irradiated with at least one of the first and second processing lights,
the first optical system includes: at least one of a first condensed position change member that is configured to change a condensed position of the first processing light along an irradiation direction of the first processing light; and a first deflection member that is configured to deflect the first processing light so as to change a first irradiation position that is irradiated with the first processing light along a direction intersecting the irradiation direction of the first processing light,
the second optical system includes: at least one of a second condensed position change member that is configured to change a condensed position of the second processing light along an irradiation direction of the second processing light; and a second deflection member that is configured to deflect the second processing light so as to change a second irradiation position that is irradiated with the second processing light along a direction intersecting the irradiation direction of the second processing light.

### [Supplementary Note 74]

A processing apparatus that performs an additive manufacturing on an object, wherein
the processing apparatus includes:
a first optical system that is configured to irradiate the object with first processing light that is emitted from a first light source, and that is configured to irradiate the object with second processing light that is emitted from a second light source different from the first light source and whose peak wavelength is different from that of the first processing light; and
a material supply member that is configured to supply a build material to a position that is irradiated with at least one of the first and second processing lights,
the first optical system includes at least one of a first condensed position change member that is configured to change a condensed position of the first processing light along an irradiation direction of the first processing light, a second condensed position change member that is configured to change a condensed position of the second processing light along an irradiation direction of the second processing light, and a first deflection member that is configured to deflect the first processing light and the second processing light so as to change a first irradiation position that is irradiated with the first processing light and a second irradiation position that is irradiated with the second processing light along a direction intersecting the irradiation directions of the first processing light and the second processing light.

### [Supplementary Note 75]

A processing apparatus that performs an additive manufacturing on an object, wherein
the processing apparatus includes:
a first optical system that is configured to irradiate the object with first processing light, and that is configured to irradiate the object with second processing light whose peak wavelength is different from that of the first processing light;
a second optical system that is configured to irradiate the object with third processing light, and that is configured to irradiate the object with fourth t processing light whose peak wavelength is different from that of the third processing light; and
a material supply member that is configured to supply a build material to a position that is irradiated with at least one of the first processing light, the second processing light, the third processing light, and the fourth processing light,
the first optical system includes at least one of a first condensed position change member that is configured to change a condensed position of the first processing light along an irradiation direction of the first processing light, a second condensed position change member that is configured to change a condensed position of the second processing light along an irradiation direction of the second processing light, and a first deflection member that is configured to deflect the first processing light and the second processing light so as to change a first irradiation position that is irradiated with the first processing light and a second irradiation position that is irradiated with the second processing light along a direction intersecting the irradiation directions of the first processing light and the second processing light,
the second optical system includes at least one of a third condensed position change member that is configured to change a condensed position of the third processing light along an irradiation direction of the third processing light, a fourth condensed position change member that is configured to change a condensed position of the fourth processing light along an irradiation direction of three the fourth processing light, and a second deflection member that is configured to deflect the third processing light and the fourth processing light so as to change a third irradiation position that is irradiated with the third processing light and a fourth irradiation position that is irradiated with the fourth processing light along a direction intersecting the irradiation directions of the third processing light and the fourth processing light.

### [Supplementary Note 76]

A processing apparatus that performs an additive manufacturing on an object, wherein
the processing apparatus includes:
a first optical system that is configured to irradiate the object with first processing light;
a second optical system that is configured to irradiate the object with second processing light; and
a material supply member that is configured to supply a build material to a melt pool formed by at least one of the first and second processing lights,
the first optical system includes a first condensed position change member that is configured to change a condensed position of the first processing light along an irradiation direction of the first processing light,
the second optical system includes a second condensed position change member that is configured to change a condensed position of the second processing light along an irradiation direction of the second processing light.

### [Supplementary Note 77]

A processing apparatus that performs an additive manufacturing on an object, wherein
the processing apparatus includes:
a first optical system that is configured to irradiate the object with first processing light;
a second optical system that is configured to irradiate the object with second processing light; and
a material supply member that is configured to supply a build material to a position that is irradiated with at least one of the first and second processing lights,
the first optical system includes a first condensed position change member that is configured to change a condensed position of the first processing light along an irradiation direction of the first processing light,
the second optical system includes a second condensed position change member that is configured to change a condensed position of the second processing light along an irradiation direction of the second processing light.

### [Supplementary Note 78]

A processing apparatus that performs an additive manufacturing on an object, wherein
the processing apparatus includes:
a first optical system that is configured to irradiate the object with first processing light and that includes a first detector that is configured to detect an intensity of the first processing light;
a second optical system that is configured to irradiate the object with second processing light and that includes a second detector that is configured to detect an intensity of the second processing light; and
a material supply member that is configured to supply a build material to a melt pool formed by at least one of the first and second processing lights.

### [Supplementary Note 79]

A processing apparatus that performs an additive manufacturing on an object, wherein
the processing apparatus includes:
a first optical system that is configured to irradiate the object with first processing light and that includes a first detector that is configured to detect an intensity of the first processing light;
a second optical system that is configured to irradiate the object with second processing light and that includes a second detector that is configured to detect an intensity of the second processing light; and
a material supply member that is configured to supply a build material to a position that is irradiated with at least one of the first and second processing lights.

### [Supplementary Note 80]

A processing apparatus that performs an additive manufacturing on an object, wherein
the processing apparatus includes:
a first optical system that is configured to irradiate the object with first processing light;
a second optical system that is configured to irradiate the object with second processing light; and
a material supply member that is configured to supply a build material to a melt pool formed by at least one of the first and second processing lights,
the first optical system includes a first condensed position change member that is configured to change a condensed position of the first processing light along an irradiation direction of the first processing light or the second optical system includes a second condensed position change member that is configured to change a condensed position of the second processing light along an irradiation direction of the second processing light.

### [Supplementary Note 81]

A processing apparatus that performs an additive manufacturing on an object, wherein
the processing apparatus includes:
a first optical system that is configured to irradiate the object with first processing light;
a second optical system that is configured to irradiate the object with second processing light; and
a material supply member that is configured to supply a build material to a position that is irradiated with at least one of the first and second processing lights,
the first optical system includes a first condensed position change member that is configured to change a condensed position of the first processing light along an irradiation direction of the first processing light or the second optical system includes a second condensed position change member that is configured to change a condensed position of the second processing light along an irradiation direction of the second processing light.

### [Supplementary Note 82]

A processing apparatus that performs an additive manufacturing on an object, wherein
the processing apparatus includes:
a first optical system that is configured to irradiate the object with first processing light;
a second optical system that is configured to irradiate the object with second processing light; and
a material supply member that is configured to supply a build material to a melt pool formed by at least one of the first and second processing lights,
the first optical system includes a first deflection member that is configured to deflect the first processing light so as to change a first irradiation position that is irradiated with the first processing light along a direction intersecting the irradiation direction of the first processing light,
the second optical system includes a second deflection member that is configured to deflect the second processing light so as to change a second irradiation position that is irradiated with the second processing light along a direction intersecting the irradiation direction of the second processing light.

### [Supplementary Note 83]

A processing apparatus that performs an additive manufacturing on an object, wherein
the processing apparatus includes:
a first optical system that is configured to irradiate the object with first processing light;
a second optical system that is configured to irradiate the object with second processing light; and
a material supply member that is configured to supply a build material to a position that is irradiated with at least one of the first and second processing lights,
the first optical system includes a first deflection member that is configured to deflect the first processing light so as to change a first irradiation position that is irradiated with the first processing light along a direction intersecting the irradiation direction of the first processing light,
the second optical system includes a second deflection member that is configured to deflect the second processing light so as to change a second irradiation position that is irradiated with the second processing light along a direction intersecting the irradiation direction of the second processing light.

### [Supplementary Note 84]

The processing apparatus according to any one of the Supplementary Notes 76 to 83, wherein
a first area that is irradiated with the first processing light is the same as a second area that is irradiated with the second processing light.

### [Supplementary Note 85]

The processing apparatus according to any one of the Supplementary Notes 76 to 83, wherein
a first area that is irradiated with the first processing light is smaller than a second area that is irradiated with the second processing light.

### [Supplementary Note 86]

The processing apparatus according to the Supplementary Note 85, wherein
the second processing light is movable inside the first area.

### [Supplementary Note 87]

The processing apparatus according to the Supplementary Note 85 or 86, wherein
a size of the first processing light is changed inside the second area.

### [Supplementary Note 88]

The processing apparatus according to any one of the Supplementary Notes 76 to 83, wherein
a second area that is irradiated with the second processing light is smaller than a first area that is irradiated with the first processing light.

### [Supplementary Note 89]

The processing apparatus according to the Supplementary Note 88, wherein
the first processing light is movable inside the second area.

### [Supplementary Note 90]

The processing apparatus according to the Supplementary Note 88 or 89, wherein
a size of the second processing light is changed inside the first area.

### [Supplementary Note 91]

The processing apparatus according to any one of the Supplementary Notes 76 to 90, wherein
a melt pool formed by the second processing light is irradiated with the first processing light.

### [Supplementary Note 92]

The processing apparatus according to any one of the Supplementary Notes 76 to 91, wherein
the object is irradiated with the first processing light and the second processing light simultaneously.

### [Supplementary Note 93]

The processing apparatus according to any one of the Supplementary Notes 76 to 92, wherein
the object is irradiated with the second processing light prior to the first processing light.

### [Supplementary Note 94]

The processing apparatus according to any one of the Supplementary Notes 76 to 93, wherein
the object is irradiated with the first processing light in at least a part of a period during which the object is irradiated with the second processing light.

### [Supplementary Note 95]

The processing apparatus according to any one of the Supplementary Notes 76 to 94, wherein
the processing apparatus modulates a peak intensity of at least one of the first processing light and the second processing light.

### [Supplementary Note 96]

The processing apparatus according to any one of the Supplementary Notes 76 to 95, wherein
the processing apparatus is configured to change a shape of an irradiation area or a size of an irradiation area of at least one of the first processing light and the second processing light.

### [Supplementary Note 97]

The processing apparatus according to any one of the Supplementary Notes 76 to 96, wherein
the processing apparatus is configured to change scanning direction of at least one of the first processing light and the second processing light.

### [Supplementary Note 98]

The processing apparatus according to any one of the Supplementary Notes 76 to 97, wherein
the processing apparatus is configured to move an irradiation area of the first processing light and an irradiation area of the second processing light relative to each other.

### [Supplementary Note 99]

The processing apparatus according to any one of the Supplementary Notes 76 to 98, wherein
changing a size of an irradiation area of at least one of the first processing light and the second processing light includes changing a focus of at least one of the first processing light and the second processing light.

### [Supplementary Note 100]

A processing method including:
irradiate an object with first processing light that is emitted from a first light source, and second processing light that is emitted from a second light source different from the first light source and whose peak wavelength is different from that of the first processing light; and
supplying a build material to a melt pool formed by the first and second processing lights,
wherein
the peak wavelength of the second processing light is shorter than the peak wavelength of the first processing light, and
a second area that is irradiated with the second processing light is larger than a first area that is irradiated with the first processing light.

### [Supplementary Note 101]

A processing method that performs an additive manufacturing on an object, wherein
the processing method includes:
irradiating the object with first processing light that is emitted from a first light source by using a first optical system;
irradiating the object with second processing light that is emitted from a second light source different from the first light source and whose peak wavelength is different from that of the first processing light by using a second optical system; and
supplying a build material to a melt pool formed by the first and second processing lights,
the first optical system includes: a first condensed position change member that is configured to change a condensed position of the first processing light along an irradiation direction of the first processing light; and a first deflection member that is configured to deflect the first processing light so as to change a first irradiation position that is irradiated with the first processing light along a direction intersecting the irradiation direction of the first processing light,
the second optical system includes: a second condensed position change member that is configured to change a condensed position of the second processing light along an irradiation direction of the second processing light; and a second deflection member that is configured to deflect the second processing light so as to change a second irradiation position that is irradiated with the second processing light along a direction intersecting the irradiation direction of the second processing light.

### [Supplementary Note 102]

A processing method that performs an additive manufacturing on an object, wherein
the processing method includes:
irradiating the object with first processing light that is emitted from a first light source by using a first optical system;
irradiating the object with second processing light that is emitted from a second light source different from the first light source and whose peak wavelength is different from that of the first processing light by using a second optical system; and
supplying a build material to a melt pool formed by the first and second processing lights,
the first optical system includes:
   a first condensed position change member that is configured to change a condensed position of the first processing light along an irradiation direction of the first processing light;
   a second condensed position change member that is configured to change a condensed position of the second processing light along an irradiation direction of the second processing light; and
   a first deflection member that is configured to deflect the first processing light and the second processing light so as to change a first irradiation position that is irradiated with the first processing light and a second irradiation position that is irradiated with the second processing light along a direction intersecting the irradiation directions of the first processing light and the second processing light.

### [Supplementary Note 103]

A processing method that performs an additive manufacturing on an object, wherein
the processing method includes:
irradiating the object with first processing light by using a first optical system;
irradiating the object with second processing light whose peak wavelength is different from that of the first processing light by using the first optical system;
irradiating the object with third processing light by using a second optical system;
irradiating the object with fourth processing light whose peak wavelength is different from that of the third processing light by using the second optical system; and
supplying a build material to a melt pool formed by the first processing light, the second processing light, the third processing light, and the fourth processing light,
the first optical system includes:
   a first condensed position change member that is configured to change a condensed position of the first processing light along an irradiation direction of the first processing light;
   a second condensed position change member that is configured to change a condensed position of the second processing light along an irradiation direction of the second processing light; and
   a first deflection member that is configured to deflect the first processing light and the second processing light so as to change a first irradiation position that is irradiated with the first processing light and a second irradiation position that is irradiated with the second processing light along a direction intersecting the irradiation directions of the first processing light and the second processing light,
   the second optical system includes:
      a third condensed position change member that is configured to change a condensed position of the third processing light along an irradiation direction of the third processing light;
      a fourth condensed position change member that is configured to change a condensed position of the fourth processing light along an irradiation direction of three the fourth processing light; and
      a second deflection member that is configured to deflect the third processing light and the fourth processing light so as to change a third irradiation position that is irradiated with the third processing light and a fourth irradiation position that is irradiated with the fourth processing light along a direction intersecting the irradiation directions of the third processing light and the fourth processing light.

### [Supplementary Note 104]

A processing method that performs an additive manufacturing on an object, wherein
the processing method includes:
irradiating the object with first processing light by using a first optical system;
irradiating the object with second processing light by using a second optical system; and
supplying a build material to a melt pool formed by the first and second processing lights,
the first optical system includes: a first condensed position change member that is configured to change a condensed position of the first processing light along an irradiation direction of the first processing light; and a first deflection member that is configured to deflect the first processing light so as to change a first irradiation position that is irradiated with the first processing light along a direction intersecting the irradiation direction of the first processing light,
the second optical system includes: a second condensed position change member that is configured to change a condensed position of the second processing light along an irradiation direction of the second processing light; and a second deflection member that is configured to deflect the second processing light so as to change a second irradiation position that is irradiated with the second processing light along a direction intersecting the irradiation direction of the second processing light.

### [Supplementary Note 105]

A processing method that performs an additive manufacturing on an object, wherein
the processing method includes:
irradiating the object with first processing light by using a first optical system;
irradiating the object with second processing light by using a second optical system; and
supplying a build material to a melt pool formed by the first and second processing lights,
the first optical system includes: a first deflection member that is configured to deflect the first processing light so as to change a first irradiation position that is irradiated with the first processing light along a direction intersecting the irradiation direction of the first processing light; and a first detector that is configured to detect an intensity of the first processing light,
the second optical system includes: a second deflection member that is configured to deflect the second processing light so as to change a second irradiation position that is irradiated with the second processing light along a direction intersecting the irradiation direction of the second processing light; and a second detector that is configured to detect an intensity of the second processing light.

### [Supplementary Note 106]

A processing method using a processing apparatus that includes:
a processing head that includes: a condensing optical system that condenses processing light on an object; and an electrical component that is used to control the processing light; and
a support member that is adjacent to the processing head along a direction intersecting an optical axis of the condensing optical system and that support the processing head,
a first distance between the electrical component and the support member in the direction intersecting the optical axis is longer than a second distance between the optical axis and the support member in the direction intersecting the optical axis.

### [Supplementary Note 107]

A processing method including:
irradiating an object with first processing light and second processing light whose peak wavelength is different from that of the first processing light; and
supplying a build material to a melt pool formed by at least one of the first and second processing lights.

### [Supplementary Note 108]

A processing method including:
irradiating an object with first processing light and second processing light whose peak wavelength is different from that of the first processing light; and
supplying a build material to a position that is irradiated with the first and second processing lights.

### [Supplementary Note 109]

A processing method including:
irradiating an object with first processing light and second processing light whose peak wavelength is different from that of the first processing light; and
supplying a build material to an irradiation area that is irradiated with the first processing light,
at least a part of the irradiation area that is irradiated with the first processing light overlaps with an irradiation area that is irradiated with the second processing light.

### [Supplementary Note 110]

A processing method that performs an additive manufacturing on an object, wherein
the processing method includes:
irradiating the object with first processing light by using a first optical system;
irradiating the object with second processing light whose peak wavelength is different from that of the first processing light by using a second optical system; and
supplying a build material to a melt pool formed by at least one of the first and second processing lights,
the first optical system includes: at least one of a first condensed position change member that is configured to change a condensed position of the first processing light along an irradiation direction of the first processing light; and a first deflection member that is configured to deflect the first processing light so as to change a first irradiation position that is irradiated with the first processing light along a direction intersecting the irradiation direction of the first processing light,
the second optical system includes: at least one of a second condensed position change member that is configured to change a condensed position of the second processing light along an irradiation direction of the second processing light; and a second deflection member that is configured to deflect the second processing light so as to change a second irradiation position that is irradiated with the second processing light along a direction intersecting the irradiation direction of the second processing light.

### [Supplementary Note 111]

A processing method that performs an additive manufacturing on an object, wherein
the processing method includes:
irradiating the object with first processing light by using a first optical system;
irradiating the object with second processing light whose peak wavelength is different from that of the first processing light by using the first optical system; and
supplying a build material to a melt pool formed by at least one of the first and second processing lights,
the first optical system includes at least one of a first condensed position change member that is configured to change a condensed position of the first processing light along an irradiation direction of the first processing light, a second condensed position change member that is configured to change a condensed position of the second processing light along an irradiation direction of the second processing light, and a first deflection member that is configured to deflect the first processing light and the second processing light so as to change a first irradiation position that is irradiated with the first processing light and a second irradiation position that is irradiated with the second processing light along a direction intersecting the irradiation directions of the first processing light and the second processing light.

### [Supplementary Note 112]

A processing method that performs an additive manufacturing on an object, wherein
the processing method includes:
irradiating the object with first processing light by using a first optical system;
irradiating the object with second processing light whose peak wavelength is different from that of the first processing light by using the first optical system; and
irradiating the object with third processing light by using a second optical system;
irradiating the object with fourth t processing light whose peak wavelength is different from that of the third processing light by using the second optical system; and
supplying a build material to a melt pool formed by at least one of the first processing light, the second processing light, the third processing light, and the fourth processing light,
the first optical system includes at least one of a first condensed position change member that is configured to change a condensed position of the first processing light along an irradiation direction of the first processing light, a second condensed position change member that is configured to change a condensed position of the second processing light along an irradiation direction of the second processing light, and a first deflection member that is configured to deflect the first processing light and the second processing light so as to change a first irradiation position that is irradiated with the first processing light and a second irradiation position that is irradiated with the second processing light along a direction intersecting the irradiation directions of the first processing light and the second processing light,
the second optical system includes at least one of a third condensed position change member that is configured to change a condensed position of the third processing light along an irradiation direction of the third processing light, a fourth condensed position change member that is configured to change a condensed position of the fourth processing light along an irradiation direction of three the fourth processing light, and a second deflection member that is configured to deflect the third processing light and the fourth processing light so as to change a third irradiation position that is irradiated with the third processing light and a fourth irradiation position that is irradiated with the fourth processing light along a direction intersecting the irradiation directions of the third processing light and the fourth processing light.

### [Supplementary Note 113]

A processing method that performs an additive manufacturing on an object, wherein
the processing method includes:
irradiating the object with first processing light by using a first optical system;
irradiating the object with second processing light whose peak wavelength is different from that of the first processing light by using a second optical system; and
supplying a build material to a position that is irradiated with at least one of the first and second processing lights,
the first optical system includes: at least one of a first condensed position change member that is configured to change a condensed position of the first processing light along an irradiation direction of the first processing light; and a first deflection member that is configured to deflect the first processing light so as to change a first irradiation position that is irradiated with the first processing light along a direction intersecting the irradiation direction of the first processing light,
the second optical system includes: at least one of a second condensed position change member that is configured to change a condensed position of the second processing light along an irradiation direction of the second processing light; and a second deflection member that is configured to deflect the second processing light so as to change a second irradiation position that is irradiated with the second processing light along a direction intersecting the irradiation direction of the second processing light.

### [Supplementary Note 114]

A processing method that performs an additive manufacturing on an object, wherein
the processing method includes:
irradiating the object with first processing light by using a first optical system;
irradiating the object with second processing light whose peak wavelength is different from that of the first processing light by using the first optical system; and
supplying a build material to a position that is irradiated with at least one of the first and second processing lights,
the first optical system includes at least one of a first condensed position change member that is configured to change a condensed position of the first processing light along an irradiation direction of the first processing light, a second condensed position change member that is configured to change a condensed position of the second processing light along an irradiation direction of the second processing light, and a first deflection member that is configured to deflect the first processing light and the second processing light so as to change a first irradiation position that is irradiated with the first processing light and a second irradiation position that is irradiated with the second processing light along a direction intersecting the irradiation directions of the first processing light and the second processing light.

### [Supplementary Note 115]

A processing method that performs an additive manufacturing on an object, wherein
the processing method includes:
irradiating the object with first processing light by using a first optical system;
irradiating the object with second processing light whose peak wavelength is different from that of the first processing light by using the first optical system; and
irradiating the object with third processing light by using a second optical system;
irradiating the object with fourth t processing light whose peak wavelength is different from that of the third processing light by using the second optical system; and
supplying a build material to a position that is irradiated with at least one of the first processing light, the second processing light, the third processing light, and the fourth processing light,
the first optical system includes at least one of a first condensed position change member that is configured to change a condensed position of the first processing light along an irradiation direction of the first processing light, a second condensed position change member that is configured to change a condensed position of the second processing light along an irradiation direction of the second processing light, and a first deflection member that is configured to deflect the first processing light and the second processing light so as to change a first irradiation position that is irradiated with the first processing light and a second irradiation position that is irradiated with the second processing light along a direction intersecting the irradiation directions of the first processing light and the second processing light,
the second optical system includes at least one of a third condensed position change member that is configured to change a condensed position of the third processing light along an irradiation direction of the third processing light, a fourth condensed position change member that is configured to change a condensed position of the fourth processing light along an irradiation direction of three the fourth processing light, and a second deflection member that is configured to deflect the third processing light and the fourth processing light so as to change a third irradiation position that is irradiated with the third processing light and a fourth irradiation position that is irradiated with the fourth processing light along a direction intersecting the irradiation directions of the third processing light and the fourth processing light.

### [Supplementary Note 116]

A processing method that performs an additive manufacturing on an object, wherein
the processing method includes:
irradiating the object with first processing light by using a first optical system;
irradiating the object with second processing light by using a second optical system; and
supplying a build material to a melt pool formed by at least one of the first and second processing lights,
the first optical system includes a first condensed position change member that is configured to change a condensed position of the first processing light along an irradiation direction of the first processing light,
the second optical system includes a second condensed position change member that is configured to change a condensed position of the second processing light along an irradiation direction of the second processing light.

### [Supplementary Note 117]

A processing method that performs an additive manufacturing on an object, wherein
the processing method includes:
irradiating the object with first processing light by using a first optical system;
irradiating the object with second processing light by using a second optical system; and
supplying a build material to a position that is irradiated with at least one of the first and second processing lights,
the first optical system includes a first condensed position change member that is configured to change a condensed position of the first processing light along an irradiation direction of the first processing light,
the second optical system includes a second condensed position change member that is configured to change a condensed position of the second processing light along an irradiation direction of the second processing light.

### [Supplementary Note 118]

A processing method that performs an additive manufacturing on an object, wherein
the processing method includes:
irradiating the object with first processing light by using a first optical system;
irradiating the object with second processing light by using a second optical system; and
supplying a build material to a melt pool formed by at least one of the first and second processing lights,
the first optical system includes a first detector that is configured to detect an intensity of the first processing light,
the second optical system includes a second detector that is configured to detect an intensity of the second processing light.

### [Supplementary Note 119]

A processing method that performs an additive manufacturing on an object, wherein
the processing method includes:
irradiating the object with first processing light by using a first optical system;
irradiating the object with second processing light by using a second optical system; and
supplying a build material to a position that is irradiated with at least one of the first and second processing lights,
the first optical system includes a first detector that is configured to detect an intensity of the first processing light,
the second optical system includes a second detector that is configured to detect an intensity of the second processing light.

### [Supplementary Note 120]

A processing method that performs an additive manufacturing on an object, wherein
the processing method includes:
irradiating the object with first processing light by using a first optical system;
irradiating the object with second processing light by using a second optical system; and
supplying a build material to a melt pool formed by at least one of the first and second processing lights,
the first optical system includes a first condensed position change member that is configured to change a condensed position of the first processing light along an irradiation direction of the first processing light or the second optical system includes a second condensed position change member that is configured to change a condensed position of the second processing light along an irradiation direction of the second processing light.

### [Supplementary Note 121]

A processing method that performs an additive manufacturing on an object, wherein
the processing method includes:
irradiating the object with first processing light by using a first optical system;
irradiating the object with second processing light by using a second optical system; and
supplying a build material to a position that is irradiated with at least one of the first and second processing lights,
the first optical system includes a first condensed position change member that is configured to change a condensed position of the first processing light along an irradiation direction of the first processing light or the second optical system includes a second condensed position change member that is configured to change a condensed position of the second processing light along an irradiation direction of the second processing light.

### [Supplementary Note 122]

A processing method that performs an additive manufacturing on an object, wherein
the processing method includes:
irradiating the object with first processing light by using a first optical system;
irradiating the object with second processing light by using a second optical system; and
supplying a build material to a melt pool formed by at least one of the first and second processing lights,
the first optical system includes a first deflection member that is configured to deflect the first processing light so as to change a first irradiation position that is irradiated with the first processing light along a direction intersecting the irradiation direction of the first processing light,
the second optical system includes a second deflection member that is configured to deflect the second processing light so as to change a second irradiation position that is irradiated with the second processing light along a direction intersecting the irradiation direction of the second processing light.

### [Supplementary Note 123]

A processing method that performs an additive manufacturing on an object, wherein
the processing method includes:
irradiating the object with first processing light by using a first optical system;
irradiating the object with second processing light by using a second optical system; and
supplying a build material to a position that is irradiated with at least one of the first and second processing lights,
the first optical system includes a first deflection member that is configured to deflect the first processing light so as to change a first irradiation position that is irradiated with the first processing light along a direction intersecting the irradiation direction of the first processing light,
the second optical system includes a second deflection member that is configured to deflect the second processing light so as to change a second irradiation position that is irradiated with the second processing light along a direction intersecting the irradiation direction of the second processing light.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a processing apparatus and a processing method, which involve such changes, are also intended to be within the technical scope of the present invention.

### Description of Reference Codes

- SYS: processing system
- 2: processing unit
- 21: processing head
- 211: irradiation optical system
- 212: material nozzle
- 214: first optical system
- 2143: power meter
- 2144: Galvano scanner
- 2145: focus control optical system
- 2146: Galvano mirror
- 215: second optical system
- 2153: power meter
- 2154: Galvano scanner
- 2155: focus control optical system
- 2156: Galvano mirror
- 216: third optical system
- 2162: fO lens
- 212: material nozzle
- 22: head driving system
- 23: head housing
- 231: containing space
- 232: rear wall member
- 233: side wall member
- 3: stage unit
- 31: stage
- 32: stage driving system
- 6: housing
- 63IN: chamber space
- W: workpiece
- MS: build surface
- EL, EL#1, EL#2, EL#3, EL#4: processing light
- MP: melt pool
- EA, EA#1, EA#2: target irradiation area

## Claims

1. A processing apparatus comprising:
an irradiation optical system that is configured to irradiate an object with first processing light that is emitted from a first light source, and second processing light that is emitted from a second light source different from the first light source and whose peak wavelength is different from that of the first processing light; and
a material supply member that is configured to supply a build material to a melt pool formed by the first and second processing lights,
wherein
the peak wavelength of the second processing light is shorter than the peak wavelength of the first processing light, and
a second area that is irradiated with the second processing light is larger than a first area that is irradiated with the first processing light.

2. The processing apparatus according to claim 1, wherein
a wavelength band of the first processing light is different from a wavelength band of the second processing light.

3. The processing apparatus according to claim 1 or 2, wherein
an absorption rate of the object to the second processing light is higher than an absorption rate of the object to the first processing light.

4. The processing apparatus according to any one of clams 1 to 3, wherein
the first processing light includes infrared light, and
the second processing light includes visible light.

5. The processing apparatus according to any one of clams 1 to 4, wherein
the build material includes copper.

6. The processing apparatus according to any one of clams 1 to 5, wherein
the irradiation optical system includes:
a first optical system that emits the first processing light; and
a second optical system that emits the second processing light.

7. The processing apparatus according to claim 6, wherein
the irradiation optical system includes a third optical system to which the first processing light emitted from the first optical system and the second processing light emitted from the second optical system enter and which irradiates the object with the entering first and second processing lights.

8. The processing apparatus according to claim 7, wherein
the third optical system includes a terminal optical member through which the first processing light and the second processing light pass and which is positioned at a position closest to the object among optical members of the third optical system.

9. The processing apparatus according to claim 7 or 8, wherein
the third optical system includes a condensing optical system that condenses the first processing light and the second processing light on the object.

10. The processing apparatus according to any one of clams 6 to 9, wherein
the first optical system includes: a first condensed position change member that is configured to change a condensed position of the first processing light along an irradiation direction of the first processing light; and a first deflection member that is configured to deflect the first processing light so as to change a first irradiation position that is irradiated with the first processing light along a direction intersecting the irradiation direction of the first processing light,
the second optical system includes: a second condensed position change member that is configured to change a condensed position of the second processing light along the irradiation direction of the first processing light; and a second deflection member that is configured to deflect the second processing light so as to change a second irradiation position that is irradiated with the second processing light along a direction intersecting the irradiation direction of the first processing light.

11. The processing apparatus according to any one of clams 1 to 10, wherein
the irradiation optical system irradiates a surface of the object with the first processing light and the second processing light so that an irradiation aspect of the first processing light is different from an irradiation aspect of the second processing light.

12. The processing apparatus according to claim 11, wherein
the irradiation aspect includes at least one of an intensity, an intensity distribution, an irradiation period, an irradiation timing, a diameter of a spot formed on the surface of the object, and a movement aspect of an irradiation position on the surface of the object.

13. The processing apparatus according to any one of clams 1 to 12, wherein
the irradiation optical system irradiates the object with the first processing light and the second processing light so that a peak intensity of the first processing light is higher than a peak intensity of the second processing light.

14. The processing apparatus according to any one of clams 1 to 13, wherein
the irradiation optical system irradiates the object with the first processing light and the second processing light so that a size of an area that is scanned per unit time with the second processing light on a surface of the object is larger than a size of an area that is scanned per unit time with the first processing light on a surface of the object.

15. The processing apparatus according to any one of clams 1 to 14, wherein
the irradiation optical system irradiates the object with the first processing light and the second processing light so that (i) a period during which the object is irradiated with the first processing light overlaps with a period during which the object is irradiated with the second processing light, and (ii) an intensity of the first processing light is higher than an intensity of the second processing light.

16. The processing apparatus according to any one of clams 1 to 15, wherein
the irradiation optical system irradiates the object with the first processing light and the second processing light so that (i) one part of the object is irradiated with the second processing light and then the one part of the object is irradiated with the first processing light, and (ii) an intensity of the first processing light is higher than an intensity of the second processing light.

17. The processing apparatus according to any one of clams 1 to 16, wherein
the irradiation optical system irradiates the object with the first processing light and the second processing light so that (i) the object is irradiated with the first processing light multiple times in at least a part of a period during which the object is irradiated with the second processing light, and (ii) an intensity of the first processing light is higher than an intensity of the second processing light.

18. The processing apparatus according to any one of clams 1 to 17, wherein
the irradiation optical system irradiates the object with the first processing light and the second processing light so that (i) each of a first irradiation position that is irradiated with the first processing light and a second irradiation position that is irradiated with the second processing light in a first plane intersecting an irradiation direction of the first processing light reciprocates regularly along a movement direction in the first plane, (ii) an intensity of the first processing light at at least one of a first reversal timing at which a movement direction of the first irradiation position is reversed in the movement direction and an overlap timing at which the first irradiation position overlaps with the second irradiation position is lower than an intensity of the first processing light at a timing that is different from the first reversal timing and the overlap timing, and (iii) an intensity of the second processing light at at least one of a second reversal timing at which a movement direction of the second irradiation position is reversed in the movement direction and the overlap timing is lower than an intensity of the second processing light at a timing that is different from the second reversal timing and the overlap timing.

19. The processing apparatus according to any one of clams 1 to 17, wherein
the irradiation optical system irradiates the object with the first processing light and the second processing light so that (i) a first irradiation position that is irradiated with the first processing light in a first plane intersecting an irradiation direction of the first processing light reciprocates regularly along a first movement direction in the first plane, (ii) a second irradiation position that is irradiated with the second processing light in the first plane reciprocates regularly along a second movement direction that is along the first plane and that intersects the first movement direction, and (iii) a diameter of a sport formed on the object by the second processing light is larger than a diameter of a sport formed on the object by the first processing light.

20. The processing apparatus according to any one of clams 1 to 17, wherein
the irradiation optical system irradiates the object with the first processing light and the second processing light so that (i) a first irradiation position that is irradiated with the first processing light in a first plane intersecting an irradiation direction of the first processing light moves along a first movement trajectory, (ii) a second irradiation position that is irradiated with the second processing light in the first plane moves along a second movement trajectory that is different from the first movement trajectory, and (iii) a diameter of a sport formed on the object by the second processing light is larger than a diameter of a sport formed on the object by the first processing light.

21. The processing apparatus according to any one of clams 1 to 20, wherein
the irradiation optical system is further configured to irradiate the object with third processing light whose wavelength band is the same as a wavelength band of the second processing light and fourth processing light whose wavelength band is the same as a wavelength band of the first processing light.

22. The processing apparatus according to claim 21, wherein
the irradiation optical system includes:
a first optical system that emits the first and third processing lights; and
a second optical system that emits the second and fourth processing lights.

23. The processing apparatus according to claim 22, wherein
the first optical system includes: a first condensed position change member that is configured to change a condensed position of each of the first and third processing lights along an irradiation direction of the first processing light; and a first deflection member that is configured to deflect the first and the third processing light so as to change each of a first irradiation position that is irradiated with the first processing light and a third irradiation position that is irradiated with the third processing light along a direction intersecting the irradiation direction of the first processing light,
the second optical system includes: a second condensed position change member that is configured to change a condensed position of each of the second and fourth processing lights along the irradiation direction of the first processing light; and a second deflection member that is configured to deflect the second and fourth processing lights so as to change a second irradiation position that is irradiated with the second processing light and a fourth irradiation position that is irradiated with the fourth processing light along a direction intersecting the irradiation direction of the first processing light.

24. The processing apparatus according to claim 23, wherein
a driving amount of the first deflection member in a case where the first optical system irradiates one part of the object with the first processing light is different form a driving amount of the first deflection member in a case where the first optical system irradiates the one part of the object with the third processing light,
a driving amount of the second deflection member in a case where the second optical system irradiates one part of the object with the second processing light is different form a driving amount of the second deflection member in a case where the second optical system irradiates the one part of the object with the fourth processing light.

25. The processing apparatus according to any one of claims 22 to 24, wherein
the first optical system includes a first aberration correction member that corrects chromatic aberration due to the first and third processing lights, and
the second optical system includes a second aberration correction member that corrects chromatic aberration due to the second and fourth processing lights.

26. The processing apparatus according to claim 21, wherein
the irradiation optical system includes:
a first optical system that emits the first processing light;
a second optical system that emits the second processing light;
a third optical system that emits the third processing light; and
a fourth optical system that emits the fourth processing light.

27. The processing apparatus according to claim 26, wherein
the first optical system includes: a first condensed position change member that is configured to change a condensed position of the first processing light along an irradiation direction of the first processing light; and a first deflection member that is configured to deflect the first processing light so as to change a first irradiation position that is irradiated with the first processing light along a direction intersecting the irradiation direction of the first processing light,
the second optical system includes: a second condensed position change member that is configured to change a condensed position of the second processing light along the irradiation direction of the first processing light; and a second deflection member that is configured to deflect the second processing light so as to change a second irradiation position that is irradiated with the second processing light along a direction intersecting the irradiation direction of the first processing light,
the third optical system includes: a third condensed position change member that is configured to change a condensed position of the third processing light along the irradiation direction of the first processing light; and a third deflection member that is configured to deflect the third processing light so as to change a third irradiation position that is irradiated with the third processing light along a direction intersecting the irradiation direction of the first processing light,
the fourth optical system includes: a fourth condensed position change member that is configured to change a condensed position of the fourth processing light along the irradiation direction of the first processing light; and a fourth deflection member that is configured to deflect the fourth processing light so as to change a fourth irradiation position that is irradiated with the fourth processing light along a direction intersecting the irradiation direction of the first processing light.

28. The processing apparatus according to any one of clams 1 to 27 further comprising a cooling apparatus that is configured to cool an optical member included in the irradiation optical system, wherein
the cooling apparatus cools the optical member so that a cooling aspect of a first part of the optical member which the first processing light enters is different from a cooling aspect of a second part of the optical member which the second processing light enters.

29. The processing apparatus according to claim 28, wherein
the first part is cooled faster than the second part by the cooling apparatus.

30. A processing apparatus that performs an additive manufacturing on an object, wherein
the processing apparatus comprises:
a first optical system that is configured to irradiate the object with first processing light that is emitted from a first light source;
a second optical system that is configured to irradiate the object with second processing light that is emitted from a second light source different from the first light source and whose peak wavelength is different from that of the first processing light; and
a material supply member that is configured to supply a build material to a melt pool formed by the first and second processing lights,
the first optical system includes: a first condensed position change member that is configured to change a condensed position of the first processing light along an irradiation direction of the first processing light; and a first deflection member that is configured to deflect the first processing light so as to change a first irradiation position that is irradiated with the first processing light along a direction intersecting the irradiation direction of the first processing light,
the second optical system includes: a second condensed position change member that is configured to change a condensed position of the second processing light along an irradiation direction of the second processing light; and a second deflection member that is configured to deflect the second processing light so as to change a second irradiation position that is irradiated with the second processing light along a direction intersecting the irradiation direction of the second processing light.

31. A processing apparatus that performs an additive manufacturing on an object, wherein
the processing apparatus comprises:
a first optical system that is configured to irradiate the object with first processing light that is emitted from a first light source, and that is configured to irradiate the object with second processing light that is emitted from a second light source different from the first light source and whose peak wavelength is different from that of the first processing light; and
a material supply member that is configured to supply a build material to a melt pool formed by the first and second processing lights,
the first optical system includes:
a first condensed position change member that is configured to change a condensed position of the first processing light along an irradiation direction of the first processing light;
a second condensed position change member that is configured to change a condensed position of the second processing light along an irradiation direction of the second processing light; and
a first deflection member that is configured to deflect the first processing light and the second processing light so as to change a first irradiation position that is irradiated with the first processing light and a second irradiation position that is irradiated with the second processing light along a direction intersecting the irradiation directions of the first processing light and the second processing light.

32. A processing apparatus that performs an additive manufacturing on an object, wherein
the processing apparatus comprises:
a first optical system that is configured to irradiate the object with first processing light, and that is configured to irradiate the object with second processing light whose peak wavelength is different from that of the first processing light;
a second optical system that is configured to irradiate the object with third processing light, and that is configured to irradiate the object with fourth processing light whose peak wavelength is different from that of the third processing light; and
a material supply member that is configured to supply a build material to a melt pool formed by the first processing light, the second processing light, the third processing light, and the fourth processing light,
the first optical system includes:
a first condensed position change member that is configured to change a condensed position of the first processing light along an irradiation direction of the first processing light;
a second condensed position change member that is configured to change a condensed position of the second processing light along an irradiation direction of the second processing light; and
a first deflection member that is configured to deflect the first processing light and the second processing light so as to change a first irradiation position that is irradiated with the first processing light and a second irradiation position that is irradiated with the second processing light along a direction intersecting the irradiation directions of the first processing light and the second processing light,
the second optical system includes:
a third condensed position change member that is configured to change a condensed position of the third processing light along an irradiation direction of the third processing light;
a fourth condensed position change member that is configured to change a condensed position of the fourth processing light along an irradiation direction of three the fourth processing light; and
a second deflection member that is configured to deflect the third processing light and the fourth processing light so as to change a third irradiation position that is irradiated with the third processing light and a fourth irradiation position that is irradiated with the fourth processing light along a direction intersecting the irradiation directions of the third processing light and the fourth processing light.

33. A processing apparatus that performs an additive manufacturing on an object, wherein
the processing apparatus comprises:
a first optical system that is configured to irradiate the object with first processing light;
a second optical system that is configured to irradiate the object with second processing light; and
a material supply member that is configured to supply a build material to a melt pool formed by the first and second processing lights,
the first optical system includes: a first condensed position change member that is configured to change a condensed position of the first processing light along an irradiation direction of the first processing light; and a first deflection member that is configured to deflect the first processing light so as to change a first irradiation position that is irradiated with the first processing light along a direction intersecting the irradiation direction of the first processing light,
the second optical system includes: a second condensed position change member that is configured to change a condensed position of the second processing light along an irradiation direction of the second processing light; and a second deflection member that is configured to deflect the second processing light so as to change a second irradiation position that is irradiated with the second processing light along a direction intersecting the irradiation direction of the second processing light.

34. The processing apparatus according to claim 33, wherein
the first deflection member is controlled based on an amount of change of the condensed position of the first processing light by the first condensed position change member,
the second deflection member is controlled based on an amount of change of the condensed position of the second processing light by the second condensed position change member.

35. The processing apparatus according to claim 33 or 34, wherein
the first deflection member changes the first irradiation position along a direction that is along a surface of the object so as to correct a deviation, which is caused by the first condensed position change member changing the condensed position of the first processing light, of the first irradiation position in a direction along the surface of the object,
the second deflection member changes the second irradiation position along a direction that is along a surface of the object so as to correct a deviation, which is caused by the second condensed position change member changing the condensed position of the second processing light, of the second irradiation position in a direction along the surface of the object.

36. The processing apparatus according to any one of claims 33 to 35, wherein
the first condensed position change member is controlled based on an amount of change of the first irradiation position by the first deflection member,
the second condensed position change member is controlled based on an amount of change of the second irradiation position by the second deflection member.

37. The processing apparatus according to any one of claims 33 to 36, wherein
the first condensed position change member changes the condensed position of the first processing light along a direction that intersects a surface of the object so as to correct a deviation, which is caused by the first deflection member changing the first irradiation position, of the condensed position of the first processing light in a direction intersecting the surface of the object,
the second condensed position change member changes the condensed position of the second processing light along a direction that intersects a surface of the object so as to correct a deviation, which is caused by the second deflection member changing the second irradiation position, of the condensed position of the second processing light in a direction intersecting the surface of the object.

38. The processing apparatus according to any one of claims 33 to 37, wherein
the first optical system includes a first detector that is configured to detect an intensity of the first processing light,
the second optical system includes a second detector that is configured to detect an intensity of the second processing light.

39. A processing apparatus that performs an additive manufacturing on an object, wherein
the processing apparatus comprises:
a first optical system that is configured to irradiate the object with first processing light;
a second optical system that is configured to irradiate the object with second processing light; and
a material supply member that is configured to supply a build material to a melt pool formed by the first and second processing lights,
the first optical system includes: a first deflection member that is configured to deflect the first processing light so as to change a first irradiation position that is irradiated with the first processing light along a direction intersecting the irradiation direction of the first processing light; and a first detector that is configured to detect an intensity of the first processing light,
the second optical system includes: a second deflection member that is configured to deflect the second processing light so as to change a second irradiation position that is irradiated with the second processing light along a direction intersecting the irradiation direction of the second processing light; and a second detector that is configured to detect an intensity of the second processing light.

40. The processing apparatus according to claim 38 or 39, wherein
the first detector is configured to detect the intensity of the first processing light propagating along an optical path between a first light source that emits the first processing light and the first deflection member,
the second detector is configured to detect the intensity of the second processing light propagating along an optical path between a second light source that emits the second processing light and the second deflection member.

41. The processing apparatus according to any one of claims 38 to 40 further comprising an intensity change apparatus that is configured to change the intensity of at least one of the first processing light and the second processing light, wherein
the intensity change apparatus changes the intensity of at least one of the first processing light and the second processing light based on a detected result by at least one of the first detector and the second detector.

42. The processing apparatus according to any one of claims 38 to 41, wherein
the processing apparatus further comprising:
an objective optical member that irradiates the object with the first processing light and the second processing light; and
a cooling apparatus that is configured to cool the objective optical member,
the cooling apparatus cools the objective optical member based on a detected result by at least one of the first detector and the second detector.

43. A processing apparatus comprising:
a processing head that includes: a condensing optical system that condenses processing light on an object; and an electrical component that is used to control the processing light; and
a support member that is adjacent to the processing head along a direction intersecting an optical axis of the condensing optical system and that support the processing head,
a first distance between the electrical component and the support member in the direction intersecting the optical axis is longer than a second distance between the optical axis and the support member in the direction intersecting the optical axis.

44. The processing apparatus according to claim 43, wherein
the electrical component includes a detector that is configured to detect an intensity of the processing light.

45. The processing apparatus according to claim 43 or 44, wherein
the electrical component includes a driving system that drives a deflection member configured to deflect the processing light so as to change an irradiation position that is irradiated with the processing light along a direction that is along a surface of the object.

46. The processing apparatus according to any one of claims 43 to 45, wherein
a position of the processing head relative to the object is changeable.

47. The processing apparatus according to any one of claims 43 to 46, wherein
the processing apparatus further comprising a driving apparatus that changes a position of the support member,
a position of the processing head is changed due to the change of the position of the support member.

48. The processing apparatus according to any one of claims 43 to 47, wherein
the processing apparatus comprises a first space at an opposite side of the support member with respect to the processing head.

49. The processing apparatus according to any one of claim 48, wherein
the processing apparatus comprises a door that is allowed to be opened and closed at the first space side from the processing head.

50. The processing apparatus according to claim 48 or 49, wherein
an additive manufacturing is performed in the first space.

51. A processing apparatus comprising:
an irradiation apparatus that is configured to irradiate an object with first processing light and second processing light whose peak wavelength is different from that of the first processing light; and
a material supply member that is configured to supply a build material to a melt pool formed by at least one of the first and second processing lights.

52. A processing apparatus comprising:
an irradiation apparatus that is configured to irradiate an object with first processing light and second processing light whose peak wavelength is different from that of the first processing light; and
a material supply member that is configured to supply a build material to a position that is irradiated with the first processing light and the second processing light by the irradiation apparatus.

53. A processing apparatus comprising:
an irradiation apparatus that is configured to irradiate an object with first processing light and second processing light whose peak wavelength is different from that of the first processing light; and
a material supply member that is configured to supply a build material to an irradiation area that is irradiated with the first processing light by the irradiation apparatus,
at least a part of the irradiation area that is irradiated with the first processing light overlaps with an irradiation area that is irradiated with the second processing light.

54. The processing apparatus according to any one of claims 51 to 53, wherein
a first area that is irradiated with the first processing light is the same as a second area that is irradiated with the second processing light.

55. The processing apparatus according to any one of claims 51 to 53, wherein
a first area that is irradiated with the first processing light is smaller than a second area that is irradiated with the second processing light.

56. The processing apparatus according to claim 55, wherein
the first processing light is movable inside the second area.

57. The processing apparatus according to claim 55 or 56, wherein
a size of the first processing light is changed inside the second area.

58. The processing apparatus according to any one of claims 51 to 53, wherein
a second area that is irradiated with the second processing light is smaller than a first area that is irradiated with the first processing light.

59. The processing apparatus according to claim 58, wherein
the second processing light is movable inside the first area.

60. The processing apparatus according to claim 58 or 59, wherein
a size of the second processing light is changed inside the first area.

61. The processing apparatus according to any one of claims 51 to 60, wherein
a melt pool formed by the second processing light is irradiated with the first processing light.

62. The processing apparatus according to any one of claims 51 to 61, wherein
the object is irradiated with the first processing light and the second processing light simultaneously.

63. The processing apparatus according to any one of claims 51 to 62, wherein
the object is irradiated with the second processing light prior to the first processing light.

64. The processing apparatus according to any one of claims 51 to 63, wherein
the object is irradiated with the first processing light in at least a part of a period during which the object is irradiated with the second processing light.

65. The processing apparatus according to any one of claims 51 to 64, wherein
the processing apparatus modulates a peak intensity of at least one of the first processing light and the second processing light.

66. The processing apparatus according to any one of claims 51 to 65, wherein
the processing apparatus is configured to change a shape of an irradiation area or a size of an irradiation area of at least one of the first processing light and the second processing light.

67. The processing apparatus according to any one of claims 51 to 66, wherein
the processing apparatus is configured to change scanning direction of at least one of the first processing light and the second processing light.

68. The processing apparatus according to any one of claims 51 to 67, wherein
the processing apparatus is configured to move an irradiation area of the first processing light and an irradiation area of the second processing light relative to each other.

69. The processing apparatus according to any one of claims 51 to 68, wherein
changing a size of an irradiation area of at least one of the first processing light and the second processing light includes changing a focus of at least one of the first processing light and the second processing light.
